(19)

**Europäisches Patentamt**
**European Patent Office**
**Office européen des brevets**

(11) **EP 4 625 312 A1**

(12) **EUROPEAN PATENT APPLICATION**
published in accordance with Art. 153(4) EPC

(43) Date of publication:
**01.10.2025 Bulletin 2025/40**

(21) Application number: **23894412.8**

(22) Date of filing: **07.11.2023**

(51) International Patent Classification (IPC):
**G06T 7/00** (2017.01)

(52) Cooperative Patent Classification (CPC):
**G06T 7/00**

(86) International application number:
**PCT/JP2023/040083**

(87) International publication number:
**WO 2024/111401 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2022 JP 2022187269**

(71) Applicant: **Sony Semiconductor Solutions Corporation**
**Atsugi-shi, Kanagawa 243-0014 (JP)**

(72) Inventors:
- **YOSHIDA, Takahiko**
  **Atsugi-shi, Kanagawa 243-0014 (JP)**
- **JINNOUCHI, Ryo**
  **Atsugi-shi, Kanagawa 243-0014 (JP)**
- **KOBAYASHI, Toshihiro**
  **Atsugi-shi, Kanagawa 243-0014 (JP)**
- **WEN, Zhongxin**
  **Atsugi-shi, Kanagawa 243-0014 (JP)**

- **DI, Mengzhi**
  **Atsugi-shi, Kanagawa 243-0014 (JP)**
- **KAWATE, Hayami**
  **Atsugi-shi, Kanagawa 243-0014 (JP)**
- **ONO, Hiroaki**
  **Atsugi-shi, Kanagawa 243-0014 (JP)**
- **MIYA, Ryota**
  **Atsugi-shi, Kanagawa 243-0014 (JP)**
- **MIYATANI, Yoshitaka**
  **Atsugi-shi, Kanagawa 243-0014 (JP)**
- **ISHIDA, Minoru**
  **Atsugi-shi, Kanagawa 243-0014 (JP)**
- **OKUIKE, Kazuyuki**
  **Atsugi-shi, Kanagawa 243-0014 (JP)**
- **MITSUNAGA, Tomoo**
  **Atsugi-shi, Kanagawa 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE AND INFORMATION PROCESSING METHOD**

(57)     An information processing apparatus according to an embodiment includes: a processing unit configured to measure positions of a plurality of sites of a user based on positions of a plurality of measurement devices each attached to the user to acquire image data of the user and the image data acquired by each of the plurality of measurement devices. The position of each of the plurality of measurement devices is self-estimated by the measurement device or measured using another measurement device attached to the user.

FIG.2

**EP 4 625 312 A1**

**Description**

Field

The present disclosure relates to an information processing apparatus and an information processing method.

Background

In recent years, there has been developed a technique of tracking the posture and motion of a part or the whole of the human body, and reflecting the posture and motion to an avatar on a virtual space. For example, Non Patent Literature 1 proposes a technique of triangulating a body site of a user from image data of the user captured by each of two cameras attached to the user in a state where a mutual positional relationship of the cameras is fixed, so as to measure the position of the body site.

Citation List

Non Patent Literature

Non Patent Literature 1: Helge Rhodin, et al., EgoCap: Egocentric Marker-less Motion Capture with Two Fisheye Cameras, (US), 2016, ACM Transactions on Graphics, Volume 35, Issue 6

Summary

Technical Problem

In the technique disclosed in Non Patent Literature 1, a plurality of measurement devices using an optical means and designed to be attached to a user are fixed such that the distance between the measurement devices is constantly a predetermined distance and the measurement devices protrude from the user. On the other hand, there have been no specific examinations about measurement of the positions of user's body sites using the plurality of measurement devices in a form enabling a flexible change in the distance between the plurality of measurement devices using the optical means, and in a form having the plurality of measurement devices being attached in close contact with or close proximity to the body of the user.

One aspect of the present disclosure is to enable measurement of a position of a body site of a user even in a case where the position of the measurement device is in free movement. Solution to Problem

An information processing apparatus according to one aspect of the present disclosure includes: a processing unit configured to measure positions of a plurality of sites of a user based on positions of a plurality of measurement devices each attached to the user to acquire image data of the user and the image data acquired by each of the plurality of measurement devices, wherein the position of each of the plurality of measurement devices is self-estimated by the measurement device or measured using another measurement device attached to the user.

An information processing method according to one aspect of the present disclosure includes measuring positions of a plurality of sites of a user based on positions of a plurality of measurement devices each attached to the user to acquire image data of the user and the image data acquired by each of the plurality of measurement devices, wherein the position of each of the plurality of measurement devices is self-estimated by the measurement device or measured using another measurement device attached to the user.

Brief Description of Drawings

FIG. 1 is a schematic diagram illustrating a schematic configuration example of a body tracking system according to a first embodiment.
FIG. 2 is a block diagram illustrating a functional configuration example of each device constituting the body tracking system illustrated in first FIG. 1.
FIG. 3 is a diagram for illustrating an example of a video displayed on a display apparatus in the body tracking system according to the first embodiment.
FIG. 4 is an external view illustrating a schematic configuration example of a measurement device according to a first example of the first embodiment.
FIG. 5 is an external view illustrating a schematic configuration example of a measurement device according to a

EP 4 625 312 A1

second example of the first embodiment.

FIG. 6 is an external view illustrating a schematic configuration example of a measurement device according to a third example of the first embodiment.

FIG. 7 is a diagram for illustrating a method of measuring wrist positions according to the first embodiment.

FIG. 8 is a diagram for illustrating a method of measuring positions of elbows and shoulders according to the first embodiment.

FIG. 9 is a diagram for illustrating a method of measuring positions of knees and ankles according to the first embodiment.

FIG. 10 is a diagram for illustrating position measurement using triangulation.

FIG. 11 is a diagram for illustrating a method of measuring positions of the head and the trunk according to the first embodiment.

FIG. 12 is a diagram for illustrating position measurement using a distance measurement sensor.

FIG. 13 is a diagram (part 1) for illustrating a method of measuring the shape of hand/fingers according to the first embodiment.

FIG. 14 is a diagram (part 2) for illustrating a method of measuring the shape of hand/fingers according to the first embodiment.

FIG. 15 is a diagram (part 3) for illustrating a method of measuring the shape of hand/fingers according to the first embodiment.

FIG. 16 is a diagram (part 4) for illustrating a method of measuring the shape of hand/fingers according to the first embodiment.

FIG. 17 is an external view illustrating an example of a measurement device for measuring the shape of the hand/fingers according to the first embodiment.

FIG. 18 is a flowchart illustrating a schematic operation example of coordinate system integration processing according to the first embodiment.

FIG. 19 is a diagram illustrating an example of a space in which a user wearing a measurement device is present in the description of the first embodiment.

FIG. 20 is a diagram for illustrating an example of a coordinate system set for the space illustrated in FIG. 19.

FIG. 21 is a flowchart illustrating a schematic operation example of the body tracking system according to the first embodiment.

FIG. 22 is a flowchart illustrating an example of a flow of map integration processing according to the first embodiment.

FIG. 23 is a diagram (part 1) for supplementing the flow illustrated in FIG. 22.

FIG. 24 is a diagram (part 2) for supplementing the flow illustrated in FIG. 22.

FIG. 25 is a diagram (part 3) for supplementing the flow illustrated in FIG. 22.

FIG. 26 is a diagram for illustrating map integration according to a first technique of the first embodiment.

FIG. 27 is a diagram for illustrating another map integration by the first technique of the first embodiment.

FIG. 28 is a flowchart illustrating an example of a flow of map integration processing according to a modification of the first technique of the first embodiment.

FIG. 29 is a diagram (part 1) for illustrating map integration by a second technique of the first embodiment.

FIG. 30 is a diagram (part 2) for illustrating map integration by a second technique of the first embodiment.

FIG. 31 is a diagram (part 1) for illustrating map integration according to a first modification of the second technique of the first embodiment.

FIG. 32 is a diagram (part 2) for illustrating map integration according to a first modification of the second technique of the first embodiment.

FIG. 33 is a diagram for illustrating map integration according to a second modification of the second technique of the first embodiment.

FIG. 34 is a diagram for illustrating map integration according to a third technique of the first embodiment.

FIG. 35 is a flowchart for illustrating a flow of SLAM processing according to the first example of the first embodiment.

FIG. 36 is a flowchart for illustrating a flow of SLAM processing according to the second example of the first embodiment.

FIG. 37 is a flowchart for illustrating a flow of SLAM processing according to the third example of the first embodiment.

FIG. 38 is a diagram (part 1) illustrating a list of processing according to the first embodiment.

FIG. 39 is a diagram (part 1) illustrating a list of output data according to the first embodiment.

FIG. 40 is a diagram (part 1) illustrating a list of combination variations of units that execute each processing according to the first embodiment.

FIG. 41 is a diagram (part 2) illustrating a list of processing according to the first embodiment.

FIG. 42 is a diagram (part 2) illustrating a list of output data according to the first embodiment.

FIG. 43 is a diagram (part 2) illustrating a list of combination variations of units that execute each processing according to the first embodiment.

FIG. 44 is a diagram (part 3) illustrating a list of processing according to the first embodiment.

FIG. 45 is a diagram (part 3) illustrating a list of output data according to the first embodiment.

FIG. 46 is a diagram (part 3) illustrating a list of combination variations of units that execute each processing according to the first embodiment.

FIG. 47 is a diagram (part 4) illustrating a list of processing according to the first embodiment.

FIG. 48 is a diagram (part 4) illustrating a list of output data according to the first embodiment.

FIG. 49 is a diagram (part 4) illustrating a list of combination variations of units that execute each processing according to the first embodiment.

FIG. 50 is a schematic diagram illustrating a schematic configuration example of a body tracking system according to a first modification of the first embodiment.

FIG. 51 is a schematic diagram illustrating a schematic configuration example of a body tracking system according to a second modification of the first embodiment.

FIG. 52 is a schematic diagram illustrating a schematic configuration example of a body tracking system according to a third modification of the first embodiment.

FIG. 53 is a schematic diagram illustrating a schematic configuration example of a body tracking system according to a fourth modification of the first embodiment.

FIG. 54 is a schematic diagram illustrating a schematic configuration example of a body tracking system according to a fifth modification of the first embodiment.

FIG. 55 is a schematic diagram illustrating a schematic configuration example of a body tracking system according to a sixth modification of the first embodiment.

FIG. 56 is a schematic diagram illustrating a schematic configuration example of a body tracking system according to a second embodiment.

FIG. 57 is a diagram for illustrating estimation of a position and a posture of the measurement device.

FIG. 58 is a flowchart illustrating an example of processing of estimating a position and a posture of the measurement device.

FIG. 59 is a diagram illustrating an example of a bib attached to a user.

FIG. 60 is a diagram illustrating an example of a world coordinate system set with reference to a bib according to the second embodiment.

FIG. 61 is a diagram for illustrating integration of coordinates.

FIG. 62 is a schematic diagram illustrating a schematic configuration example of a body tracking system.

FIG. 63 is a diagram for illustrating a transformation procedure according to a first example of the second embodiment.

FIG. 64 is a diagram for illustrating a transformation procedure according to a second example of the second embodiment.

FIG. 65 is a diagram for illustrating a transformation procedure according to a third example of the second embodiment.

FIG. 66 is a diagram (part 1) illustrating a list of processing according to the second embodiment.

FIG. 67 is a diagram (part 1) illustrating a list of output data according to the second embodiment.

FIG. 68 is a diagram (part 1) illustrating a list of combination variations of units that execute each processing according to the second embodiment.

FIG. 69 is a diagram (part 2) illustrating a list of processing according to the second embodiment.

FIG. 70 is a diagram (part 2) illustrating a list of output data according to the second embodiment.

FIG. 71 is a diagram (part 2) illustrating a list of combination variations of units that execute each processing according to the second embodiment.

FIG. 72 is a diagram (part 3) illustrating a list of processing according to the second embodiment.

FIG. 73 is a diagram (part 3) illustrating a list of output data according to the second embodiment.

FIG. 74 is a diagram (part 3) illustrating a list of combination variations of units that execute each processing according to the second embodiment.

FIG. 75 is a diagram (part 4) illustrating a list of processing according to the second embodiment.

FIG. 76 is a diagram (part 4) illustrating a list of output data according to the second embodiment.

FIG. 77 is a diagram (part 4) illustrating a list of combination variations of units that execute each processing according to the second embodiment.

FIG. 78 is a schematic diagram illustrating a schematic configuration example of a body tracking system according to a first modification of the second embodiment.

FIG. 79 is a schematic diagram illustrating a schematic configuration example of a body tracking system according to the first modification of the second embodiment.

FIG. 80 is a block diagram illustrating a schematic configuration example of a relay apparatus according to a second modification of the second embodiment.

FIG. 81 is a schematic diagram illustrating a schematic configuration example of a body tracking system as an information processing system according to a third embodiment.

FIG. 82 is a block diagram illustrating a schematic configuration example of a measurement device attached to a head according to the third embodiment.

FIG. 83 is a schematic diagram illustrating a schematic configuration example of a body tracking system according to a modification of the third embodiment.

FIG. 84 is an external view illustrating a schematic configuration example of a measurement device attached to a head of a user according to the third embodiment.

FIG. 85 is a diagram (part 1) illustrating an example of arrangement of sensors in the measurement device attached to the head of the user and an FOV of each sensor according to the third embodiment.

FIG. 86 is a diagram (part 2) illustrating an example of arrangement of sensors in the measurement device attached to the head of the user and an FOV of each sensor according to the third embodiment.

FIG. 87 is a diagram (part 3) illustrating an example of arrangement of sensors in the measurement device attached to the head of the user and an FOV of each sensor according to the third embodiment.

FIG. 88 is a view illustrating an example of the arrangement and FOV of the sensors in a side view of the reference measurement device illustrated in FIG. 74 or 71.

FIG. 89 is a diagram for illustrating a method of estimating a head position and wrist positions according to the third embodiment.

FIG. 90 is a diagram for illustrating a method of estimating positions of knees, ankles, and a trunk according to the third embodiment.

FIG. 91 is a schematic diagram for illustrating integration of a coordinate system according to the third embodiment.

FIG. 92 is a diagram (part 1) illustrating a list of processing according to the third embodiment.

FIG. 93 is a diagram (part 1) illustrating a list of output data according to the third embodiment.

FIG. 94 is a diagram (part 1) illustrating a list of combination variations of units that execute each processing according to the third embodiment.

FIG. 95 is a diagram (part 2) illustrating a list of processing according to the third embodiment.

FIG. 96 is a diagram (part 2) illustrating a list of output data according to the third embodiment.

FIG. 97 is a diagram (part 2) illustrating a list of combination variations of units that execute each processing according to the third embodiment.

FIG. 98 is a diagram (part 3) illustrating a list of processing according to the third embodiment.

FIG. 99 is a diagram (part 3) illustrating a list of output data according to the third embodiment.

FIG. 100 is a diagram (part 3) illustrating a list of combination variations of units that execute each processing according to the third embodiment.

FIG. 101 is a schematic diagram illustrating a schematic configuration example of an online meeting system according to a first application example of the present disclosure.

FIG. 102 is a flowchart illustrating a schematic operation example of a physical activity posture observation system according to a second application example of the present disclosure.

FIG. 103 is a flowchart for illustrating a flow of processing according to a first example of a third application example of the present disclosure.

FIG. 104 is a flowchart for illustrating a flow of processing according to a second example of the third application example of the present disclosure.

FIG. 105 is a hardware configuration diagram illustrating an example of an information processing apparatus that executes various types of processing according to the present disclosure.

Description of Embodiments

An embodiment of the present disclosure will be described below in detail with reference to the drawings. In each of the following embodiments, the identical sites are denoted by identical reference symbols, and a repetitive description thereof will be omitted.

The present disclosure will be described in the following order.

0. Introduction
1. First embodiment
1.1 System configuration example
1.2 Functional configuration example
1.3 Schematic configuration example of measurement device
1.3.1 First example
1.3.2 Second example
1.3.3 Third example

1.4 Position measurement method for each site

1.4.1 Wrists

1.4.2 Elbows and shoulders

1.4.3 Knees and ankles

1.4.4 Head and trunk

1.4.5 Another method of measuring position of each site

1.4.6 Method of measuring shape of hand/fingers

1.5 Coordinate system

1.6 Schematic operation example

1.6.1 Flowchart

1.6.2 Variation of initial three-dimensional map acquisition method

1.6.3 Specific technique of map integration

1.6.4 Variations of SLAM execution modes

1.6.5 Method of inputting the measured position of each site to application and operating human body model

1.7 Combination variation of units that execute each processing

1.8 Modification of system configuration

1.8.1 First modification

1.8.2 Second modification

1.8.3 Third modification

1.8.4 Fourth modification

1.8.5 Fifth modification

1.8.6 Sixth modification

1.9 Brief summary

2. Second embodiment

2.1 System configuration example

2.2 Position measurement method for each site

2.2.1 Wrists

2.2.2 Elbows and shoulders

2.2.3 Knees and ankles

2.2.4 Head and trunk

2.2.5 Another method of measuring position of each site

2.2.6 Method of measuring shape of hand/fingers

2.3 Coordinate system

2.4 Combination variation of units that execute each processing

2.5 Modification of system configuration

2.5.1 First modification

2.5.2 Second modification

2.6 Brief summary

3. Third embodiment

3.1 System configuration example

3.1.1 Modification of system configuration

3.2 Configuration example of measurement device attached to head

3.3 Position measurement method for each site

3.3.1 Head and wrists

3.3.2 Elbows and shoulders

3.3.3 Knees, ankles, and trunk

3.3.4 Another method of measuring position of each site

3.3.5 Method of measuring shape of hand/fingers

3.4 Coordinate system

3.5 Combination variation of units that execute each processing

3.6 Brief summary

4. Application examples

4.1 First application example

4.2 Second application example

4.3 Third application example

5. Hardware configuration

6. Conclusion

0. Introduction

In order to measure the position of the body site of the user (subject) in the body tracking (which may be construed as including the posture and motion), for example, Non Patent Literature 1 uses two measurement devices attached to the user in a state where the positional relationship between the two measurement devices is constantly fixed. Non Patent Literature 1 does not assume free movement of the position of the measurement device. Since the two measurement devices are devices having their positional relationship constantly fixed, the device disclosed in Non Patent Literature 1 has a structure large in size and greatly protruding from the user's body.

As a technique different from Non Patent Literature 1, there is also a technique of attaching an inertial sensor to a movable body site. In this case, it is necessary to attach an inertial sensor (Inertial Measurement Unit (IMU)) to each of N body sites (N is a natural number, representing the number of body sites to be subjected to position estimation) in accordance with the number N. For the user, a large number of sensors make the user feel uncomfortable in wearing the device and hinder the movement of the body, leading to the possibility of a failure in detecting a natural posture or motion.

At least some of the problems described above will be handled by the disclosed technology. For example, two measurement devices that acquire image data of the user are attached to the user, and may move freely in positions. The position of each measurement device is estimated or measured (undergoes estimation, etc) according to the principle described below. The position of the body site of the user is measured based on the estimated position of each measurement device and the image data acquired by each measurement device. The target body site of the user is not limited as long as it is a site captured in the image of the user's body imaged by each measurement device, and may be any site. Furthermore, the number of target body sites of the user is also not limited, and any number of sites can be measured. Naturally, regarding the number of target body sites of the user, it is possible to measure the positions of a larger number of body sites than the number of measurement devices. Since a large number of body site positions regarding the user can be measured by a small number of measurement devices, the technology of the present disclosure can suppress the problem of discomfort in wearing and hindrance of user movement occurring in the user, which have been caused conventionally by attaching a large device, or a large number of devices, on the user.

1. First embodiment

First, a first embodiment of the present disclosure will be described in detail with reference to the drawings. The user of a body tracking system 1 is referred to as a user U in the drawings. The body tracking system 1 exemplified in the present embodiment is applicable to, for example, various systems that reflect the posture and motion of the user U to a character or an avatar existing in a virtual space (including a virtually reproduced real space), in real time or after the end of measurement. The similar applies to modifications and other embodiments described below.

1.1 System configuration example

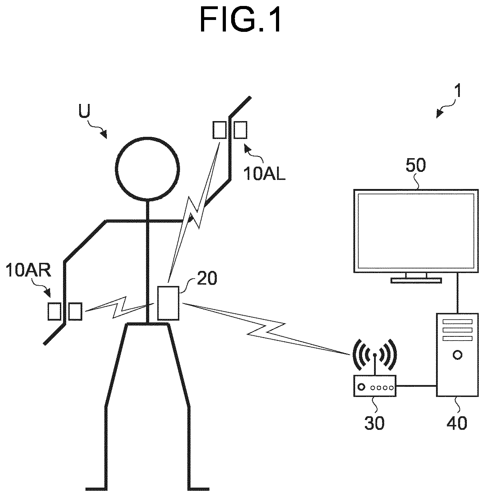

FIG. 1 is a schematic diagram illustrating a schematic configuration example of a body tracking system as an information processing system according to the present embodiment. The present embodiment will describe a so-called full body tracking system that tracks the entire body of the user U and reflects the posture and motion of the user U in the avatar on the virtual space. However, the present disclosure is not limited thereto, and various modifications may be made such as a system that tracks a part or all of a body of a human, or other object such as an animal or a robot, and reflects the tracked body to the avatar on the virtual space.

As illustrated in FIG. 1, the body tracking system 1 includes, as devices attached to the user U: a plurality of (two in the present example) measurement devices, namely, a measurement device 10AL and a measurement device 10AR (hereinafter, when the individual measurement devices are not to be distinguished, the reference numeral is described as '10'); and a relay apparatus 20. In the present embodiment, it is assumed, for example, that the measurement device 10AL is attached to the left wrist of the user U and the measurement device 10AR is attached to the right wrist of the user U. The measurement device 10 can also be referred to as a client device, a measurement unit, or the like.

In addition, the body tracking system 1 includes: a communication apparatus 30 that transmits and receives data to and from the measurement device 10 via the relay apparatus 20; an information processing apparatus 40 (hereinafter, also referred to as a server) that detects the posture and motion (hereinafter, referred to as a posture and the like) of the user U based on the data received by the communication apparatus 30 and reflects the detected posture and the like to an avatar on the virtual space; and a display apparatus 50 that displays an image and a video generated by the information processing apparatus 40. However, the relay apparatus 20 and the communication apparatus 30 can be appropriately omitted. In addition, the display apparatus 50 is not an essential component of the body tracking system 1, and may be omitted.

1.2 Functional configuration example

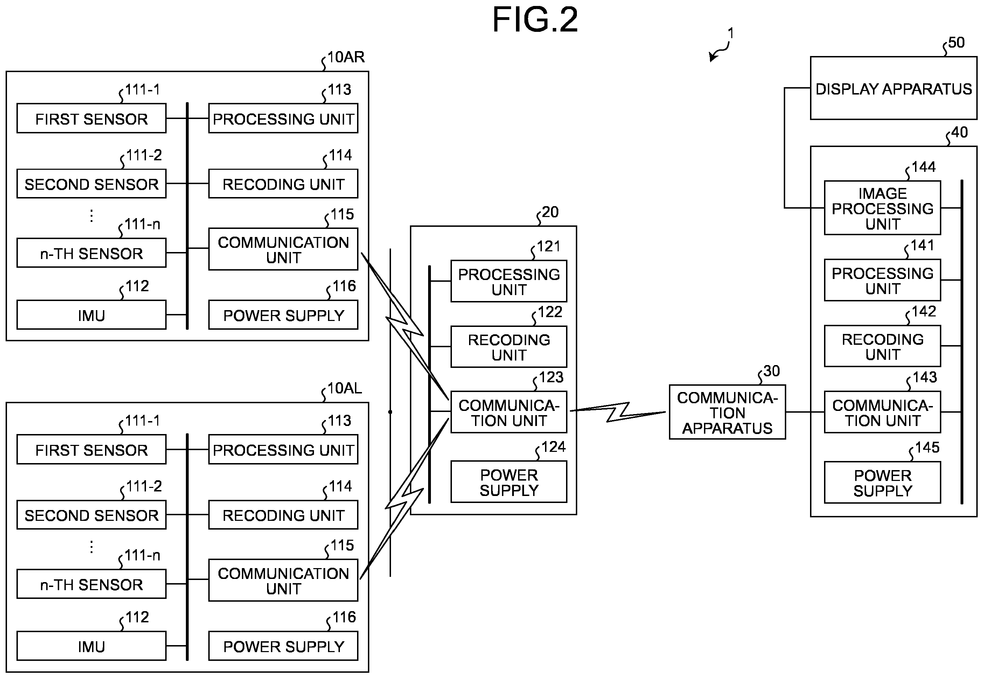

FIG. 2 is a block diagram illustrating a functional configuration example of each device constituting the body tracking system illustrated in FIG. 1.

(Measurement device 10)

As illustrated in FIG. 2, each measurement device 10 includes: a plurality of sensors 111-1 to 111-n (hereinafter, in a case where the individual sensors are not to be distinguished, the reference numeral is described as '111'); an IMU 112; a processing unit 113; a recording unit 114; a communication unit 115; and a power supply 116. The sensor 111, the IMU 112, the processing unit 113, the recording unit 114, and the communication unit 115 are interconnected to be able to perform mutual data transmission and reception via an internal bus, for example.

The power supply 116 supplies power to individual units in the measurement device 10. The power supply 116 may include a rechargeable secondary battery or a primary battery such as a dry battery.

Each sensor 111 may be various sensors capable of acquiring information such as an image (hereinafter, also referred to as imaging) and distance information of an object present within an angle of view. Examples of such sensor include: as an image sensor that acquires a color image or a monochrome image (including an IR sensor that acquires an infrared (IR) image); a distance measurement sensor that acquires a distance to an object; an Event-based Vision Sensor (EVS) that detects a luminance change as an event; and a hybrid sensor having a function as two or more of these sensors. For example, EVS has a higher frame rate than an image sensor or a distance measurement sensor, and thus is preferably used for the sensor 111 that measures a site moving at a high speed.

In the case of an IR sensor, the sensor 111 may include a light source capable of emitting IR light toward a subject. The distance measurement sensor may also be a time-of-flight (ToF) sensor such as LiDAR, various distance measurement sensors such as RADAR and an ultrasonic sensor. In the case of a ToF sensor, the distance measurement sensor may use either a direct ToF method or an indirect ToF method. Hereinafter, for simplification, image data, depth data, event data, and the like acquired by the sensor 111 including an image sensor, a distance measurement sensor, EVS, and the like are also collectively referred to as image data.

A sensor group including the plurality of sensors 111 of each of the measurement devices 10AL and 10AR is a detector for estimating the position of each body site of the user U (for example, left wrist, right wrist, left elbow, right elbow, left shoulder, right shoulder, left ankle, right ankle, left knee, right knee, head, etc.). Therefore, the sensor group of the measurement device 10AL and the sensor group of the measurement device 10AR preferably have a visual field range capable of imaging the entire body of the user U as much as possible regardless of the position and posture of the wrist of the user U wearing each of the measurement device 10AL and the measurement device 10AR.

Hereinafter, the body site of the user U may be simply referred to as a site. The measurement of the site may be construed as obtaining the site, for example, estimation, identification, measurement, and the like, and these may be appropriately rephrased in a scope without causing contradiction.

The IMU 112 detects movement in the 6 degrees of freedom (6DoF) directions (that is, X, Y, Z, Yaw, Pitch, Roll directions). Hereinafter, the data acquired by the IMU 112 is also referred to as 6DoF data. However, the sensor is not limited to the IMU 112, and may be modified in various manners as long as the sensor can acquire information necessary for executing Simultaneous Localization And Mapping (SLAM), such as posture (also referred to as orientation) and motion of the measurement device 10 with respect to the ground and can acquire data of a type different from the data obtained by the sensor 111. Furthermore, in a case where data from the IMU112 is unnecessary in processing such as SLAM, the IMU112 may be omitted.

The processing unit 113 includes, for example, various information processing apparatuses such as a central processing unit (CPU) and a microprocessor (MPU), controls each unit in the measurement device 10, and executes predetermined processing on data acquired by each sensor 111, the IMU 112, and the like. Processing executed in the processing unit 113 will be described in detail below.

The recording unit 114 includes, for example, Random Access Memory (RAM), flash memory, or the like, and holds various types of information such as programs and parameters for causing the processing unit 113 to function, information received by the communication unit 115, data acquired by the sensor 111 or the IMU 112, and data processed by the processing unit 113.

The communication unit 115 includes, for example, a transceiver in various communication channels such as a local area network (LAN), Bluetooth (registered trademark), infrared communication, and mobile communication, and establishes a communication channel with the communication unit 123 in the relay apparatus 20 to perform data transmission and reception. The communication unit 115 may directly transmit and receive data to and from the communication apparatus 30 connected to the information processing apparatus 40 in a wired or wireless channel. In that case, the relay apparatus 20 may be omitted, and the communication unit 115 and the communication apparatus 30 may establish a communication channel.

(Relay apparatus 20)

The relay apparatus 20 includes a processing unit 121, a recording unit 122, a communication unit 123, and a power supply 124. The processing unit 121, the recording unit 122, and the communication unit 123 are interconnected to be able to perform mutual data transmission and reception via an internal bus, for example. Note that the relay apparatus 20 may be, for example, an information processing terminal that can be carried by the user U, such as a mobile phone, a smartphone, a tablet terminal, a smart watch, or smart glasses.

The power supply 124 supplies power to each unit in the relay apparatus 20. The power supply 124 may include a rechargeable secondary battery or a primary battery such as a dry battery.

The processing unit 121 includes, for example, various information processing apparatuses such as a CPU and an MPU, controls each unit in the relay apparatus 20, and relays transmission and reception of data and various types of information between the information processing apparatus 40 and the measurement device 10. Furthermore, the processing unit 121 may execute predetermined processing on data and various types of information received from the measurement device 10 and/or the information processing apparatus 40.

The recording unit 122 includes, for example, RAM, flash memory, or the like, and holds programs and parameters for causing the processing unit 121 to function, and various types of information received via the communication unit 123.

The communication unit 123 includes a transceiver capable of establishing a communication channel with the communication unit 115 and the communication apparatus 30 of the measurement device 10, and transmits and receives various types of information to and from the communication unit 115 and the communication apparatus 30. There may be a difference or no difference between the communication channel established between the communication unit 123 and the communication unit 115 of the measurement device 10 and the communication channel established between the communication unit 123 and the communication apparatus 30. For example, it is allowable to use Bluetooth for data transmission/reception between the communication unit 123 and the communication unit 115 of the measurement device 10, and allowable to use LAN for data transmission/reception between the communication unit 123 and the communication apparatus 30.

(Information processing apparatus 40)

The information processing apparatus 40 includes a processing unit 141, a recording unit 142, a communication unit 143, an image processing unit 144, and a power supply 145. The processing unit 141, the recording unit 142, the communication unit 143, and the image processing unit 144 are connected to be able to perform mutual data transmission and reception via an internal bus, for example. The information processing apparatus 40 may be, for example, an information processing apparatus such as a personal computer (PC), a server, a smartphone, or a tablet terminal.

The power supply 145 supplies power to each unit in the measurement device 10. The power supply 116 may include a rechargeable secondary battery or a primary battery such as a dry battery.

The processing unit 141 includes, for example, various information processing apparatuses such as a CPU and an MPU, controls each unit in the information processing apparatus 40, and executes predetermined processing on data received from the measurement device 10 via the relay apparatus 20. For example, the processing unit 141 estimates the three-dimensional position (in the present example, three-dimensional positions of the left wrist and the right wrist) of each of the measurement device 10AL and the measurement device 10AR based on the information acquired from each of the measurement device 10AL and the measurement device 10AR. Based on a result of the estimation, that is, a self-position estimation result of each of the measurement device 10AL and the measurement device 10AR and the data (for example, the image data of the user U) acquired from each of the measurement device 10AL and the measurement device 10AR, the processing unit 141 measures three-dimensional positions of other portions of the user U (for example, three-dimensional positions such as left elbow, right elbow, left shoulder, right shoulder, left ankle, right ankle, left knee, right knee, and the head). Subsequently, based on the measured position of each unit, the processing unit 141 controls the posture, motion, and the like of the avatar placed in the virtual space. Details of the processing executed in the processing unit 141 will be described below.

The recording unit 142 includes, for example, RAM, flash memory, or the like, and holds various types of information such as programs and parameters for causing the processing unit 141 to function, information received via the communication apparatus 30, and data processed by the processing unit 141.

The communication unit 143 includes, for example, a transceiver in various communication channels such as a local area network (LAN), Bluetooth, infrared communication, and mobile communication, and establishes a communication channel with the communication apparatus 30 such as a wireless LAN adapter to perform data input and output. Note that the communication unit 143 may establish a direct communication channel with the relay apparatus 20 or the measurement device 10. In that case, the communication apparatus 30 may be omitted.

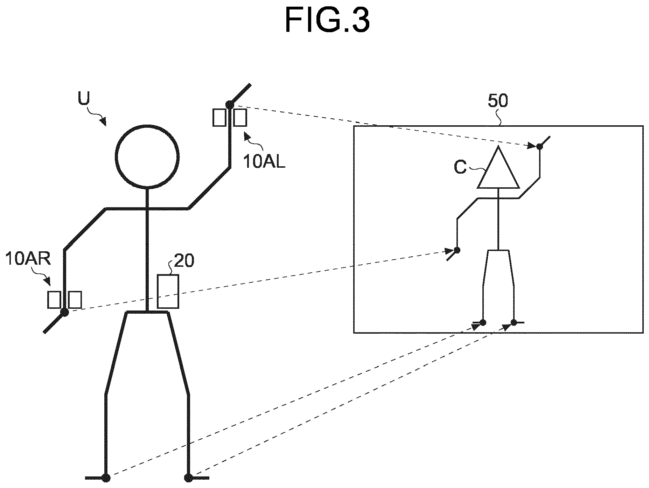

The image processing unit 144 includes, for example, an information processing apparatus of a graphics processing unit (GPU), and executes image processing of generating an image to be displayed on the display apparatus 50. For example, as illustrated in FIG. 3, the image processing unit 144 performs rendering in the virtual space to generate a video of an avatar C moving in the virtual space based on the result of processing performed by the processing unit 141, outputs the generated video to the display apparatus 50 to display the video on the display apparatus 50. The display apparatus 50 may be incorporated in the same housing as the information processing apparatus 40, such as a notebook PC or a laptop PC, or may be separate from the information processing apparatus 40. The image and the video may be appropriately rephrased as long as there is no contradiction. Imaging and image capturing may also be rephrased as appropriate.

1.3 Schematic configuration example of measurement device

Next, a configuration example of the measurement device 10 according to the present embodiment will be described with some examples.

1.3.1 First example

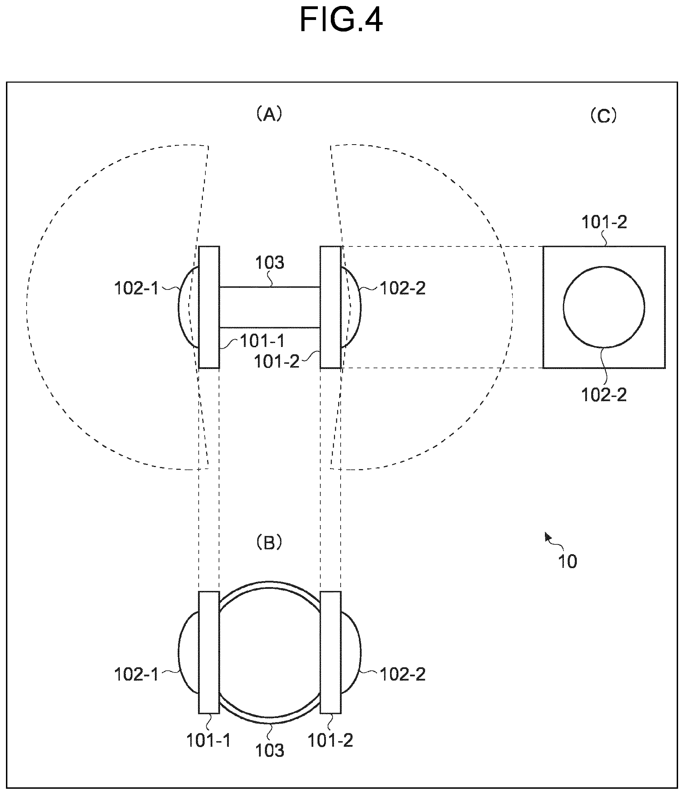

FIG. 4 is an external view illustrating a schematic configuration example of a measurement device according to a first example. The first example will describe an exemplary case of including two sensors 111. In FIG. 4, (A) is a front view/back view viewed from a direction perpendicular to an extending direction of the wrist on which the measurement device 10 is attached; (B) is a top view/bottom view from the extending direction of the wrist; and (C) is a right side view/left side view when (A) is illustrated as the front/back view.
As illustrated in FIG. 4, in addition to the configuration illustrated in FIG. 2, the measurement device 10 includes: a housing 101-1 that houses one of the two sensors 111; a housing 101-2 that houses the other sensor 111; and a belt 103 that couples the housings 101-1 and 101-2 to each other and fixes the measurement device 10 to the wrist of the user U. In addition, the housings 101-1 and 101-2 are provided with lenses 102-1 and 102-2 (hereinafter, when not distinguishing the lenses, its reference numeral is described as '102') placed on a light receiving surface of the sensor 111.
The sensor 111 and the lens 102-1 provided in the housing 101-1 may be, for example, a sensor that images the outside direction of the wrist, and the sensor 111 and the lens 102-2 provided in the housing 101-2 may be, for example, a sensor that images the inside direction of the wrist. In this manner, the sensor 111 and the lens 102 provided in the housing 101-1 and the sensor 111 and the lens 102-2 provided in the housing 101-2 are configured to capture images on opposite sides, making it possible to set the entire portion in surrounding direction of the wrist, as a detection range.
In order to set the entire portion of the surrounding direction of the wrist as the detection range by the sensor 111 and the lens 102 provided in the housing 101-1 and the sensor 111 and the lens 102-2 provided in the housing 101-2, it is preferable to use a lens having a viewing angle (Field of View (FOV)) of 180° or more and less than 270° as each lens 102 as indicated by a broken line in (A) of FIG. 4.
In this manner, by using the lens 102 having the FOV of 180° or more, a full-body image of the user U can be captured regardless of a change in the position and posture of the wrists of the user U each equipped with the measurement device 10AL or the measurement device 10AR.
Note that the FOV of each lens 102 is not limited to the range 180° or more and less than 270°, and may be 90° or more and less than 180° like a general wide-angle lens or fisheye lens, or may be 60° or more and less than 90° like a lens typically used in a smartphone or a single-lens reflex camera. That is, various changes may be made as long as each measurement device 10 achieves a FOV of substantially 360° to be able to cover the entire surroundings of the wrist as the detection range.

1.3.2 Second example

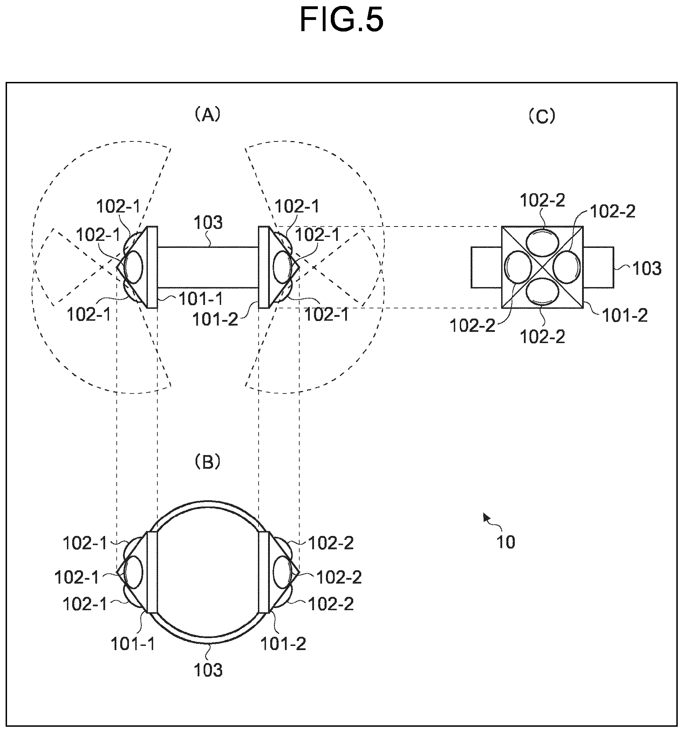

When a lens having a FOV of less than 180° is used as the lens 102, it is allowable to provide a plurality of sets of sensors 111 and lenses 102 in each of the housing 101-1 facing the outside of the wrist and the housing 101-2 facing the inside of the wrist. FIG. 5 is an external view illustrating a schematic configuration example of a measurement device according to a second example, illustrating an example of the measurement device in which a plurality of sets of sensors and lenses are provided in each housing. In the second example, four sets of sensors 111 and lenses 102 are provided in each housing 101. In FIG. 5, (A) is a front view/back view viewed from a direction perpendicular to an extending direction of the wrist on which the measurement device 10 is attached; (B) is a top view/bottom view from the extending direction of the wrist; and (C) is a right side view/left side view when (A) is illustrated as the front/back view.
As illustrated in FIG. 5, in the second example, each housing 101 has a shape in which a side opposite to the belt 103 protrudes in a quadrangular pyramid shape, and one lens 102 is provided on each slope of the quadrangular pyramid. For example, the optical axis of each lens 102 may be oriented in a direction perpendicular to the slope.
In this manner, by disposing the plurality of (four in the present example) lenses 102 so that the optical axes are inclined to each other, as illustrated by a broken line in (A) of FIG. 5, the entire surrounding directions of the wrist can be covered as the detection range by the housing 101-1 and the housing 101-2. This makes it possible to perform full-body imaging of the user U regardless of any change in the position and posture of the wrists of the user U each equipped with the measurement device 10AL or the measurement device 10AR.

Note that the FOV of each lens 102 in the second example may be 90° or more and less than 180°, but is not limited thereto, and may be 180° or more and less than 270°, or may be 60° or more and less than 90°. That is, various changes may be made as long as the FOV of substantially 180° or more is achieved by combining the plurality of lenses 102 in each of the housings 101-1 and 101-2 to enable each of the measurement devices 10 to achieve the FOV of substantially 360° so as to cover the entire surroundings of the wrist as the detection range.

### 1.3.3 Third example

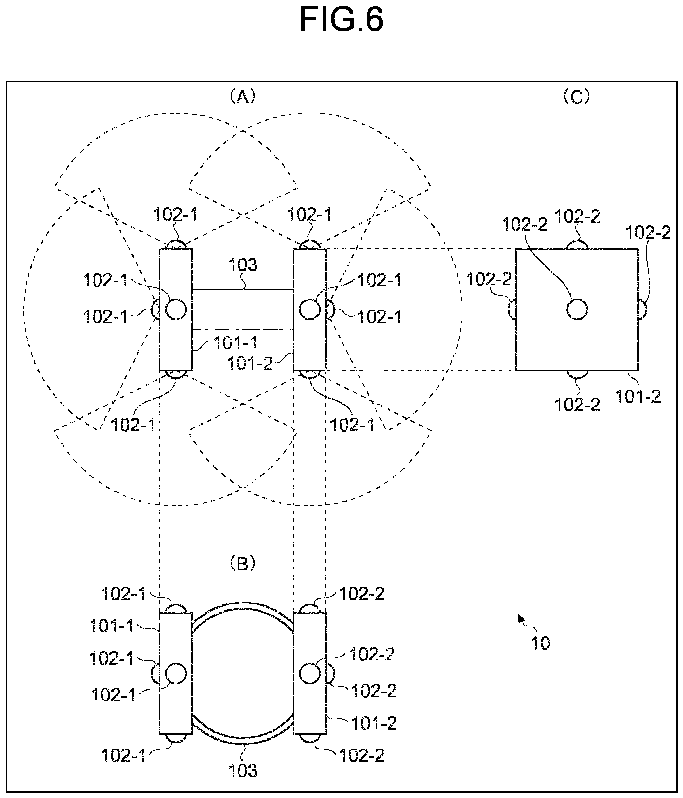

FIG. 6 is an external view illustrating a schematic configuration example of a measurement device according to a third example, illustrating another example of the measurement device in which a plurality of sets of sensors and lenses are provided in each housing. In the third example, five sets of sensors 111 and lenses 102 are provided in each housing 101. In FIG. 6, (A) is a front view/back view viewed from a direction perpendicular to an extending direction of the wrist on which the measurement device 10 is attached; (B) is a top view/bottom view from the extending direction of the wrist; and (C) is a right side view/left side view when (A) is illustrated as the front/back view.

As illustrated in FIG. 6, in the third example, each housing 101 has a quadrangular prism shape such as a regular quadrangular prism, and one lens 102 is provided on an upper surface (surface facing the side of the belt 103) and on each of the four side surfaces. For example, the optical axis of each lens 102 may be oriented in a direction perpendicular to each surface.

In this manner, by disposing the plurality of (five in the present example) lenses 102 so that the optical axes are inclined by 90° to each other, as illustrated by a broken line in (A) of FIG. 6, the entire surrounding direction of the wrist can be covered as the detection range by the housing 101-1 and the housing 101-2. This makes it possible to image the entire body of the user U regardless of any change occurring in the position and posture of the wrist of the user U on which each of the measurement device 10AL and the measurement device 10AR is attached.

Note that the FOV of each lens 102 in the third example may be 90° or more and less than 180°, but is not limited thereto, and may be 180° or more and less than 270°, or may be 60° or more and less than 90°. That is, various changes may be made as long as the FOV of substantially 180° or more is achieved by combining the plurality of lenses 102 in each of the housings 101-1 and 101-2 to enable each of the measurement devices 10 to achieve the FOV of substantially 360° so as to cover the entire surroundings of the wrist as the detection range.

### 1.4 Position measurement method for each site

Next, a method of measuring the position of each site in the user U according to the present embodiment will be described in detail with reference to the drawings. In the present example, the position measurement sites are represented by the left wrist, the right wrist, the left elbow, the right elbow, the left shoulder, the right shoulder, the left ankle, the right ankle, the left knee, the right knee, and the head, but the position measurement sites are not limited thereto, and various sites in the user U may be defined as the position measurement target. Furthermore, for simplification, the left/right distinction will not be made in the following description, as appropriate.

### 1.4.1 Wrists

First, a method of measuring the positions of both wrists of the user U will be described. In the present embodiment, the measurement device 10AL and the measurement device 10AR are attached to each wrist of the user U. The wrist position of the user U is measured from the positions (self-position estimation results) estimated by the measurement device 10AL and the measurement device 10AR themselves.

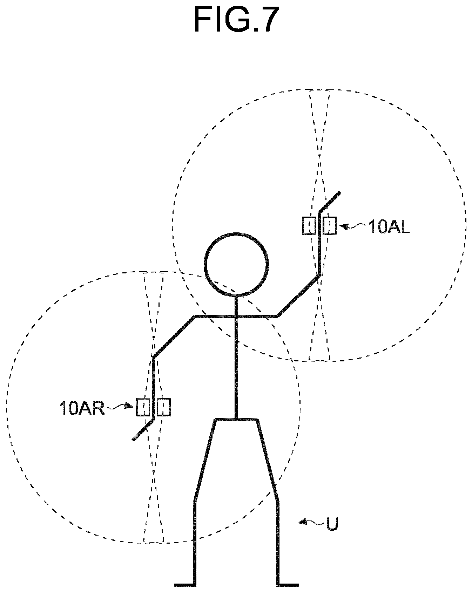

FIG. 7 is a diagram for illustrating a method of measuring wrist positions according to the present embodiment. The user U illustrated in FIG. 7 wears the measurement device 10AL on their left wrist and the measurement device 10AR on their right wrist. In the drawing, a broken circle illustrated around each of the measurement devices 10AL and 10AR represents the detection range in which each measurement device 10 can detect the object, described above with reference to FIGS. 4 to 6. As illustrated in FIG. 7, each of the measurement device 10AL and the measurement device 10AR can image a wide range (preferably, surroundings in 360 degrees) around the position where the measurement device is attached. In other words, it is possible to detect an object located around the position where the user wears the sensor device substantially over the entire surroundings in 360 degrees. In addition, the measurement devices 10AL and 10AR each include the IMU 112 capable of detecting movement in the 6DoF directions (X, Y, Z, Yaw, Pitch, Roll directions), and thus includes a configuration necessary for performing SLAM. In the measurement device 10AL, an image sensor (an example of the sensor 111) of the measurement device 10AL acquires, for example, an image of a space in which the measurement device 10AL is disposed being the space which forms the surroundings of each device. Alternatively, as described below, a distance measurement sensor (an example of the sensor 111) of the measurement device 10AL may acquire distance information, information regarding a distance from the measurement device 10AL to an object present around the measurement device 10AL in a space including the measurement device 10AL, for example. The similar applies to the measurement device 10AR. In the present embodiment, each of the measurement device 10AL and the measurement device 10AR uses the SLAM technique to estimate the position and posture of the wrists to which the measurement device itself is attached.

Specifically, for example, SLAM is executed using the image data acquired by one or more sensors 111 included in the measurement device 10AL attached to the left wrist and using the 6DoF data acquired by the IMU 112, thereby estimating the self-position of the measurement device 10AL (that is, the left wrist) in the three-dimensional coordinate system. Similarly, SLAM is executed using the image data acquired by one or more sensors 111 included in the measurement device 10AR attached to the right wrist and using the 6DoF data acquired by the IMU 112, thereby estimating the self-position of the measurement device 10AR (that is, the right wrist) in the three-dimensional coordinate system.

The subject imaged by each of the sensors 111 of the measurement device 10AL and the measurement device 10AR is not limited except for coordinate system integration processing to be described below. That is, the user U may image any subject with the measurement devices 10AL and 10AR attached to both wrists while executing the SLAM.

The coordinate system of the SLAM executed using the left wrist measurement device 10AL and the coordinate system of the SLAM executed using the right wrist measurement device 10AR are integrated into a common coordinate system. The coordinate system integration processing may be executed by the information processing apparatus 40, for example. By integrating the coordinate systems of the measurement device 10AL and the measurement device 10AR attached to both wrists, the estimated self-position (that is, the position of the left wrist) of the measurement device 10AL and the estimated self-position (that is, the position of the right wrist) of the measurement device 10AR can be treated as positions on a common coordinate system. The position estimation of the measurement devices 10AL and 10AR leads to achievement of measurement of the positions of the left and right wrists of the user U.

1.4.2 Elbows and shoulders

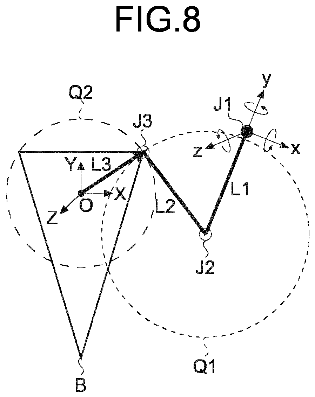

Next, a method of measuring the positions of both elbows and both shoulders of the user U will be described. FIG. 8 is a diagram for illustrating a method of measuring positions of elbows and shoulders according to the present embodiment. Note that the skeleton model shape of the human body and the positions of the elbow and the shoulder located between the wrist and the reference site (for example, the trunk) in the user U can be measured based on the skeleton model of the human body as described below.

(Elbows)

As described above, the self-position of a wrist J1 of the user U is known by the SLAM using the measurement device 10 attached to the wrist J1. Therefore, a self-position of an ulna including the wrist J1 of the user U can also be treated as known.

On the other hand, for example, a length L1 of the ulna of the user U is known from a skeleton model of a general human body or a user-specific skeleton model constructed by measuring the user U. Therefore, as illustrated in FIG. 8, the position of the elbow J2 of the user U can be measured by shifting the position of the measurement device 10 by a distance L1 in the extending direction of the ulna based on the posture of the measurement device 10.

(Shoulders)

In addition, a length L2 of the humerus of the user U is also known from the skeleton model. A shoulder J3 of the user U exists on a spherical surface Q1 centered on the estimated position of the elbow J2 and having a radius being the length L2 of the humerus.

On the other hand, in a case where the self-position of a reference point (for example, a bib attached to the trunk, or the like) (hereinafter, referred to as an originating point O) in a trunk B of the user U is known, and a distance L3 from the originating point O to the shoulder J3 is known, the shoulder J3 of the user U exists on a circle Q2 obtained as an intersection, created when a spherical surface centered on the originating point O and having a radius being the distance L3 intersects with a plane (hereinafter, also referred to as a Z0 plane) passing through the originating point O and satisfying Z=0.

Thus, the position of the shoulder J3 of the user U is narrowed down to two points where the spherical surface Q1 and the circle Q2 intersect.

Here, the existence range of the shoulder J3 with respect to the originating point O can be restricted to Y>0 from the skeleton model. With this operation, the position of the shoulder J3 of the user U can be further narrowed down to one point that satisfies the condition Y>0 among the two points narrowed down in the above.

1.4.3 Knees and ankles

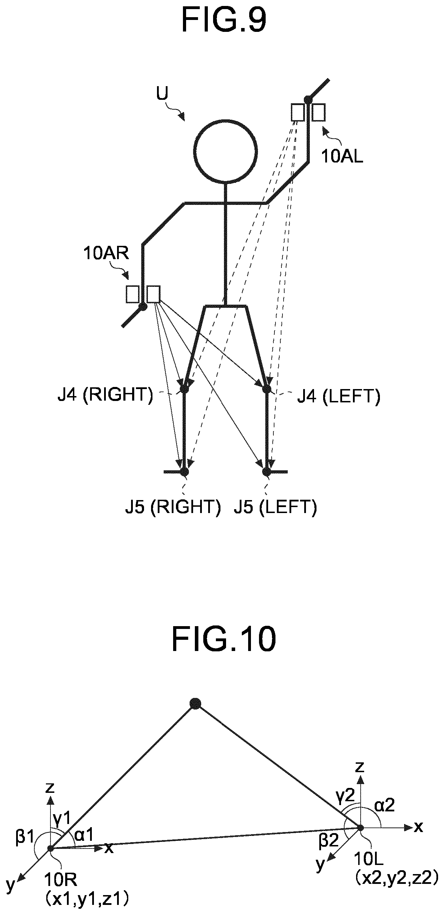

Next, a method of measuring the positions of both knees and both ankles of the user U will be described. FIG. 9 is a diagram for illustrating a method of measuring positions of knees and ankles according to the present embodiment. FIG. 10 is a diagram for illustrating position measurement using triangulation.

As described above, the self-position of a wrist J1 of the user U is known by the SLAM using the measurement device 10 attached to the wrist J1. In addition, the posture (Orientation in Yaw, Pitch, and Roll directions) of the measurement device 10 is known from the measurement result of the IMU 112 installed on the measurement device 10.

Furthermore, as illustrated in FIG. 9, the measurement device 10AL attached to the left wrist of the user U and the measurement device 10AR attached to the right wrist acquire image data including images of a right knee J4 and a left knee J4, a right ankle J5, and a left ankle J5 of the user U.

Therefore, it is possible, from the image data acquired by the measurement device 10AL, to specify in which direction each of the left knee J4 and the right knee J4, the left ankle J5 and the right ankle J5 of the user U exists with respect to the measurement device 10AL. Similarly, it is possible, from the image data acquired by the measurement device 10AR, to specify in which direction each of the left knee J4 and the right knee J4, the left ankle J5 and the right ankle J5 of the user U exists with respect to the measurement device 10AR.

In this manner, the self-positions of the two measurement devices 10AL and 10AR are known, and it is possible to specify in which direction the left knee J4 and the right knee J4, the left ankle J5, and the right ankle J5 of the user U exist with respect to each measurement device 10. Therefore, as illustrated in FIG. 10, the positions of the left knee J4 and the right knee J4, the left ankle J5, and the right ankle J5 of the user U can be measured using triangulation.

In a case where there is a frame in which at least one of the left knee J4 and the right knee J4, the left ankle J5, and the right ankle J5 of the user U cannot be captured by the sensor 111 of at least one of the measurement devices 10AL and 10AR, it is allowable to interpolate the position of the lost site in the image data in this frame by using a technique such as frame interpolation.

1.4.4 Head and trunk

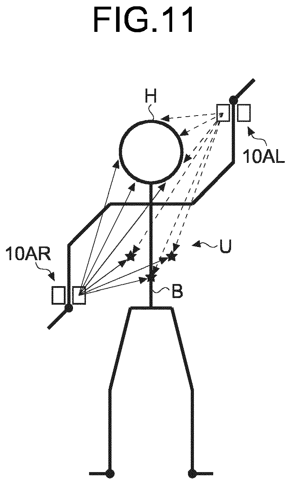

Next, a method of measuring the positions of the head and the trunk of the user U will be described. FIG. 11 is a diagram for illustrating a method of measuring positions of the head and the trunk according to the present embodiment.

Similarly to the knee and ankle position measurement method described above, the self-position of the wrist J1 of the user U is known by SLAM using the measurement device 10, and the posture (orientation in Yaw, Pitch, and Roll directions) of the measurement device 10 is known from the measurement result of the IMU 112. Furthermore, as illustrated in FIG. 11, the measurement devices 10AL and 10AR attached to both wrists of the user U each acquire image data including images of feature points (forehead, eyes, nose, mouth, jaw, etc.) of the head H and feature points (for example, a bib, a pocket, a button, a collar, etc.) of the trunk B of the user U.

This makes it possible to specify in which direction the feature point (forehead, eyes, nose, mouth, jaw, etc.) of the head H and the feature point (for example, a bib, a pocket, a button, a collar, etc.) of the trunk B of the user U exist with respect to each of the measurement devices 10 from the image data individually acquired by the measurement devices 10AL and 10AR, enabling measurement of the individual positions using triangulation as illustrated in FIG. 10.

Similarly to the knee and the ankle, in a case where there is a frame in which at least one of the feature points of the head H and the trunk B of the user U cannot be captured by the sensor 111 of at least one of the measurement device 10AL and the measurement device 10AR, it is also allowable to interpolate the position of the lost feature point in the image data in this frame using a technique such as frame interpolation.

1.4.5 Another method of measuring position of each site

While the measurement method described above is an exemplary case where the position of each site of the user U is measured by triangulation from the image data imaged by the two measurement devices 10 whose self-positions are known, the measurement method according to the present embodiment is not limited thereto, and may be variously modified. For example, in a case where at least one sensor 111 in at least one measurement device 10 whose self-position is known is a distance measurement sensor, it is possible, by using depth data acquired by the sensor 111 and the IMU 112, to measure the position of each site of the user U with respect to the measurement device 10 whose self-position is known.

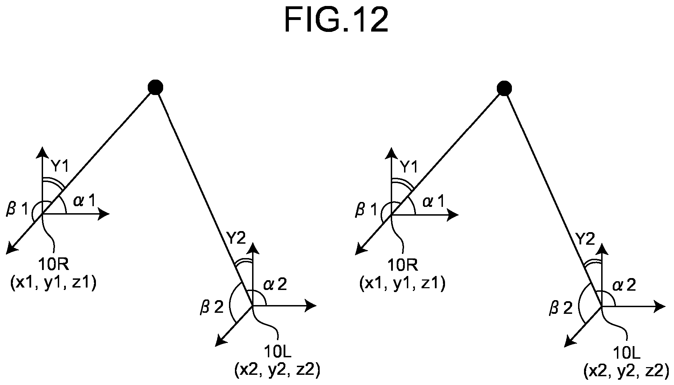

FIG. 12 is a diagram for illustrating position measurement using a distance measurement sensor. In the case of the present embodiment, the self-position of the measurement device 10AL attached to the left wrist and the self-position of the measurement device 10AR attached to the right wrist are individually known by their SLAM. Therefore, by using at least one of the sensors 111 included in the measurement device 10AL and the measurement device 10AR as a distance measurement sensor, it is possible to obtain depth data acquired using this sensor 111. When the measurement device 10AL is described as an example, measurement has been performed regarding the distance between each site of the user U (for example, a certain site of the user U such as the left elbow, the right elbow, the left shoulder, the right shoulder, the left ankle, the right ankle, the left knee, the right knee, or the head) and the measurement device 10AL that captures the site. Furthermore, the orientation (Orientation in Yaw, Pitch, and Roll directions) of the distance measurement sensor of the measurement device 10AL is known from the measurement result of the IMU 112. Therefore, the direction and distance of each site of the user U from the measurement device 10AL can be grasped. Since the self-position of the measurement device 10AL is also known, as a result, the position (three-dimensional coordinates) of each site of the user U is known. The similar applies to the measurement device 10AR. In the example of FIG. 10 described above, the positions of the left knee J4 and the right knee J4, the left ankle J5, and the right ankle J5 of the user U can be estimated using only one of the measurement device 10AL and the measurement device 10AR, or can be estimated using both of the devices.

1.4.6 Method of measuring shape of hand/fingers

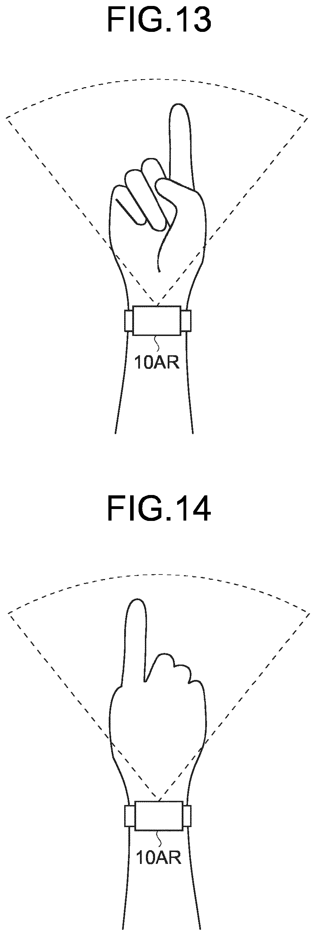

FIGS. 13 to 16 are diagrams for illustrating a method of measuring the shapes of hand/fingers according to the present embodiment. As illustrated in FIGS. 13 to 16, in a case where at least one sensor 111 of the measurement device 10 attached to the wrist can image the hand of the user U, it is possible to measure the posture of the palm or each finger from the shape(s) of the hand/fingers captured as the image and/or the distance information. For example, information such as whether the palm is spread or curled, which finger is stretched, or which finger is curled/bent, can be measured from the image data (which may be depth data) acquired by the sensor 111.

The sensor 111 that images the hand of the user U can be implemented by adopting sensors such as an image sensor (including an IR sensor and a light source), a distance measurement sensor, and EVS. Furthermore, the sensor that images the hand is not limited to the sensor 111 installed on the measurement device 110, and may be a dedicated sensor separately provided for imaging the hand.

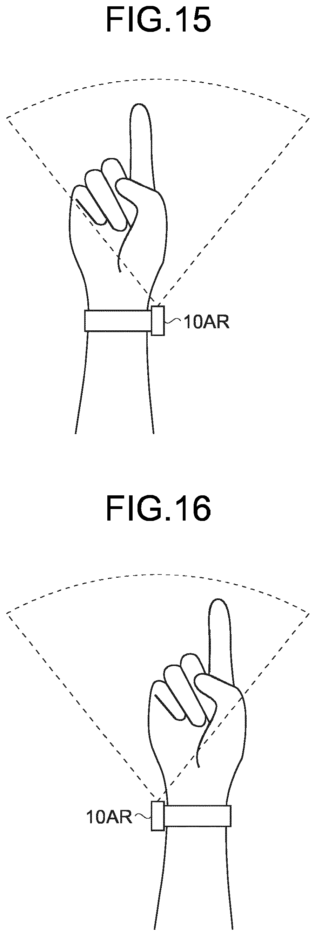

For example, the sensor 111 or the dedicated sensor may capture an image of the hand from the palm side as illustrated in FIG. 13, may capture an image of the hand from the back side of the hand as illustrated in FIG. 14, may capture an image of the hand from the thumb side as illustrated in FIG. 15, or may capture an image of the hand from the pinky side as illustrated in FIG. 16. Alternatively, two or more of the imaging techniques illustrated in FIGS. 13 to 16 may be combined with each other.

Furthermore, the shape of the hand/fingers of the user U may be measured from image data acquired by imaging the hand of the user U with a sensor attached to a portion other than the wrist of the user U (for example, head, trunk, or the like) or a sensor installed at a portion other than the user U.

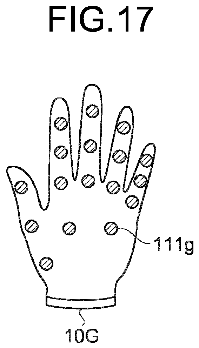

Furthermore, the shape of the hand of the user U is not limited to the above-described method using an optical sensor such as the sensor 111 or a dedicated sensor, and can also be measured by a method using a non-optical sensor such as a myoelectric sensor, a bending sensor, or an IMU. For example, as illustrated in FIG. 17, it is allowable to provide a non-optical sensor 111g such as a myoelectric sensor, a bending sensor, or an IMU at a finger joint portion, a muscle portion, a fingertip portion, or the like in a glove-like measurement device 10G, and measure the shape of the hand of the user U based on data acquired by the non-optical sensor 111g.

Note that measurement processing of the hand shape may be basically executed in the information processing apparatus 40, similarly to the measurement processing of the position of each unit of the user U. However, the execution of the processing is not limited thereto, and may be executed in the measurement device 10, the relay apparatus 20, or the like.

1.5 Coordinate system

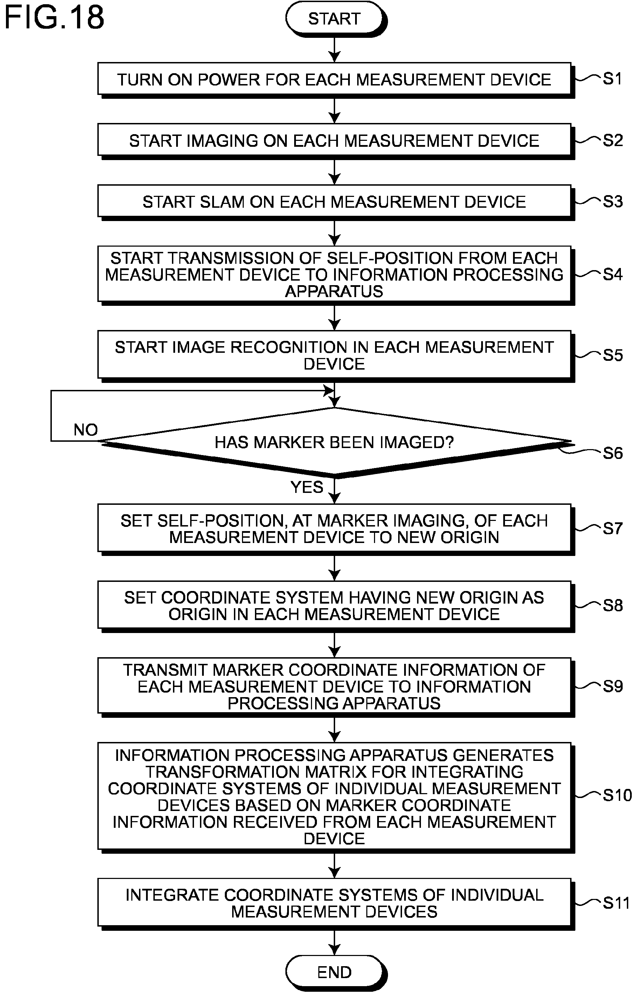

Next, an outline of processing of integrating the coordinate systems of the measurement device 10AL and the measurement device 10AR into a common coordinate system will be described with an example. FIG. 18 is a flowchart illustrating a schematic operation example of coordinate system integration processing according to the present embodiment. The coordinate integration processing exemplified below is merely an example, and may be modified in various manners.

As illustrated in FIG. 18, in the present operation, first, power of each of the measurement devices 10 attached to a predetermined site (both wrists in the present example) of the user U, that is, the power of the measurement devices 10AL and 10AR is turned on (step S1), and each of the measurement devices 10 starts imaging by the sensor 111 (step S2). At that time, each measurement device 10 may also start acquisition of 6DoF data by the IMU 112.

Next, each measurement device 10 starts SLAM using the image data acquired by the sensor 111 and the 6DoF data acquired by the IMU 112 (step S3). Note that, at this stage, the coordinate system (hereinafter, also referred to as an initial coordinate system) of the three-dimensional map used in the SLAM may be based on the position and orientation of each measurement device 10 when the SLAM is started, as an originating point.

Next, each measurement device 10 starts a process of transmitting the self-position (coordinates and orientation) managed by the SLAM to the information processing apparatus 40 (step S4). Note that the self-position information transmitted from each of the measurement devices 10 may be transmitted to the information processing apparatus 40 via the relay apparatus 20.

Next, each measurement device 10 starts recognition processing of the image data acquired by the sensor 111 (step S5).

Next, each measurement device 10 determines whether a specific marker has been imaged by the sensor 111 as a result of the recognition processing in step S5 (step S6). The markers recognized by the measurement devices 10 may be an identical marker.

Here, the specific marker may be, for example, a marker capable of specifying orientation with respect to each measurement device 10 in a captured image by including three or more feature points such as a figure, a two-dimensional code, or a three-dimensional object. Specifically the marker may be various markers that can be guiding marks, such as a figure or a two-dimensional code installed in a real space, a figure or a two-dimensional code displayed on a screen of a fixed display apparatus, a figure or a two-dimensional code projected on a specific surface such as a wall, or an object fixed at a specific position.

Next, each of the measurement devices 10 sets a self-position managed by the SLAM when a specific marker is imaged as a new origin (hereinafter, also referred to as a marker origin) (step S7), and sets a coordinate system (hereinafter, also referred to as a client map coordinate system or a first coordinate system) with the marker origin as the origin onto map data used in the SLAM (step S8). As a result, the self-position transmitted from each measurement device 10 started in step S4 is changed to the self-position in the client map coordinate system. The start of SLAM in each measurement device 10 is not limited to step S3 described above, and may be set after the client map coordinate system is set in step S8.

Next, each measurement device 10 specifies coordinate information of at least three feature points in the marker recognized in step S5 in the client map coordinate system, and transmits the specified coordinate information to the information processing apparatus 40 via the relay apparatus 20 (step S9).

In response to this operation, based on the coordinate information of the marker received from each of the measurement devices 10, the information processing apparatus 40 generates a transformation matrix for integrating the client map coordinate system used for SLAM in each of the measurement devices 10 into one common coordinate system (hereinafter, also referred to as a server map coordinate system or a second coordinate system) in each of the measurement devices 10 (step S10). For example, the information processing apparatus 40 generates a transformation matrix for achieving matching between the coordinates of each feature point of the marker received from one of the measurement device 10AL and the measurement device 10AR and the coordinates of each feature point of the marker received from the other measurement device.

Thereafter, the information processing apparatus 40 uses the generated transformation matrix to change the self-position of each of the measurement devices 10 transmitted from each of the measurement devices 10 into a position on the server map coordinate system. With this operation, the coordinate systems of the individual measurement devices 10 are integrated into a common server map coordinate system (step S11). When the coordinate systems of the individual measurement devices 10 have been integrated into the common server map coordinate system in this manner, the present operation ends.

While the present description has described an exemplary case where the SLAM is executed in each of the measurement devices 10 and the coordinate integration processing is performed in the information processing apparatus 40, the operation is not limited thereto. The SLAM and the coordinate integration processing of each of the measurement devices 10 may be executed in any of the measurement devices 10, the relay apparatus 20, and the information processing apparatus 40.

As described above, by integrating the coordinate system of the map data used in each measurement device 10 into the common server map coordinate system, for example, it is possible, in the case of an application of operating an avatar in the virtual space, the user U can operate the avatar at a point the integration processing of the coordinate system is successful. By confirming enabled operation of the avatar via the display apparatus 50, the user U can recognize that the coordinate system integration processing has been successful.

In a case where the user U needs to know whether the coordinate system integration is successful at the start of a physical activity, such as an application of observing a physical activity posture, it is allowable to equip the housing of each of the measurement devices 10 with a display apparatus such as a light emitting diode (LED) that notifies the user of completion/incompletion of the coordinate system integration processing. Alternatively, each of the measurement devices 10 may notify the user by an announcement such as "Please perform processing" or "Processing completed" by audio.

1.6 Schematic operation example

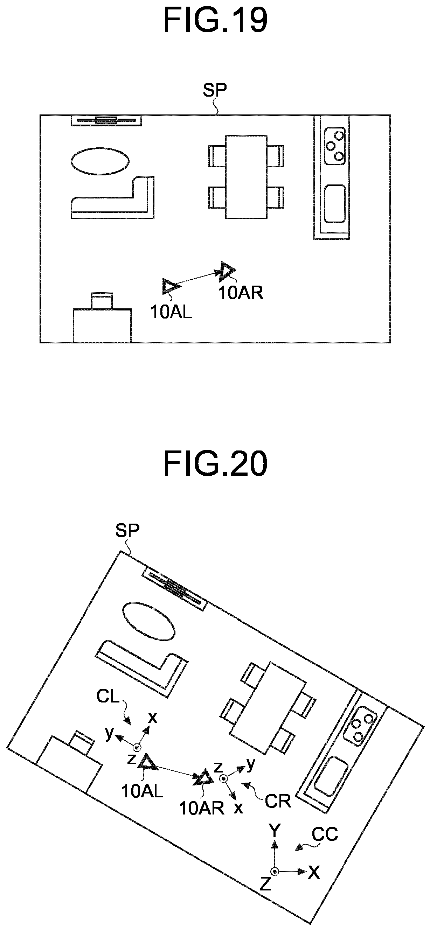

Next, a schematic operation example of the body tracking system 1 according to the present embodiment will be described. FIG. 19 is a diagram illustrating an example of a space in which the user wearing the measurement device is present in the present description. FIG. 20 is a diagram for illustrating an example of a coordinate system set for the space illustrated in FIG. 19.

As illustrated in FIGS. 19 and 20, in the present description, the three-dimensional map may be a three-dimensional environmental map (also referred to as map data) generated from image data and generated by SLAM executed in each measurement device 10, that is, individually in the measurement device 10AL and the measurement device 10AR.

As illustrated in FIG. 20, the client map coordinate system (including those coordinate systems above) may be coordinate systems CR and CL of a three-dimensional map, in which each measurement device 10 independently determines its origin and XYZ directions. Therefore, the origin of the client map coordinate system may be fixed to one point on the map space even when the measurement device 10 moves.

As illustrated in FIG. 20, the server map coordinate system may be a coordinate system CC of a three-dimensional map for integration, in which the information processing apparatus 40 determines the origin and the XYZ directions, and may be a coordinate system to be finally used in an application or the like for controlling an avatar or the like.

In addition, the client map coordinate system may be a coordinate system having an origin being the position of each measurement device 10. Therefore, the origin of the client map coordinate system may change following the movement of the measurement device 10.

1.6.1 Flowchart

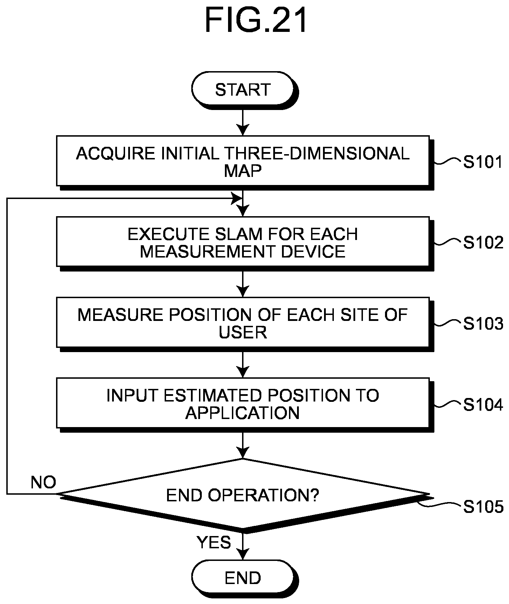

FIG. 21 is a flowchart illustrating a schematic operation example of the body tracking system according to the present embodiment.

As illustrated in FIG. 21, in the present operation, a first step is to acquire a three-dimensional map used for SLAM of each measurement device 10 (also referred to as an initial three-dimensional map) in the information processing apparatus 40 or each measurement device 10, that is, individually in the measurement device 10AL and the measurement device 10AR (step S101). Examples of the method of acquiring the initial three-dimensional map may include various methods such as a method of diverting an existing three-dimensional map and a method of integrating three-dimensional maps created in the SLAM independently executed by each measurement device 10.

Next, SLAM is executed for each measurement device 10 (step S102). In the SLAM of each measurement device 10, the initial three-dimensional map created in step S101 may be updated for each measurement device 10.

Next, based on the information acquired by the sensor 111 and the IMU 112 of each measurement device 10, measurements are performed on the position (coordinate information) of each site (left wrist, right wrist, left elbow, right elbow, left shoulder, right shoulder, left ankle, right ankle, left knee, right knee, head, etc.) in the user U on the server map coordinate system (step S103). Note that, in step S103, the orientation (posture) of each site may also be measured.

The position (coordinate information) of each site measured in this manner is input to an application that links an avatar, a character, or the like with the body action of the user U, for example (step S104). This enables operation of a human body model such as an avatar or a character displayed on the display apparatus 50 in accordance with the motion of the user U.

Thereafter, for example, in the information processing apparatus 40, it is determined whether to end the present operation (step S105). When determined to end the present operation (YES in step S105), the present operation ends. In contrast, when not ending the present operation (NO in step S105), the present operation returns to step S102 to execute subsequent operations.

1.6.2 Variation of initial three-dimensional map acquisition method

Here, some variations of the method of acquiring the initial three-dimensional map illustrated in step S101 of FIG. 21 will be exemplified.

(Use of existing three-dimensional map)

The method of diverting an existing three-dimensional map can be implemented by adopting, for example, various methods such as a method of diverting existing map data as an initial three-dimensional map and a method of diverting a three-dimensional position map created by SLAM or the like executed previously as an initial three-dimensional map. In this case, the system that has previously executed SLAM is not limited to the body tracking system 1, and may be various systems.

(Integration of three-dimensional maps created by each measurement device)

In the method of integrating the three-dimensional maps created in the SLAM independently executed by each of the measurement devices 10, for example, the individual three-dimensional maps may be integrated to create the initial three-dimensional map at a stage where each of the measurement devices 10 has created its three-dimensional map to some extent.

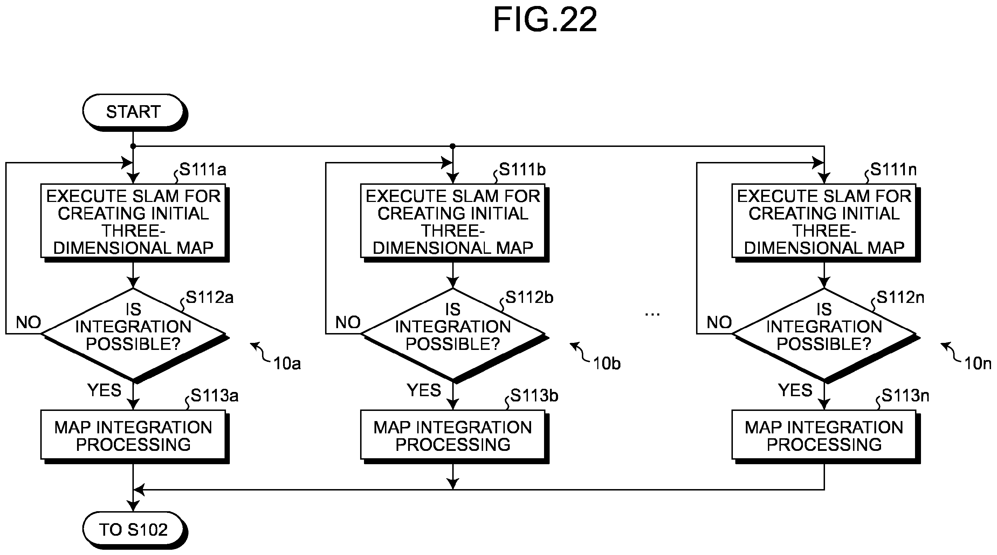

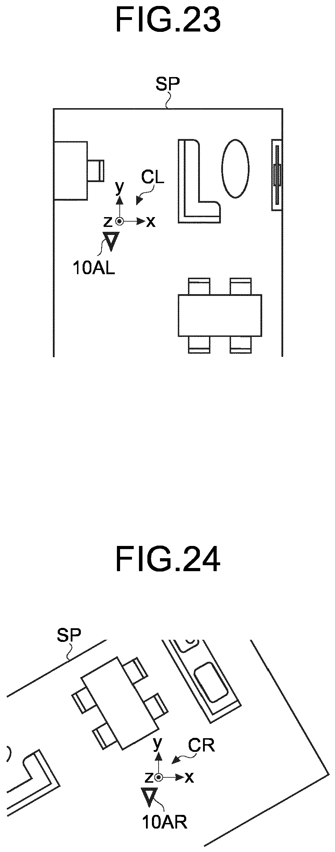

FIG. 22 is a flowchart illustrating an example of a flow of map integration processing according to the present embodiment. FIGS. 23 to 25 are diagrams for supplementing the flow illustrated in FIG. 22. In FIG. 22, for the sake of generalization, the number of measurement devices 10 is set to n.

For example, in a case where the user U wearing the measurement device 10AL and the measurement device 10AR is present in a space SP illustrated in FIG. 19, each of the measurement devices 10, that is, the measurement device 10AL and the measurement device 10AR individually executes SLAM for creating the initial three-dimensional map based on the image data acquired by the sensor 111 and the 6DoF data acquired by the IMU 112, as illustrated in steps S111a to S111n of FIG. 22.

As in the present embodiment, in a case where the measurement device 10AL and the measurement device 10AR are attached to each wrist of the user U, as illustrated in FIGS. 23 and 24, SLAM is independently executed in the measurement device 10AL and the measurement device 10AR individually to create a three-dimensional map.

Note that the coordinate system of the three-dimensional map (refer to FIG. 23) created in the measurement device 10AL may be the client map coordinate system CL independently set in the measurement device 10AL. The coordinate system of the three-dimensional map (refer to FIG. 24) created in the measurement device 10AR may be the client map coordinate system CR independently set in the measurement device 10AR.

Next, each measurement device 10 determines whether the three-dimensional map is created, at a current point, to an extent that can be integrated with the three-dimensional map being created by another measurement device 10 (steps S112a to S112n). For example, each measurement device 10 may determine whether integration is possible based on criteria such as whether there are predetermined markers in the three-dimensional map being created, whether there are one or more objects to be landmarks, whether there are one or more characteristic shapes, or whether there are two or more walls, ceilings, and the like that are not parallel to each other and can be specified.

When a result of the determination in steps S112a to S112n indicates it is possible to perform three-dimensional map integration processing on all the measurement devices 10 (YES in steps S112a to S112n), processing of integrating the three-dimensional map created by each measurement device 10 is executed (steps S113a to S113n), and the processing proceeds to step S102 illustrated in FIG. 21.

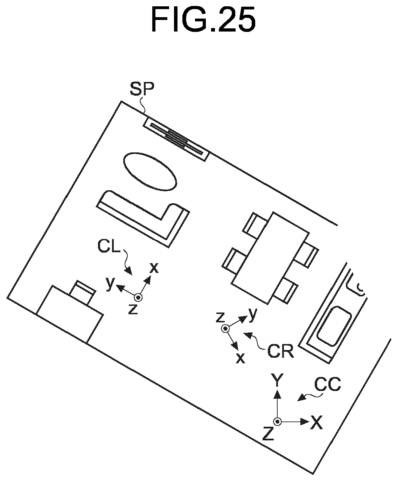

In a case where the measurement device 10AL and the measurement device 10AR are attached to each wrist of the user U as in the present embodiment, as illustrated in FIG. 25, the three-dimensional map created by the measurement device 10AL (refer to FIG. 23) and the three-dimensional map created by the measurement device 10AR (refer to FIG. 24) are integrated to create a common three-dimensional map (initial three-dimensional map).

In steps S113a to S113n, map integration processing may be sequentially executed on the measurement device 10 that has achieved capability to integrate three-dimensional maps, prior to the measurement device 10 not completely ready for map integration, and the processing may proceed to step S102 in FIG. 21.

1.6.3 Specific technique of map integration

Next, a specific technique of map integration executed in steps S113a to S113n of FIG. 22 will be described with some examples.

(First technique)

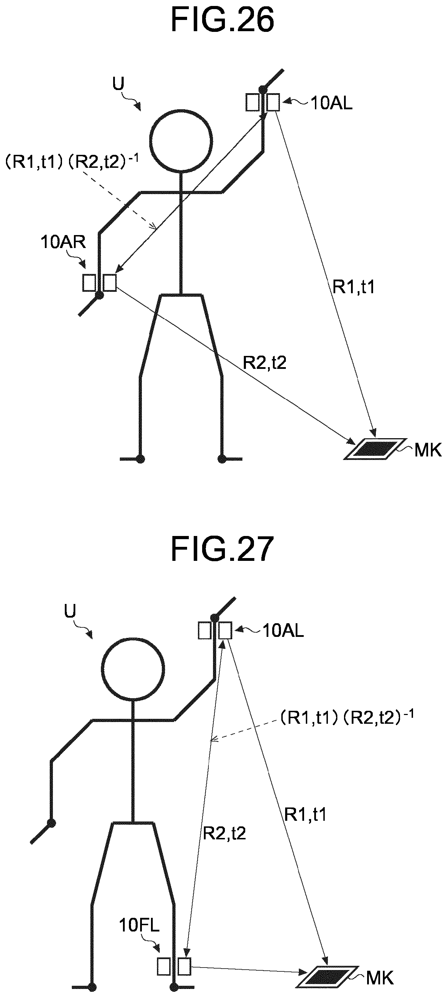

A first technique will be described as an exemplary case where the three-dimensional maps of the measurement devices 10 are integrated with a predetermined marker fixed in an external environment (for example, in the space SP) as a reference. That is, in the first technique, integration is determined to be possible when a predetermined marker is recognized in steps S112a to S112n in FIG. 22. FIG. 26 is a diagram for illustrating map integration according to the first technique.

In the example illustrated in FIG. 26, the user U images a marker MK fixed to, for example, the floor in the space SP individually using the left wrist measurement device 10AL and the right wrist measurement device 10AR. Here, the three-dimensional position (coordinates) and posture (orientation) of each measurement device 10 in each client map coordinate system are known from the SLAM executed by each measurement device 10. In addition, based on the image data acquired by the sensor 111 of each measurement device 10, it is also possible to obtain in which direction the marker MK is positioned with respect to each measurement device 10.

From these, by specifying the position of each measurement device 10 with respect to the similar marker MK existing in the real space (space SP), it is possible to obtain a correspondence relationship between the client map coordinate systems of the plurality of measurement devices 10. This makes it possible to integrate the three-dimensional maps created by the individual measurement devices 10 into a common initial three-dimensional map.

While FIG. 26 illustrates an exemplary case where the two measurement devices 10 are attached to both wrists of the user U, the position is not limited to this example. For example, as illustrated in FIG. 27, even in a case where at least one (measurement device 10FL) of the plurality of measurement devices 10 is attached to a position (in the present example, the left ankle) different from the wrist of the user U, it is also possible to obtain the correspondence relationship between the client map coordinate systems of the plurality of measurement devices 10 by a similar technique, making it possible to integrate the three-dimensional maps created by the individual measurement devices 10 into a common initial three-dimensional map.

(Modification of first technique)

Although the above-described first technique has described an exemplary case of obtaining the correspondence relationship between the client map coordinate systems of the plurality of measurement devices 10 with the predetermined marker MK fixed in the external environment (for example, in the space SP) as a reference, the subject as a reference is not limited to the marker MK, and may be modified in various manners. For example, as described above, it is also possible to use one or more objects serving as landmarks, one or more characteristic shapes, two or more walls or ceilings that are not parallel to each other and can be specified, or the like, as the reference.

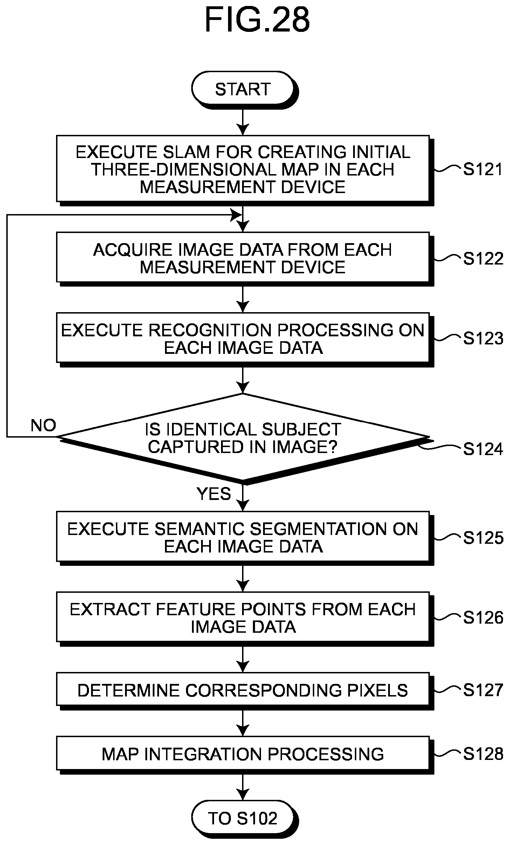

FIG. 28 is a flowchart illustrating an example of a flow of map integration processing according to a modification of the first technique. The operation illustrated in FIG. 28 may be executed instead of the operation illustrated in FIG. 22, for example.

As illustrated in FIG. 28, in the present technique, first, as in steps S111a to S111n in FIG. 22, SLAM for creating an initial three-dimensional map is individually executed in each measurement device 10 (step S121).

Next, the information processing apparatus 40 acquires image data acquired by at least one sensor 111 of each measurement device 10, via the relay apparatus 20 (step S122).

Next, the information processing apparatus 40 executes recognition processing on the image data acquired from each measurement device 10 (step S123).

As a result of the recognition processing in step S123, it is determined whether an identical subject is captured in the image data acquired from two or more or all the measurement devices 10 (step S124). When the identical subject is captured (YES in step S124), the present operation proceeds to step S125. On the other hand, when no identical subject is captured (NO in step S124), the present operation returns to step S122, and the subsequent operations are repeated.

In step S125, the information processing apparatus 40 executes, for example, semantic segmentation on each piece of image data acquired from each measurement device 10. Subsequently, the information processing apparatus 40 extracts feature points of each image data labeled and categorized for each pixel by the semantic segmentation in step S125 (step S126), and specifies a correspondence relationship between the image data of the extracted feature points to determine corresponding pixels across the individual image data (step S127).

The determination of the corresponding pixel between the individual image data can be made by adopting various techniques. Examples of the techniques include a technique of determining, as a result of semantic segmentation in step S125, corresponding feature points across the individual image data by performing polygon approximation on a region associated with the similar label or category in each image data, and determining a pixel located at each corresponding feature point as a corresponding pixel.

In this manner, by determining the corresponding pixels between the image data, it is possible to obtain the correspondence relationship between the client map coordinate systems of the plurality of measurement devices 10, similarly to the above-described first technique. Accordingly, the information processing apparatus 40 executes map integration processing of integrating the three-dimensional maps created by the individual measurement devices 10 into the common initial three-dimensional map based on the obtained correspondence relationship between the client map coordinate systems (step S128), and proceeds to step S102 illustrated in FIG. 21.

(Second technique)

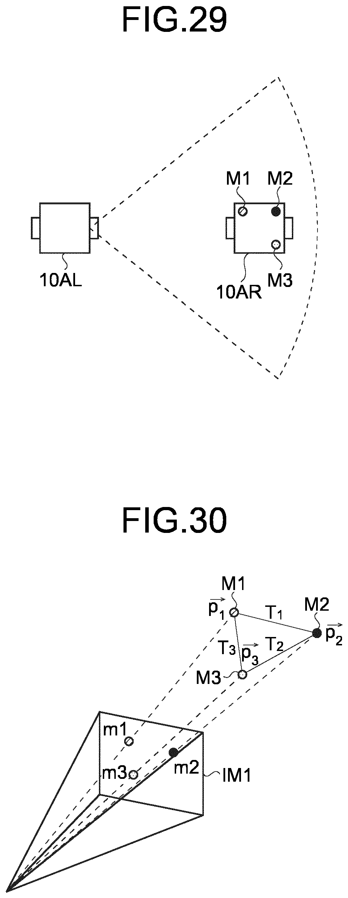

A second technique will be described as an exemplary case of using, in place of the marker MK fixed to the external environment according to the first technique, three or more markers provided on an outer surface of one of the plurality of measurement devices 10 so as to directly obtain the positional relationship between the measurement devices 10, that is, the correspondence relationship between the client map coordinate systems of the plurality of measurement devices 10. FIGS. 29 and 30 are diagrams for illustrating map integration according to the second technique.

In the example illustrated in FIG. 29, three markers M1 to M3 are provided on a surface visually recognizable from one direction in a housing of the measurement device 10AR attached to one wrist (in the present example, the right wrist).

The markers M1 to M3 on the surface of the measurement device 10AR are imaged from the measurement device 10AL attached to the other wrist (in the present example, the left wrist). With this operation, as illustrated in FIG. 30, the relationship between markers m1 to m3 on image data IM1 and the markers M1 to M3 in the real space can be expressed by a total of six expressions, two for each of the markers M1 to M3, as in the following Formula (1). In the following Formula, 'i' is a variable corresponding to the markers M1 to M3. Accordingly, in the present example, 'i' is an integer of 1 to 3.

$$u_i = \frac{fx_i}{z_i} + c_x$$

$$v_i = \frac{fy_i}{z_i} + c_y \qquad (1)$$

Here, fx and fy represent focal lengths in the horizontal and vertical directions of the image, while cx and cy represent optical center positions on the image. These values are device-specific and constant known values.

Here, since the positional relationship between the markers M1 to M3 provided in the measurement device 10AR is known, it is possible to establish a total of three expressions represented by the following Formulas (2).

$$\left\| \vec{p_i} - \vec{p_j} \right\| = T_i \qquad (2)$$

Based on a total of nine Formulas represented by the above Formulas (1) and (2), it is possible to obtain nine unknowns which are the coordinates of three points on the real space (coordinates of the markers M1 to M3). By obtaining the coordinates of the three points (the coordinates of the markers M1 to M3), it is possible to derive the relative positional relationship (including the posture) between the measurement devices 10. This makes it possible to obtain the correspondence relationship between the client map coordinate systems of the plurality of measurement devices 10, and as a result, the three-dimensional maps created by the individual measurement devices 10 can be integrated into the common initial three-dimensional map based on the correspondence relationship between the client map coordinate systems.

The second technique is not limited to the case where the two measurement devices 10AL and 10AR are attached to both wrists of the user U, and is similarly applicable even in a case where at least one of the plurality of measurement devices 10 (measurement device 10FL) is attached to a position (for example, ankle) different from the wrist of the user U.

(First modification of second technique)

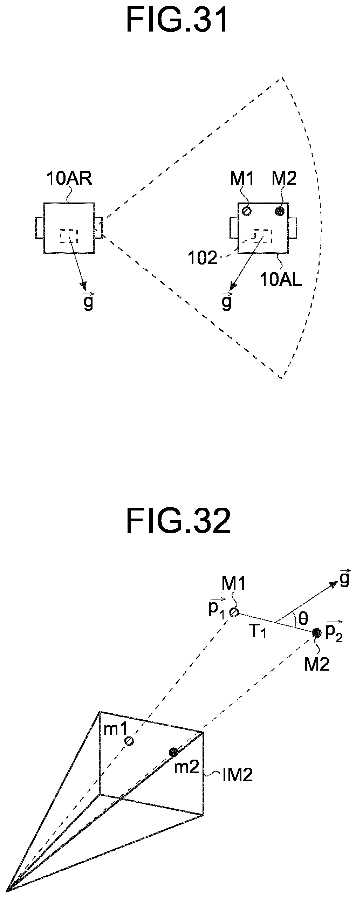

A first modification of the second technique will be described as an exemplary case where two markers M1 and M2 are provided in one measurement device 10 instead of the three markers M1 to M3. FIGS. 31 and 32 are diagrams for illustrating map integration according to the first modification of the second technique.

In the example illustrated in FIG. 31, two markers M1 and M2 are provided on a surface visually recognizable from one direction in a housing of the measurement device 10AL attached to one wrist (in the present example, the left wrist). The markers M1 and M2 on the surface of the measurement device 10AL are imaged from the measurement device 10AR attached to the other wrist (in the present example, the right wrist). With this operation, as illustrated in FIG. 32, the relationship between the marker m1-the marker m2 on the image data IM2 and the marker M1-the marker M2 in the real space can be expressed by a total of four expressions, two for each of the markers M1 and M2, from the above-described Formula (1). In addition, since the positional relationship between the marker M1 and the marker M2 provided in the measurement device 10AL is known, one expression can be established from the above-described Formula (2).

Furthermore, in the first modification, since the angle θ between the straight line connecting the marker M1 and the marker M2 and the gravity direction is known from the gravity direction detected by the IMU 112, the following Formula (3) can be established.

$$\left( \vec{p_i} - \vec{p_j} \right) \cdot \vec{g} = \left\| \vec{p_i} - \vec{p_j} \right\| \left\| \vec{g} \right\| \cos\theta \qquad (3)$$

Based on a total of six Formulas represented by the above Formulas (1) to (3), it is possible to obtain six unknowns which are the coordinates of two points on the real space (coordinates of the markers M1 and M2). By obtaining the coordinates of the two points (the coordinates of the markers M1 and M2) and the gravity direction, it is possible to derive the relative positional relationship (including the posture) between the measurement devices 10. This makes it possible to obtain the correspondence relationship between the client map coordinate systems of the plurality of measurement devices 10, and as a result, the three-dimensional maps created by the individual measurement devices 10 can be integrated into the common initial three-dimensional map based on the correspondence relationship between the client map coordinate systems.

(Second modification of second technique)

By separately obtaining the distance between the measurement devices 10 in the above-described second technique and its first modification, it is possible to integrate a plurality of dimensional maps with higher accuracy.

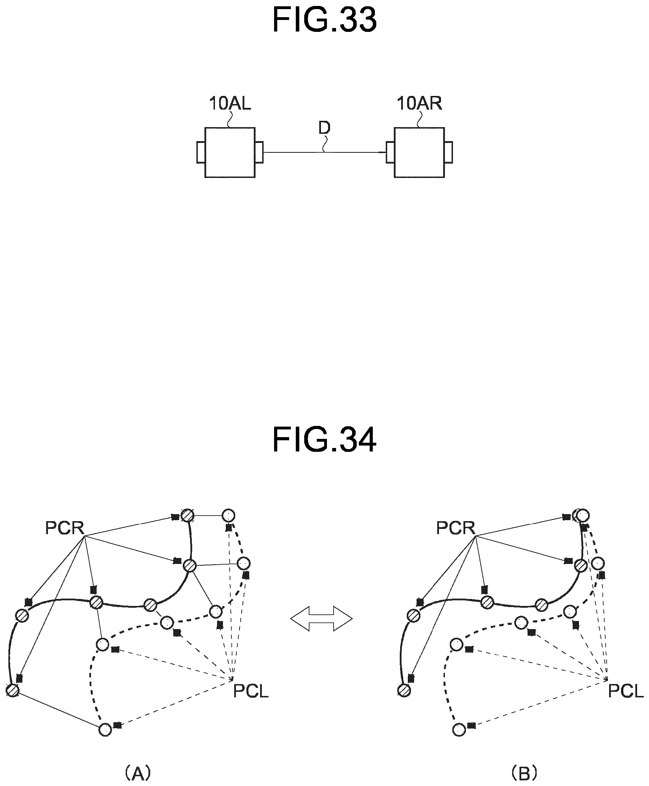

The distance between the two measurement devices 10 can be detected, for example, by using at least one of the sensors 111 included in at least one of the measurement devices 10, as a distance measurement sensor. However, the detection of the distance is not limited to this. For example, as illustrated in FIG. 33, it is possible to detect the strength of the radio wave signal output from one measurement device 10 by the other measurement device 10, so as to detect the distance based on the detected radio field strength.

(Third technique)

A third technique will be described as a case of creating the initial three-dimensional map by integrating a point clouds of the three-dimensional map being created by each measurement device 10 using a technique such as an Iterative Closest Point (ICP) algorithm, for example. FIG. 34 is a diagram for illustrating map integration according to the third technique. In FIG. 34, a point cloud PCL indicates a point cloud of a three-dimensional map created by the measurement device 10AL, while a point cloud RCR indicates a point cloud of a three-dimensional map created by the measurement device 10AR.

In the third technique, first, as illustrated in (A) of FIG. 34, each point of the point cloud PCL of the three-dimensional map created by the measurement device 10AL and each point of the point cloud PCR of the three-dimensional map created by the measurement device 10AR are associated with each other according to a specific reference. The specific reference can be determined by adopting various references such as a nearest neighbor point, color information assigned to each point as attribute information, and other feature amounts.

When the points between the point clouds are associated with each other in this manner, the next step is to obtain a transformation matrix that minimizes an objective function (for example, a distance between corresponding points) between the associated points.

Next, as illustrated in (B) of FIG. 34, by applying the transformation matrix to one point cloud (in the present example, the point cloud PCL), this point loud is brought closer to the other point cloud.

Thereafter, the series of processing is repeated until convergence of the objective function, whereby the three-dimensional map being created by each measurement device 10 is integrated into the common initial three-dimensional map.

(Modification of third technique)

In the modification of the third technique, two or more regions in the three-dimensional map being created by each measurement device 10 are approximated to two or more planes that are not parallel, and the client map coordinate system of the three-dimensional map is transformed such that the two or more created planes overlap each other across the plurality of three-dimensional maps. With such a technique, it is also possible to integrate the three-dimensional maps created by the individual measurement devices 10 into a common initial three-dimensional map.

1.6.4 Variations of SLAM execution modes

Next, some variations will be exemplified for the execution form of the SLAM for each measurement device 10 illustrated in step S102 of FIG. 21.

For example, the SLAM of each measurement device 10 may be executed in each measurement device 10 or may be executed in the information processing apparatus 40. Accordingly, the present description will describe exemplary cases, specifically, a case (first example) in which the SLAM of each of the measurement devices 10 is executed in the information processing apparatus 40, a case (second example) in which the SLAM is executed using the initial three-dimensional map common in each of the measurement devices 10, and a case (third example) in which the SLAM is executed using an individual three-dimensional map in each measurement device 10.

(First example)

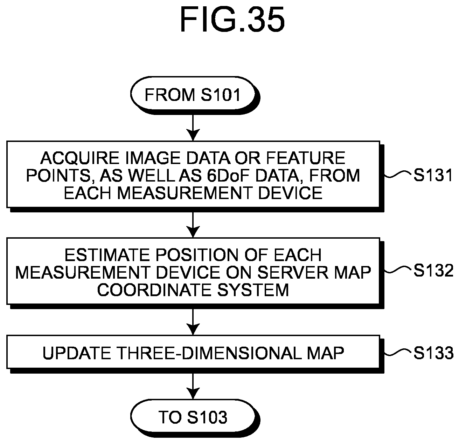

FIG. 35 is a flowchart for illustrating a flow of SLAM processing according to the first example. As illustrated in FIG. 35, in the first example, when the initial three-dimensional map is acquired in step S101 of FIG. 21, first, the information processing apparatus 40 acquires, from each measurement device 10, image data acquired by the sensor 111 of each measurement device 10 or a feature point obtained by performing recognition processing on the image data, and 6DoF data acquired by the IMU 112 (step S131).

Next, based on the image data or the feature point acquired from each measurement device 10 and the 6DoF data, the information processing apparatus 40 estimates the position of each measurement device 10 on the three-dimensional map in the server map coordinate system (step S132).

Furthermore, based on the image data or the feature points acquired from each of the measurement devices 10 and the 6DoF data, the information processing apparatus 40 updates the three-dimensional map (step S133). Thereafter, the present operation proceeds to step S103 in FIG. 21.

In this manner, according to the method of executing the SLAM of each measurement device 10 in the information processing apparatus 40, the consistency of the processing of the SLAM is maintained in the information processing apparatus 40, making it possible to increase the reliability of the three-dimensional map to be created. In addition, it is possible to create and update the three-dimensional map using image data or the like acquired by another device without being limited to the measurement device 10, making it also possible to create the three-dimensional map with higher speed and precision.

(Second example)

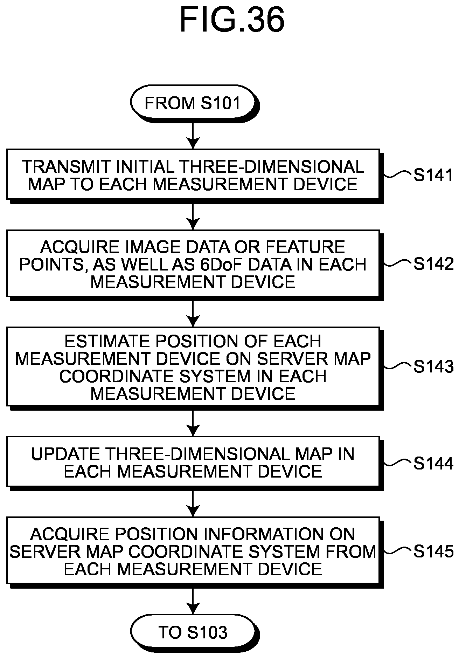

FIG. 36 is a flowchart for illustrating a flow of SLAM processing according to a second example. As illustrated in FIG. 36, in the second example, after the initial three-dimensional map is acquired in step S101 of FIG. 21, a first step is to transmit the initial three-dimensional map acquired in step S101 from the information processing apparatus 40 to each measurement device 10 (step S141).

Next, each measurement device 10 acquires image data or a feature point obtained by performing recognition processing on the image data, and 6DoF data acquired by the IMU 112 (step S142).

Subsequently, in each measurement device 10, based on the image data or the feature points acquired in step S142 and the 6DoF data, the self-position on the three-dimensional map in the server map coordinate system is estimated (step S143), while the three-dimensional map is updated (step S144).

Next, the position information of each of the measurement devices 10 in the server map coordinate system estimated in step S143 is transmitted from each measurement device 10 to the information processing apparatus 40 (step S145), and thereafter, the present operation proceeds to step S103 of FIG. 21.

In this manner, according to the method of executing the SLAM using the common initial three-dimensional map in each measurement device 10, it is possible to greatly reduce the amount of data exchanged between each measurement device 10 and the information processing apparatus 40, leading to faster body tracking of the user U. This makes it possible to improve usability for the user U who operates the avatar or the like in the virtual space.

(Third example)

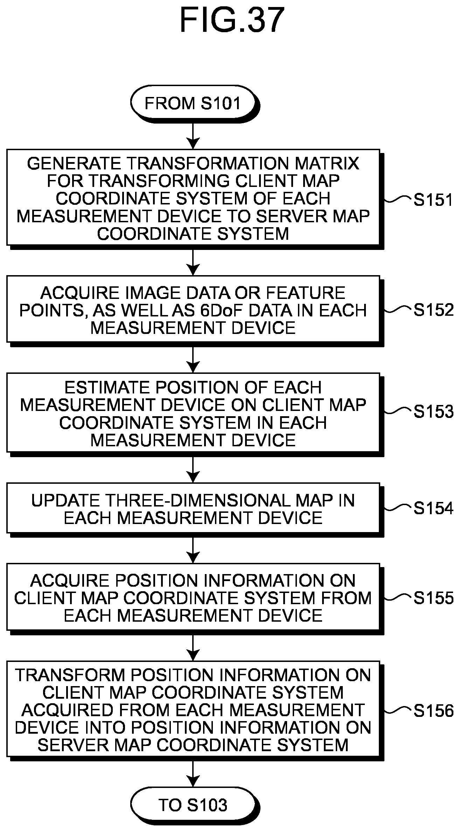

FIG. 37 is a flowchart for illustrating a flow of SLAM processing according to a third example. As illustrated in FIG. 37, in the third example, after the initial three-dimensional map is acquired in step S101 in FIG. 21, a first step is to generate a transformation matrix (refer to step S10 in FIG. 18) for transforming the client map coordinate system set in each measurement device 10 into the server map coordinate system (step S151).

Next, each measurement device 10 acquires image data or a feature point obtained by performing recognition processing on the image data, and 6DoF data acquired by the IMU 112 (step S152).

Subsequently, in each measurement device 10, based on the image data or the feature points acquired in step S152 and the 6DoF data, the self-position on the three-dimensional map in the client map coordinate system is estimated (step S153) to update the three-dimensional map (step S154).

Next, the position information of each of the measurement devices 10 in the client map coordinate system estimated in step S153 is transmitted from each measurement device 10 to the information processing apparatus 40 (step S155).

In response to this, the information processing apparatus 40 transforms the position information received from each measurement device 10 using the transformation matrix generated in step S151 to transform the position information into the position information in the server map coordinate system (step S156), and thereafter, the present operation proceeds to step S103 of FIG. 21.

In this manner, according to the method of executing the SLAM using the individual three-dimensional map in each measurement device 10, it is possible to further reduce the amount of data transmitted and received between each measurement device 10 and the information processing apparatus 40 compared to the second example, leading to faster body tracking of the user U. This makes it possible to improve usability for the user U who operates the avatar or the like in the virtual space.

1.6.5 Method of inputting the measured position of each site to application and operating human body model

Next, a method of operating the human body model illustrated in step S104 of FIG. 21 will be described. In step S104 of FIG. 21, the position of each site (left wrist, right wrist, left elbow, right elbow, left shoulder, right shoulder, left ankle, right ankle, left knee, right knee, head, etc.) of the user U measured in step S103 on the server map coordinate system is input to a predetermined application.

In the application, the shape of the human body model displayed on the display apparatus 50 is changed in accordance with the input position (three-dimensional coordinates) of each site. In other words, the human body model to be displayed on the display apparatus 50 is operated using the three-dimensional position information obtained by measuring each site of the user U. The processing of changing the human body model or the processing of operating the human body model may use known methods.

The human body model displayed on the display apparatus 50 may be, for example, a skeleton model associated with three-dimensional position information of each site of the user U in which joints and body segments are measured, or may be a three-dimensional shape model (for example, a polygon model) in which a three-dimensional shape of a human body or an object imitating a human body is associated with joints and body segments of the skeleton model as illustrated in FIG. 3. Alternatively, the model may be a three-dimensional model in which a skeleton model and a polygon model are displayed as superimposed display.

As described above, the body tracking system 1 according to the present embodiment measures the three-dimensional position information of each site of the human body using the plurality of measurement devices 10, and transforms the acquired position information of each site into the three-dimensional position information of each site of the human body in one common coordinate system in the measurement device 10, the relay apparatus 20, or the information processing apparatus 40.

In the information processing apparatus 40, the image processing unit 144 deforms the skeleton model according to the temporal change of the three-dimensional position information of each site of the human body (more specifically, the positions of the joints and the segments in the skeleton model and the like are moved), and outputs the deformed skeleton model. The image processing unit 144 further moves each vertex (corresponding to a joint or the like) of the polygon model in accordance with the deformation of the skeleton model, and outputs the polygon model after the movement. Furthermore, the image processing unit 144 may further prepares a muscle model and may obtain a shape change of the muscle in accordance with the deformation of the skeleton model, move each vertex of the polygon model in accordance with the shape change of the muscle, and output the model after the movement. Subsequently, the model output from the image processing unit 144 is output to the display apparatus 50 connected to the information processing apparatus 40 or the display apparatus 50 integrated with the information processing apparatus 40 and displayed to the user U.

1.7 Combination variation of units that execute each processing

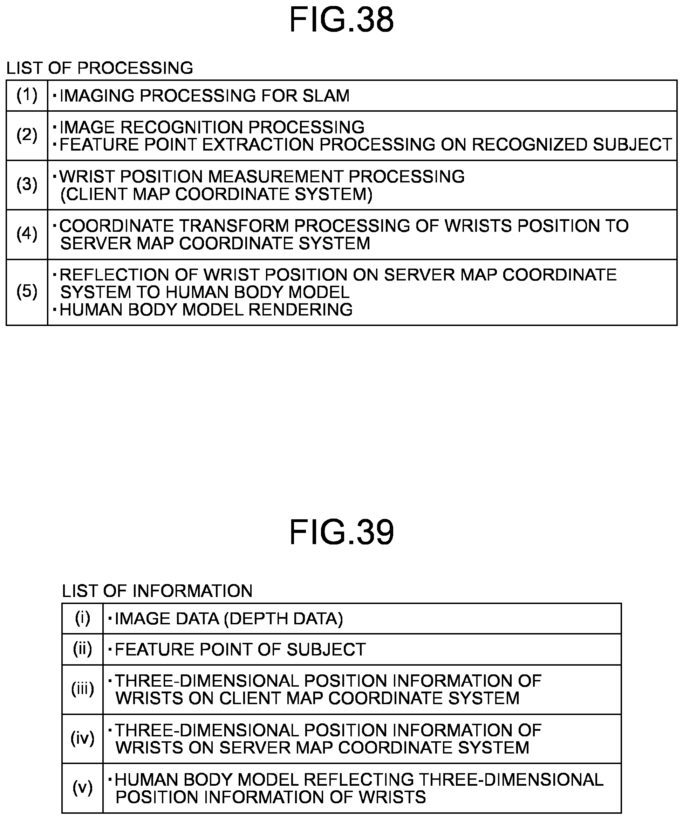

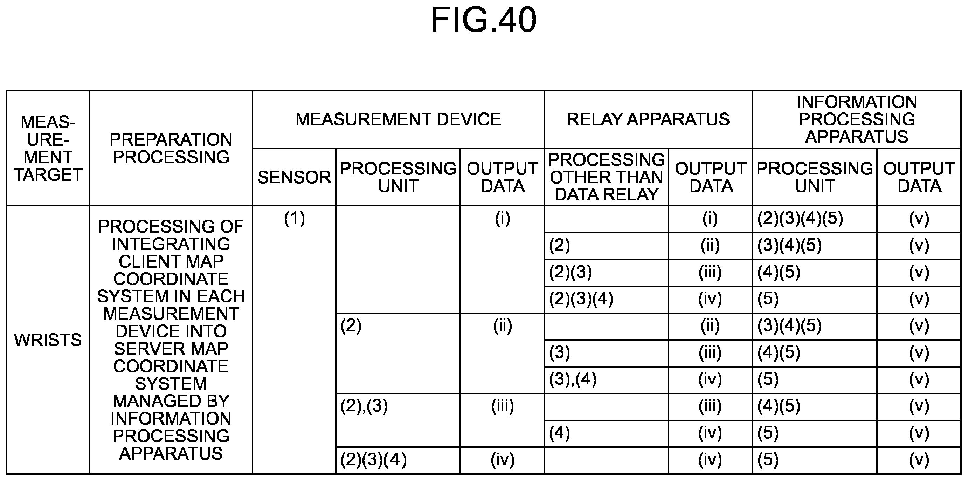

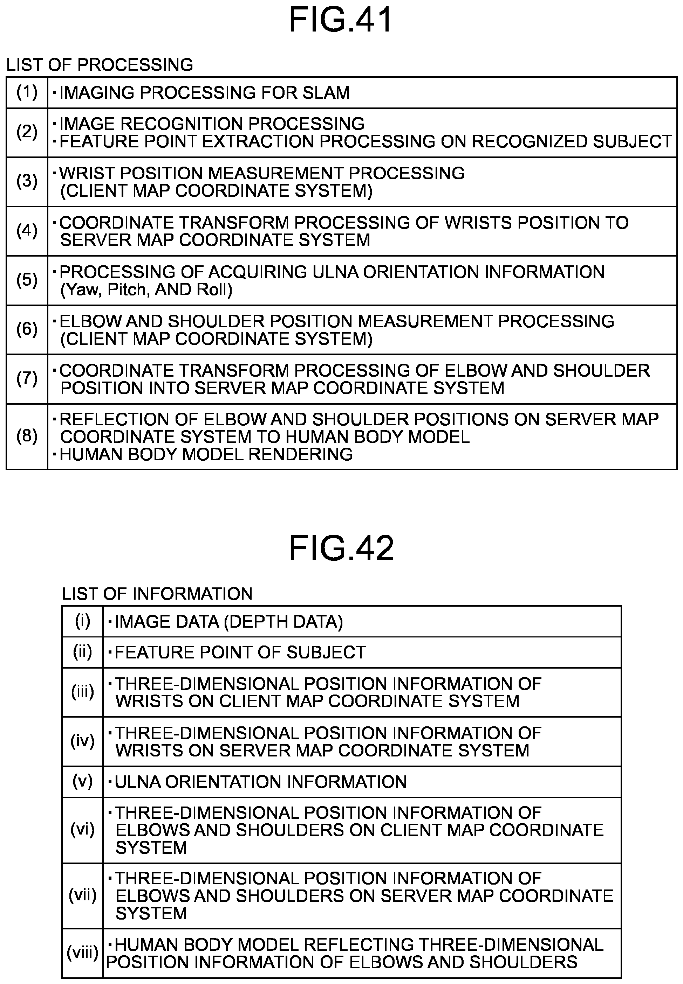

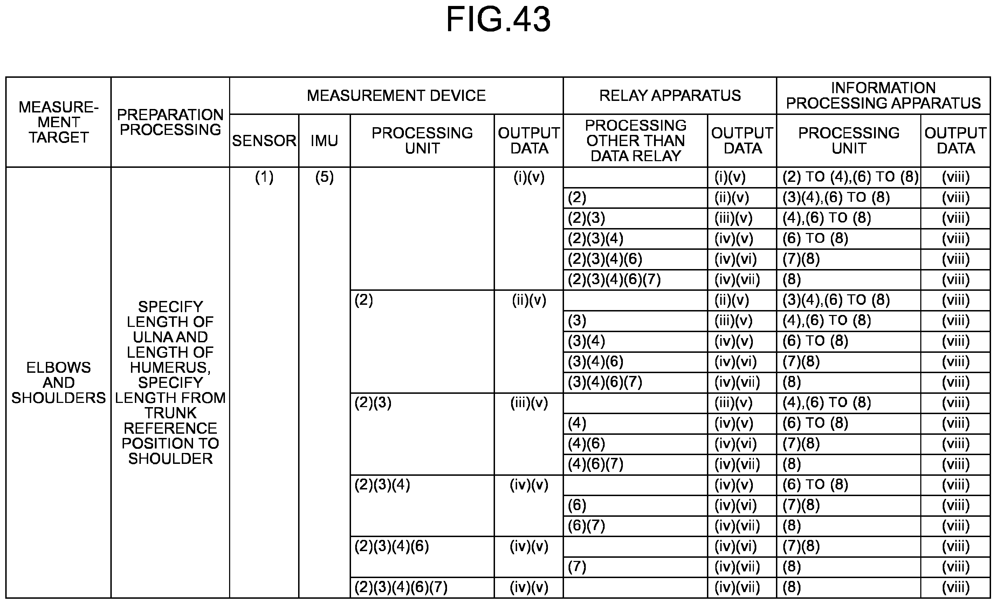

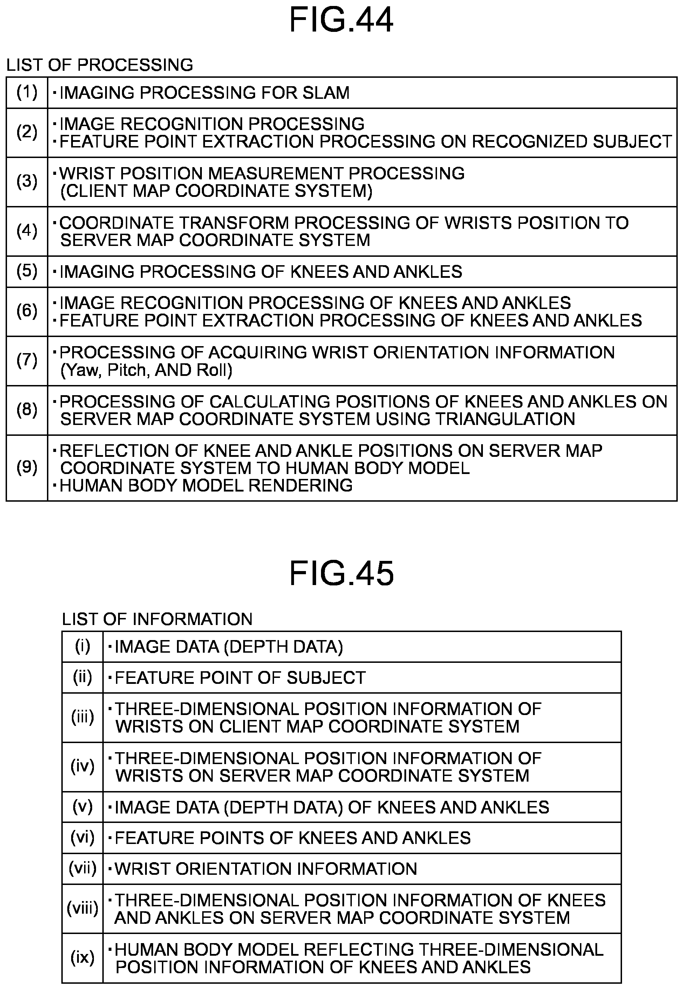

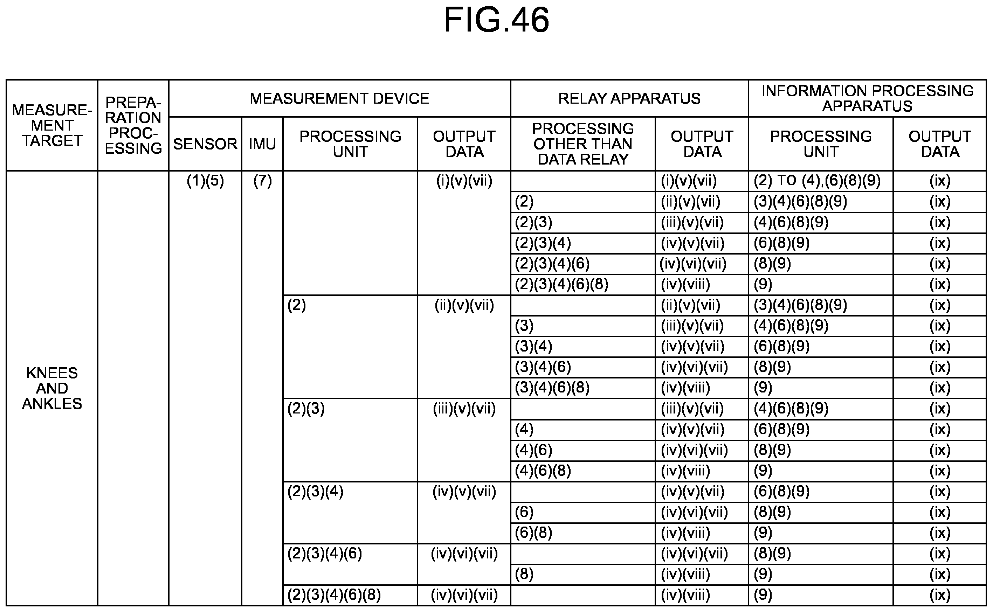

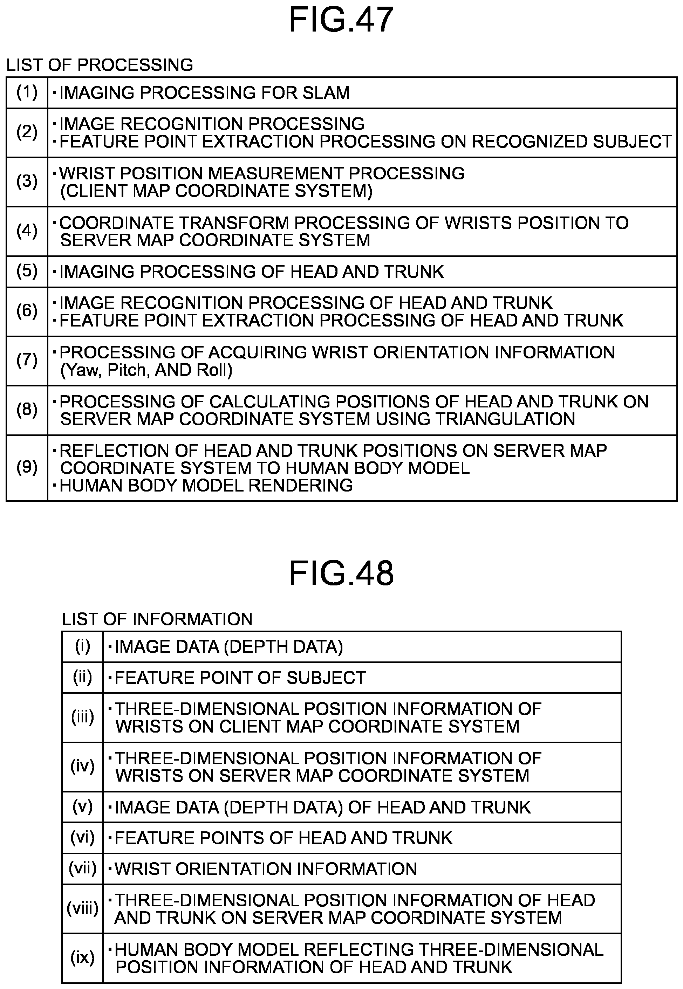

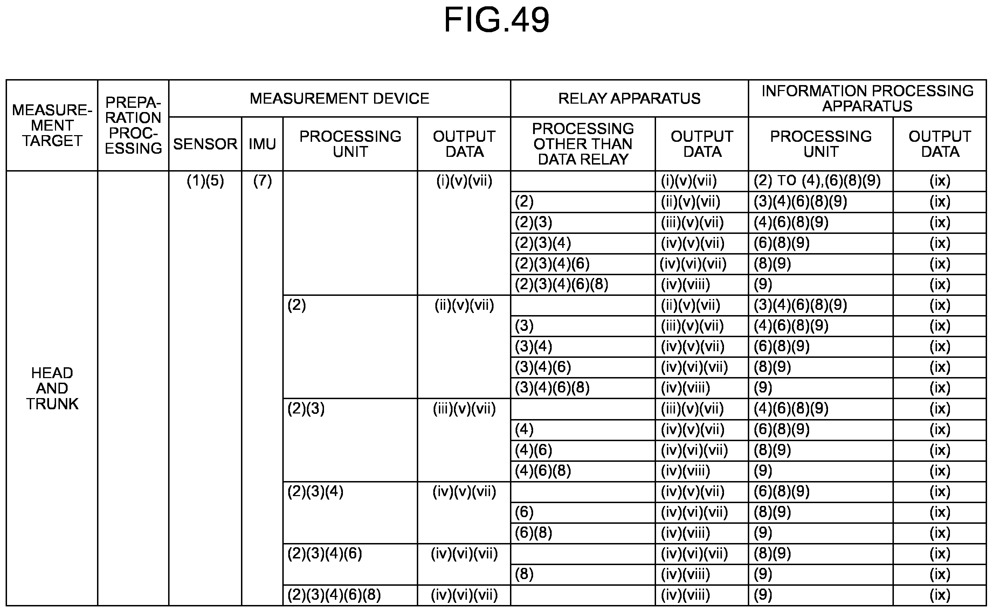

Here, for rearrangement, a list of processing for implementing the above-described functions is illustrated in FIGS. 38, 41, 42, and 46, a list of output data of each process is illustrated in FIGS. 39, 42, 45, and 48, and a list of combination variations of units that execute each processing is illustrated in FIGS. 40, 43, 46, and 49. Note that FIGS. 38 to 40 illustrate a case where the position of the wrist is measured and reflected on the human body model such as the avatar, FIGS. 41 to 43 illustrate a case where the positions of the elbow and the shoulder are measured and reflected on the human body model such as the avatar, FIGS. 44 to 46 illustrate a case where the positions of the knees and the ankles are measured and reflected on the human body model such as the avatar, and FIGS. 47 to 49 illustrate a case where the positions of the head and the trunk are measured and reflected on the human body model such as the avatar.

As illustrated in FIGS. 38 to 49, the processing starting from the processing of measuring the position of each unit to the processing of reflecting and displaying the measured position on the human body model can be separated into a plurality of processing, and each separated processing may be executed in any of the measurement device 10, the relay apparatus 20, and the information processing apparatus 40. Note that the processing, output data, and combination variations illustrated in FIGS. 38 to 49 are examples, and are not limited to the above contents.

1.8 Modification of system configuration

Next, modifications of the system configuration of the body tracking system 1 according to the present embodiment will be described with some examples.

### 1.8.1 First modification

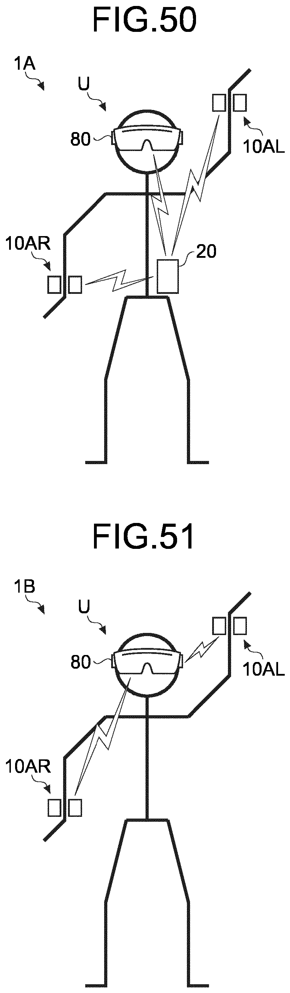

FIG. 50 is a schematic diagram illustrating a schematic configuration example of a body tracking system according to a first modification. As illustrated in FIG. 50, a body tracking system 1A according to the first modification may have a configuration without the communication apparatus 30, the information processing apparatus 40, and the display apparatus 50, and including, instead of these, a Head Mounted Display (HMD) 80 having these functions to be attached to the head of the user U.

### 1.8.2 Second modification

FIG. 51 is a schematic diagram illustrating a schematic configuration example of a body tracking system according to a second modification. As illustrated in FIG. 51, the second modification uses a body tracking system 1B having a configuration similar to that of the body tracking system 1A according to the first modification. However, in this configuration, the relay apparatuses 20 are omitted, and each measurement device 10 is configured to directly transmit and receive data to and from the HMD 80. In this manner, the relay apparatus 20 may be omitted in the above-described embodiment and other modifications without being limited to the second modification.

### 1.8.3 Third modification

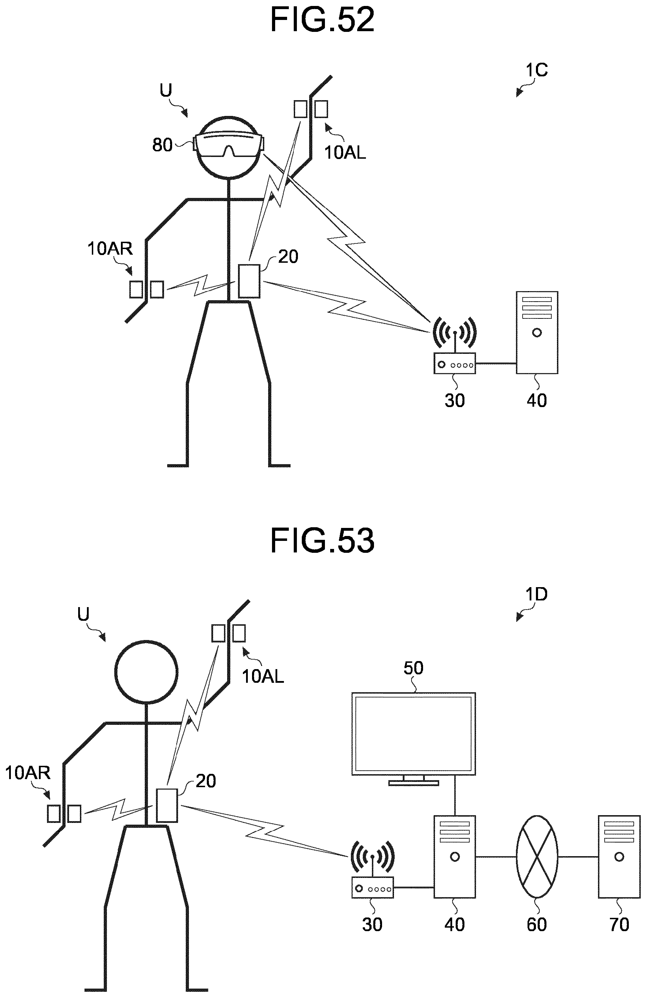

FIG. 52 is a schematic diagram illustrating a schematic configuration example of a body tracking system according to a third modification. As illustrated in FIG. 52, the third modification may use a body tracking system 1C including an HMD 80 instead of the display apparatus 50, with the HMD 80 and the information processing apparatus 40 communicating with each other via the communication apparatus 30.

### 1.8.4 Fourth modification

FIG. 53 is a schematic diagram illustrating a schematic configuration example of a body tracking system according to a fourth modification. As illustrated in FIG. 53, the fourth modification uses a body tracking system 1D having a configuration in which the information processing apparatus 40 is connected to a server (which may be a cloud or the like) 70 via a predetermined network 60. In such a configuration, a part or all of the processing executed in the information processing apparatus 40 described above may be executed in the server 70.

### 1.8.5 Fifth modification

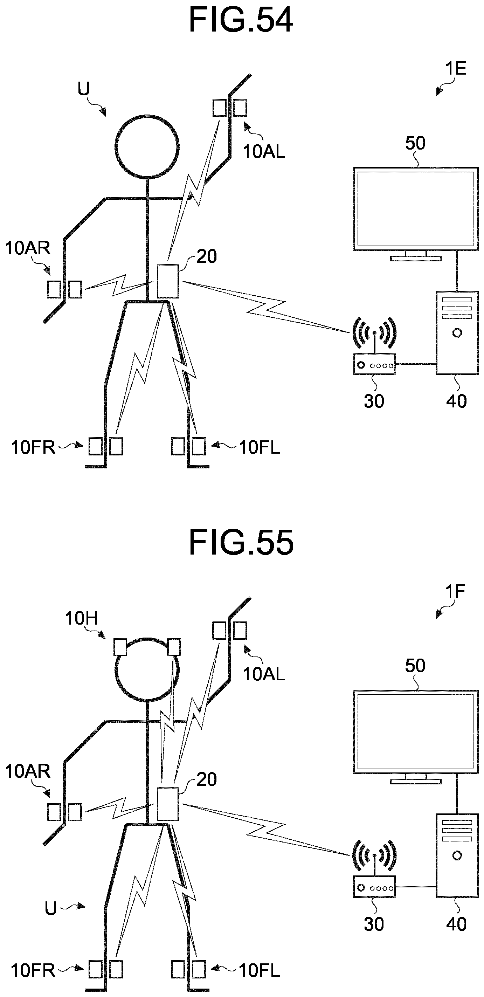

FIG. 54 is a schematic diagram illustrating a schematic configuration example of a body tracking system according to a fifth modification. As illustrated in FIG. 54, the fifth modification uses a body tracking system 1E further including two measurement devices 10FL and 10FR attached to both ankles, in addition to the two measurement devices 10AL and 10AR attached to both wrists of the user U. The two measurement devices 10FL and 10FR attached to both ankles may have the similar configuration as the measurement devices 10AL and 10AR, and may estimate the self-position by SLAM and acquire image data of each site of the user U. Such a configuration enables precise SLAM estimation of the positions of both ankles as well as both wrists, leading to achievement of body tracking with higher precision.

### 1.8.6 Sixth modification

FIG. 55 is a schematic diagram illustrating a schematic configuration example of a body tracking system according to a sixth modification. As illustrated in FIG. 55, the sixth modification uses a body tracking system 1F having a configuration similar to the body tracking system 1E according to the fifth modification and further including a measurement device 10H attached to the head of the user U. The measurement device 10H attached to the head may have a configuration similar to that of other measurement devices 10, estimate the self-position by SLAM, and acquire image data of each site of the user U. Such a configuration enables precise SLAM estimation of the positions of the head in addition to both wrists and both ankles, leading to achievement of body tracking with higher precision.

### 1.9 Brief summary

As described above, according to the present embodiment and the modification thereof, when there is free movement in the positions of the measurement device 10AL and the measurement device 10AR attached to the user U (for example, attached to the wrist), it is possible to estimate their positions and possible to measure the position of each site of the user U based on the estimated positions and the image data or the distance measurement result. Regarding the number of sites of the user U as the measurement target, it is possible estimate the positions of a larger number of sites than the number of the measurement devices 10. Positions of a large number of sites on the user U can be measured by a small number of measurement devices 10. For example, the n number of measurement devices 10 can detect the postures and motions of N sites more than n sites. It is possible to suppress the problem of discomfort in wearing and hindrance of user movement occurring in the user U, which have been caused conventionally by attaching a large device, or a large number of devices, on the user U. It is also possible to detect natural posture and motion.

2. Second embodiment

The second embodiment is different from the first embodiment in a position estimation method of each measurement device 10, for example, the measurement device 10AL and the measurement device 10AR. In the second embodiment, the measurement device 10AL and the measurement device 10AR estimate their self-positions by capturing an image of a marker (described in detail below) worn by the user U. Unlike the first embodiment, there is no need for the measurement device 10AL and the measurement device 10AR to perform SLAM. Similarly to the first embodiment, the position of each site of the user U is measured by triangulating the position of each site of the user U using the measurement device 10AL and the measurement device 10AR after the position estimation, for example. Since the measurement device 10AL and the measurement device 10AR do not need to use the SLAM technology, only a small amount of calculation is needed for estimating their positions and measure the position of each site of the user U. It is also possible to reduce the processing volume of the entire system.

The marker in the second embodiment is denoted as a marker MZ to be distinguished from the marker MK in the first embodiment described above. The marker MZ may be any marker as long as the feature point can be extracted when the measurement device 10AL and the measurement device 10AR image the marker MZ. For example, the marker MZ may indicate a marker having a known size and fixed in the user U. The marker MZ may be a marker worn by the user U, or may be a marker having, as a feature point, a body surface portion of the user U, more specifically, a body surface portion whose position can be measured from the outside and whose shape is not deformed by the posture of the user U. Examples of the marker MZ that can be worn by the user U include wear such as a patterned portion (pattern or the like) of a bib, a plate, a belt, a sash, or a shirt. Examples of the body surface portion of the user U are portions such as a clavicle and a rib.

2.1 System configuration example

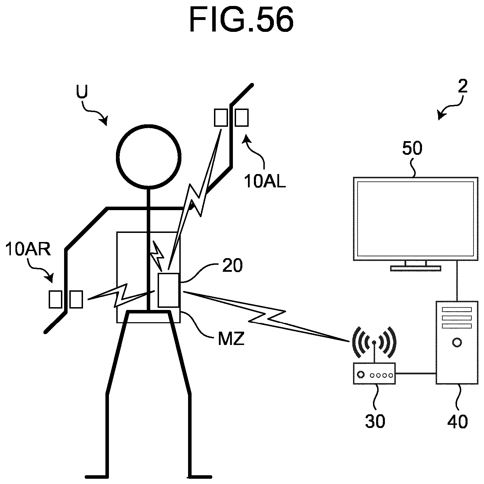

FIG. 56 is a schematic diagram illustrating a schematic configuration example of a body tracking system according to a second embodiment. Similarly to the first embodiment described above, the measurement device 10AL is attached to the left wrist of the user U, and the measurement device 10AR is attached to the right wrist of the user U. Compared to the first embodiment, a body tracking system 2 further includes the marker MZ. In this example, the marker MZ is fixed to the trunk of the user U.

The measurement devices 10AL and 10AR individually capture an image of the marker MZ using the sensor 111 (FIG. 2). The individual positions of the measurement devices 10AL and 10AR are estimated based on an imaging result, more specifically, for example, image data. The processing for estimating the position is executed by the processing unit 113, and a specific method thereof will be described below. Based on the estimated positions of the measurement device 10AL and the measurement device 10AR, the position of each site of the user U is measured using triangulation, for example, similarly to the first embodiment.

A position estimation method of the measurement device 10AL and the measurement device 10AR will be described. The measurement devices 10AL and 10AR attached to both wrists of the user U individually image the marker MZ. The position and posture (orientation) of the measurement device 10AL and the measurement device 10AR are individually estimated based on the image data acquired in this manner. In the example illustrated in FIG. 56, the measurement device 10AL and the measurement device 10AR are attached to the wrist of the user U, and thus, estimating the position and posture of the measurement device 10AL and the measurement device 10AR is to measure the positions of the wrists of the user U. A method of measuring the position of each site of the user U including the wrists will be described.

2.2 Position measurement method for each site

2.2.1 Wrists

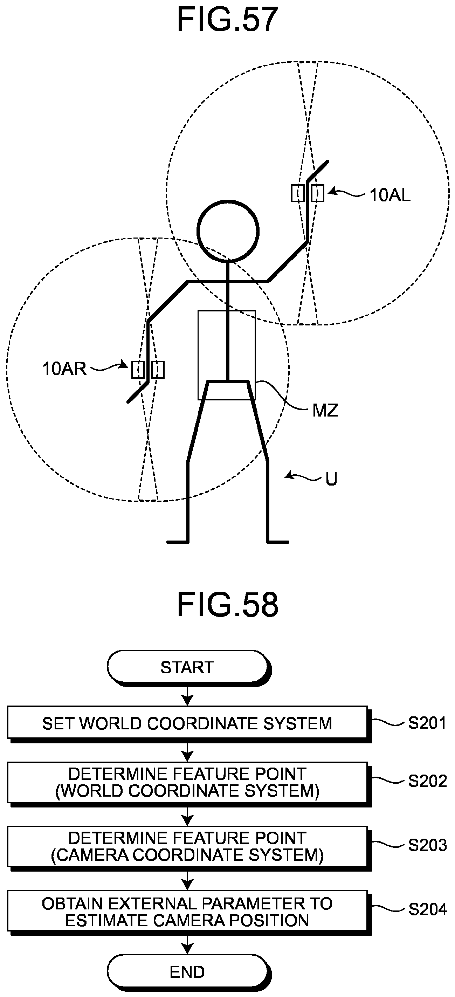

As described above, estimating the positions and postures of the measurement devices 10AL and 10AR is to measure the positions of the wrists of the user U. This will be described with reference to FIG. 57 as well.

FIG. 57 is a diagram for illustrating estimation of the position and posture of the measurement device. The user U wears the measurement devices 10AL and 10AR on their left and right wrists, respectively. A broken circle each illustrated around the measurement devices 10AL and 10AR indicates a detection range in which each measurement device 10 can detect an object similarly to FIG. 7, and substantially indicates that 360° around each measurement device is the detection range. Accordingly, the measurement device 10AL and the measurement device 10AR can individually image the marker MZ attached to the trunk of the user U. As will be described below, the positions of the measurement devices 10AL and 10AR (the positions in the world coordinate system based on the marker MZ) are estimated based on the image data including the feature point of the marker MZ. Since the measurement device 10 is attached to the wrist, the estimated positions of the measurement device 10AL and the measurement device 10AR are considered to be measured as the positions of the wrists.

In the present embodiment, the measurement device 10AL and the measurement device 10AR individually captures an image of the marker MZ and acquire image data of the marker MZ. Since the image data of the marker MZ having a known size has been obtained, the position and posture of the sensor 111 (for example, the camera) of each of the measurement device 10AL and the measurement device 10AR, and eventually the position and posture of each of the measurement device 10AL and the measurement device 10AR can be obtained by solving the Perspective-n-Point problem (PnP problem). Specifically, the relationship among (i) the position of the marker MZ on the world coordinate system (three-dimensional coordinates, world coordinate point), (ii) the position of the marker MZ in the captured image (two-dimensional coordinate, image coordinate point), (iii) the external parameters of the camera, and (iv) the internal parameters of the camera is described using a determinant as in the following Formula (4), for example.

$$
S\begin{bmatrix} u \\ v \\ 1 \end{bmatrix} = \underbrace{\begin{bmatrix} f_x & 0 & c_x \\ 0 & f_y & c_y \\ 0 & 0 & 1 \end{bmatrix}}_{\text{Internal parameter}} \times \underbrace{\begin{bmatrix} \gamma_{11} & \gamma_{12} & \gamma_{13} & t_1 \\ \gamma_{21} & \gamma_{22} & \gamma_{23} & t_2 \\ \gamma_{31} & \gamma_{32} & \gamma_{33} & t_3 \end{bmatrix}}_{\text{External parameter}} \times \begin{bmatrix} X_w \\ Y_w \\ Z_w \\ 1 \end{bmatrix} \tag{4}
$$

where $\begin{bmatrix} u \\ v \\ 1 \end{bmatrix}$ is the **Image coordinate point** and $\begin{bmatrix} X_w \\ Y_w \\ Z_w \\ 1 \end{bmatrix}$ is the **World coordinate point**.

(i) Since the coordinates of the feature points P1 to P4 of the marker MZ in the world coordinate system are known, the position of the marker MZ in the world coordinate system can be obtained. (ii) The measurement device 10AL and the measurement device 10AR individually capture an image of the marker MZ, and the position of the marker MZ, within the captured image is obtained. (iv) The internal parameter of is a value specific to the camera used for imaging, and thus, is known. Therefore, the external parameter (translation vector t and rotation vector r) of (iii) can be obtained by calculation. This makes it possible to obtain, that is, estimate the position and orientation of the camera (the orientation of the optical axis of the lens provided in the camera) when the marker MZ is imaged. The positions and orientations of the measurement devices 10AL and 10AR can also be estimated. This will be described with reference to FIGS. 57 to 59 as well.

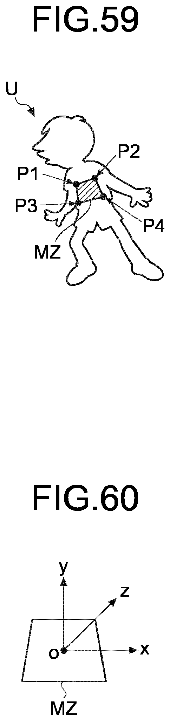

FIG. 58 is a flowchart illustrating an example of processing of estimating a position and a posture of the measurement device. FIG. 59 is a view illustrating an example of a marker (for example, a bib or a plate) attached to the user, and FIG. 60 is a view illustrating an example of a world coordinate system set with the marker as a reference.

In the present example, for example, as illustrated in FIG. 59, a marker MZ is attached to the trunk of the user U. Four corners of the marker MZ can be feature points P1 to P4 for specifying the shape, region, extending plane, and the like of the marker MZ.

As illustrated in FIG. 58, a first step of the present operation is to set a reference coordinate system (world coordinate system) based on the marker MZ attached to the trunk of the user U (step S201). For example, as illustrated in FIG. 60, the origin o of the world coordinate system is placed in a region including the marker MZ to set the world coordinate system in which the horizontal direction on an extending surface of the marker MZ is defined as the x direction, the vertical direction is defined as the y direction, and the vertical direction with respect to the extending plane of the marker MZ is defined as the z direction.

Next, the positions (three-dimensional coordinates) of the feature points P1 to P4 of the marker MZ are determined on the world coordinate system (step S202). In other words, the size of the marker MZ and the positional relationship of the plurality of feature points (in this example, the feature points P1 to P4) included in the marker MZ are known, and thus, these pieces of information are used to express the positions of the plurality of feature points included in the marker MZ in the world coordinate system. This processing corresponds to processing of obtaining a third term on the right side of above Formula (4). Note that, in the case of the present example, since the feature points P1 to P4 of a bib MZ exist in the extending plane of the marker MZ, the z coordinate of the feature points P1 to P4 in the world coordinate system is '0'.

Next step is to determine the positions of the feature points P1 to P4 of the marker MZ in the camera coordinate system. Specifically, the image data of the marker MZ obtained by each of the measurement device 10AL and the measurement device 10AR is used to obtain the positions of the feature points P1 to P4 of the marker MZ on the two-dimensional coordinate system (image coordinate system) of the captured image (step S203). This processing corresponds to processing of obtaining the left side of above Formula (4). The processing of extracting the feature points P1 to P4 from the image data can use, for example, processing of extracting a target region in units of pixels by semantic segmentation and detecting vertices in the extraction region.

Next, for example, in a case where three corresponding points have been obtained, it is possible to estimate the external parameter by solving a nonlinear equation. This leads to estimation of the camera position, that is, the positions of the measurement devices 10AL and 10AR (step S204). The external parameters are vectors when the marker MZ is imaged, including: a translation vector t from the origin to the camera position; and a rotation vector r for rotation of the orientation of the camera in the world coordinate system. These vectors is considered to be vectors representing the translation degree and direction of the origin of the local coordinate system (camera coordinate system and client coordinate system) with the camera as the origin from the world coordinate system and representing a rotation degree and direction of the coordinate axes of the local coordinate system from the coordinate axes of the world coordinate system.

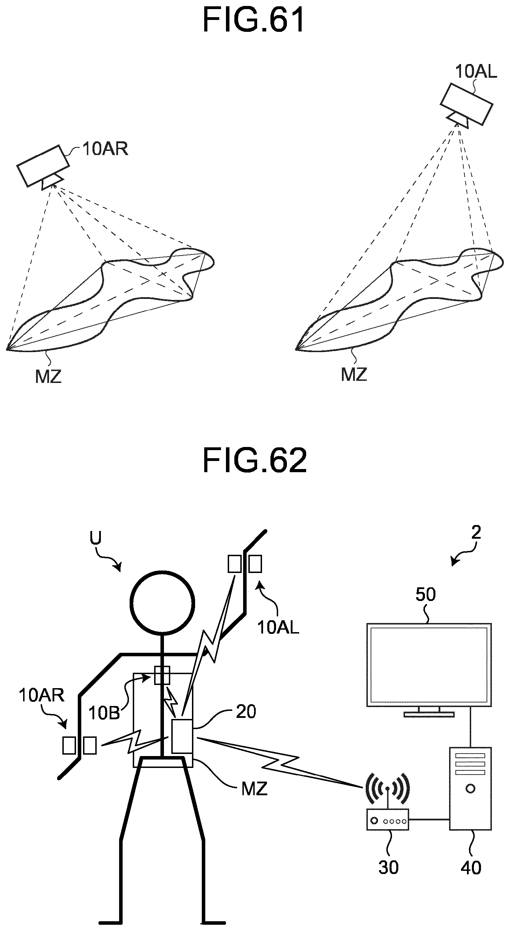

As described in the first embodiment, obtaining three or more corresponding feature points enables integration of the camera coordinate system and the world coordinates whose limitation is defined by the marker MZ or the like. That is, the coordinate system is integrated across the measurement devices 10AL and 10AR attached to the left and right wrists of the user U. In other words, the individual self-positions are obtained on the similar world coordinate system, as the self-positions of the measurement devices 10AL and 10AR. This will be described with reference to FIG. 61 as well.

FIG. 61 is a diagram for illustrating coordinate integration. The measurement device 10AL and the measurement device 10AR have a substantially 360° FOV capability, and constantly image the marker MZ and each body part of the user U. The measurement device 10AL obtains the position of the marker MZ included in the captured image in the image coordinate system, and solves the above-described PnP problem based on the position, thereby constantly obtaining the self-position of the measurement device 10AL in the reference coordinate system (world coordinate system) based on the marker MZ. Similarly, the measurement device 10AR obtains the position of the marker MZ included in the captured image in the image coordinate system, and solves the PnP problem based on the position, thereby constantly obtaining the self-position of the measurement device 10AR in the reference coordinate system (world coordinate system) based on the marker MZ. That is, both the measurement device 10AL and the measurement device 10AR image the same marker MZ and constantly obtain the self-position in the reference coordinate system (world coordinate system) based on the same marker MZ. In other words, the individual self-positions are constantly obtained on the similar world coordinate system, as the self-positions of the measurement devices 10AL and 10AR.

There are cases where position of the marker MZ move or does not move. First, a case where the position of the marker MZ does not move will be described. For example, one assumable application is an application of performing body tracking in a state where the user U has no movement or does not move the trunk portion to which the marker MZ is attached. The position of the marker MZ is fixed and thus is known. When the user U moves the wrist, the self-positions of the measurement device 10AL and the measurement device 10AR are estimated so as to track the movement. Specifically, as described above, the self-positions of the measurement device 10AL and the measurement device 10AR are estimated by solving the PnP problem based on the feature point of the marker MZ in the image data acquired by the measurement device 10AL. In other words, positions and their orientations (for example, the orientation of the optical axis of the lens) of the measurement devices 10AL and 10AR in the world coordinate system are obtained. Each site of the user U is captured by both the measurement device 10AL and the measurement device 10AR. In other words, an image of each site of the user U is captured by both the measurement device 10AL and the measurement device 10AR. In addition, the positions of the measurement devices 10AL and 10AR in the world coordinate system and the orientations thereof (for example, the orientation of the optical axis of the lens) at image capturing of each site of the user U have been obtained. Using the above information, the position of each site of the user U captured by both the measurement devices 10AL and 10AR is measured using triangulation.

Next, a case where the position of the marker MZ moves will be described. For example, one conceivable application is an application of performing body tracking in a state where the user U has a movement or has a change in the posture of the user U, including the trunk portion to which the marker MZ is attached. In this case, it is allowable to attach a measurement device 10 (measurement device 10B described below) to the user U in a state where there is no change in the positional relationship with the marker MZ. Only this single measurement device may use the SLAM technique, whereby the position of the marker MZ moving together with the measurement device is grasped (to be known). Therefore, even when the marker MZ moves, it is possible to estimate each self-position of the measurement device 10AL and the measurement device 10AR. This will be described with reference to FIG. 62 as well.

FIG. 62 is a schematic diagram illustrating a schematic configuration example of a body tracking system. In this example, the body tracking system 2 further includes a measurement device 10B attached to the trunk of the user U. The functional configuration of the measurement device 10B may be, for example, similar to that of the measurement device 10 described above with reference to FIG. 2 and the like in the first embodiment. The measurement device 10B may be attached to the user U so as to have no positional relationship relative to the marker MZ. For example, the measurement device 10B and the marker MZ may be fixed to the same rigid member.

The measurement device 10B may be configured to be able to perform SLAM, for example, and the self-position of the measurement device 10B on the three-dimensional map may be estimated by SLAM. The processing performed by the SLAM may be similar to that of the first embodiment or their modifications described above, and thus the description thereof will be omitted here. The measurement device 10B and the marker MZ are fixed to suppress a change in their positional relationship. Therefore, even when the position of the marker MZ moves, the position of the marker MZ can be grasped by obtaining the position of the measurement device 10B. The positions of the measurement device 10AL and the measurement device 10AR with respect to the position of the marker MZ after the movement can be grasped similarly to the above-described case where there is no movement of the marker MZ. The positions of the measurement device 10AL and the measurement device 10AR with respect to the position of the marker MZ after the movement can be grasped, and both the position of the marker MZ before the movement and the position of the marker MZ after the movement can be grasped. As a result, even when the marker MZ moves, it is possible to grasp the positions of the measurement rule device 10AL and the measurement device 10AR with respect to the position of the marker MZ before the movement. That is, even when the marker MZ moves, it is possible to grasp the positions of the measurement device 10AL and the measurement device 10AR in the world coordinate system before the marker MZ moves. Subsequently, by capturing each site of the user U using both the measurement device 10AL and the measurement device 10AR whose position is obtained in the world coordinate system, in other words, by capturing an image of each site of the user U by both the measurement device 10AL and the measurement device 10AR, the position of each site of the user U captured by both the measurement device 10AL and the measurement device 10AR is measured using triangulation based on information obtained by the imaging.

The positions of both wrists of the user U can be measured by estimating the positions of the measurement devices 10AL and 10AR. A technique such as triangulation may be used to measure the position of each site of the user U other than both wrists similarly to the first embodiment and the modification thereof. The redundant description will be omitted as appropriate.

### 2.2.2 Elbows and shoulders

As described above, the positions of both wrists of the user U can be estimated and eventually measured based on the image data including the feature points of the bib MZ acquired individually by the measurement devices 10AL and 10AR. Accordingly, the positions of both elbows and both shoulders of the user U can be measured using a method similar to the method described with reference to FIG. 8 in the first embodiment.

### 2.2.3 Knees and ankles

The method of measuring the positions of the knees and the ankles may be similar to the measurement method described in the first embodiment with reference to FIG. 9.

### 2.2.4 Head and trunk

The method of measuring the positions of the head and the trunk may be similar to the measurement method described with reference to FIG. 11 in the first embodiment described above.

### 2.2.5 Another method of measuring position of each site

Similarly to the first embodiment described above, at least one sensor 111 in at least one of the measurement device 10AL and the measurement device 10AR may be a distance measurement sensor. By using depth data acquired by the sensor 111, it is possible to measure the position of each site of the user U with respect to the measurement devices 10AL and 10AR. The position measurement using the distance measurement sensor is as described in the first embodiment with reference to FIG. 12.

2.2.6 Method of measuring shape of hand/fingers

The measurement method of the shape of the finger of the user U may be similar to the measurement method described with reference to FIGS. 13 to 16 in the above-described first embodiment.

2.3 Coordinate system

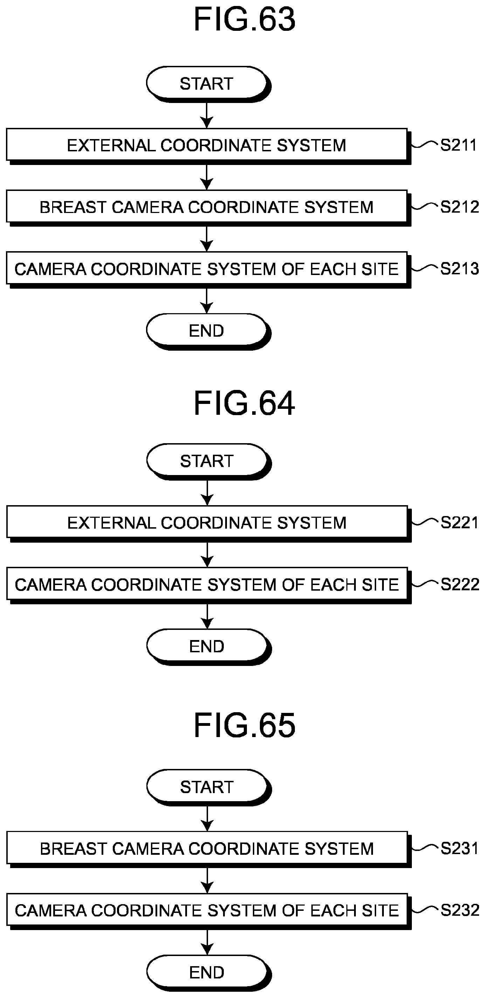

Next, a procedure for transforming the camera coordinate system of each measurement device 10 worn by the user U will be described with some examples. In FIGS. 63 to 65, a step on the originating point side of the arrow indicates the coordinate system before transformation, and a step on the front side of the arrow indicates the coordinate system after transformation. Furthermore, a camera coordinate system of the measurement device 10B attached to the trunk of the user U to be distinguished from other camera coordinate systems is denoted as a breast camera coordinate system.

(First example)

A first example will be described as a procedure, using external coordinates as an absolute reference, of transforming the coordinates to the camera coordinate system of the measurement device 10 attached to each site via the measurement device 10 (for example, the measurement device 10B) that images the outside of the user U.

FIG. 63 is a diagram for illustrating a transformation procedure according to the first example. As illustrated in FIG. 63, in the first example, first, the three-dimensional coordinates of the external coordinate system are transformed into the three-dimensional coordinates of the breast camera coordinate system (steps S211 to S212). The external coordinate system may be a coordinate system having a specific position (for example, the position of a marker fixed to the external environment) in the real space as an origin.

Next, the three-dimensional coordinates of the breast camera coordinate system are transformed into the camera coordinate system of the measurement device 10 attached to each site (in the present example, both wrists) of the user U (steps S212 to S213).

In such a procedure, the world coordinate system described above may be either the external coordinate system or the breast camera coordinate system.

(Second example)

A second example will be described as a procedure, using external coordinates as an absolute reference, of directly transforming the coordinates to the camera coordinate of the measurement device 10 attached to each site of the user U. In this case, the measurement device 10 of each site needs to capture an image of a reference (for example, a marker or the like) fixed in the real space.

FIG. 64 is a diagram for illustrating a transformation procedure according to the second example. As illustrated in FIG. 64, in the second example, the three-dimensional coordinates of the external coordinate system are directly transformed into the camera coordinate system of the measurement device 10 attached to each site (in the present example, both wrists) of the user U (steps S221 to S222).

In such a procedure, the world coordinate system described above may be an external coordinate system.

(Third example)

A third example will be described as a procedure of transforming the camera coordinates of the measurement device 10 attached to each site (in the present example, both wrists) of the user U using coordinate transform with relative coordinates from the measurement device 10B attached to the trunk. In this case, it is not possible to measure the absolute coordinates of each site on which the measurement device 10 is attached, and thus, it is desirable to use this procedure for an application that performs body tracking under a situation where there is no great movement in the center of the body of the user U.

FIG. 65 is a diagram for illustrating a transformation procedure according to the third example. As illustrated in FIG. 65, in the third example, the three-dimensional coordinates of the breast camera coordinate system are directly transformed into the camera coordinate system of the measurement device 10 attached to each site (in the present example, both wrists) of the user U (steps S231 to S232).

In such a procedure, the above-described world coordinate system may be the breast camera coordinate system.

In the present embodiment, there are coordinates when the measurement device 10AL or the measurement device 10AR images the front side (front surface) of the body of the user U and coordinates when the back side (back surface) of the body of the user U is imaged, and it is necessary to grasp the relationship between these cases. For example, in a case where the user U wearing the measurement device 10AL and the measurement device 10AR on the left and right wrists is running, one wrist is located on the front side of the body and the other wrist is located on the back side of the body. The sensor 111 (for example, a camera) of each of the measurement device 10AL and the measurement device 10AR has a FOV of 360°. Therefore, even when the wrist of the user U is located on either the front side or the back side of the body, each of the measurement device 10AL and the measurement device 10AR can constantly image both the left and right feet of the user U. However, the marker MZ attached to the front side of the body of the user U cannot be imaged from the back side of the body of the user U. Therefore, the marker MZ is also attached to the back side of the body of the user U so as to enable imaging of the marker MZ also from the back side of the body of the user U.

For example, there is a conceivable case where one of the measurement devices 10AL and 10AR attached to the left and right wrists of the user U captures an image of the front side of the body of the user U and the other captures an image of the back side of the body of the user U, or a case where one of the measurement devices moves from the front side to the back side of the body of the user U. The camera coordinates of each of the measurement device 10AL and the measurement device 10AR include coordinates when the marker MZ is viewed (captured) from the front side of the body of the user U and coordinates when the marker MZ is viewed from the back side of the body of the user U. These two coordinates need to be integrated into one coordinate system by a method such as transforming the coordinate systems into one of the two coordinate systems, for example. The conceivable methods of integrating the camera coordinate system include the following two methods.

A first method will be described as an exemplary case where the user U wears a rigid member such as a belt or a protector extending from the front side to the back side of the body. The rigid member should be provided as a member extends from the front side to the back side of the body of the user U and has a known shape. In this case, by placing a first marker MZ for the front side of the body on the front side and placing the second marker MZ for the back side of the body on the back side, the positional relationship between the first marker MZ for the front side and the second marker MZ for the back side is constantly fixed and known (can be measured in advance). As a result, for example, in a case where the wrist and the measurement device 10AL or the measurement device 10AR are present on the back side of the body, it is possible transform the position of the measurement device 10AL or the measurement device 10AR, which is obtained by imaging the second marker MZ on the back side of the body and being a position represented in the second world coordinate system having its origin in the region of the marker MZ on the back side of the body, into coordinates represented in the first world coordinate system having its origin in the region of the marker MZ on the front side of the body.

A second method will be described. In a conceivable case, the first marker MZ is fixed to the front side (chest side) of the user U, and the second marker MZ is fixed to the back side (back side) of the user U. The positional relationship between the first marker MZ and the second marker MZ is unknown. Taking the measurement device 10AL as an example, the first marker MZ is once imaged from the front side of the user U by the wrist and the measurement device 10AL attached thereto, and based on this, the self-position of the measurement device 10AL when the first marker MZ is imaged, the self-position being represented in the first world coordinate system having its origin in the region of the first marker MZ, is obtained. Together with this, the second marker is once imaged from the back side of the user U by the wrist and the measurement device 10AL attached thereto, and based on this, the self-position of the measurement device 10AL when the second marker is imaged, the self-position being represented in the second world coordinate system having its origin in the region of the second marker MZ. In addition, by measuring a change in the position and orientation of the measurement device 10AL from the point at which the first marker MZ is imaged to the point at which the second marker MZ is imaged by the IMU 112 included in the measurement device 10AL, it is possible to grasp a relationship between a specific position (the position of the measurement device 10AL when the first marker MZ is imaged) represented in the first world coordinate system and a specific position (the position of the measurement device 10AL when the second marker MZ is imaged) represented in the second world coordinate system. With this relationship once grasped, the coordinates of the measurement device 10AL, which has been obtained by imaging the second marker MZ and now represented in the second world coordinate system, can all be freely represented by the coordinates represented in the first world coordinate system. The similar applies to imaging using the measurement device 10AR.

2.4 Combination variation of units that execute each processing

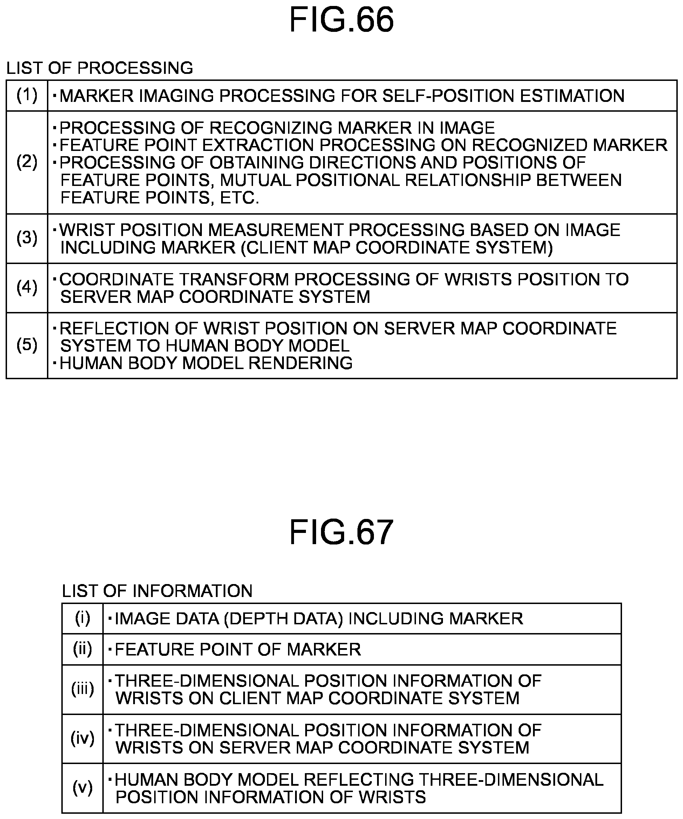

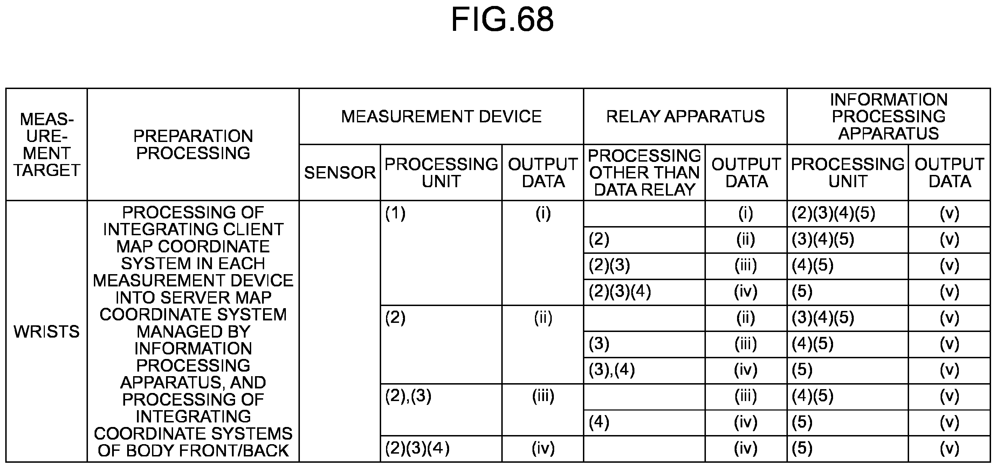

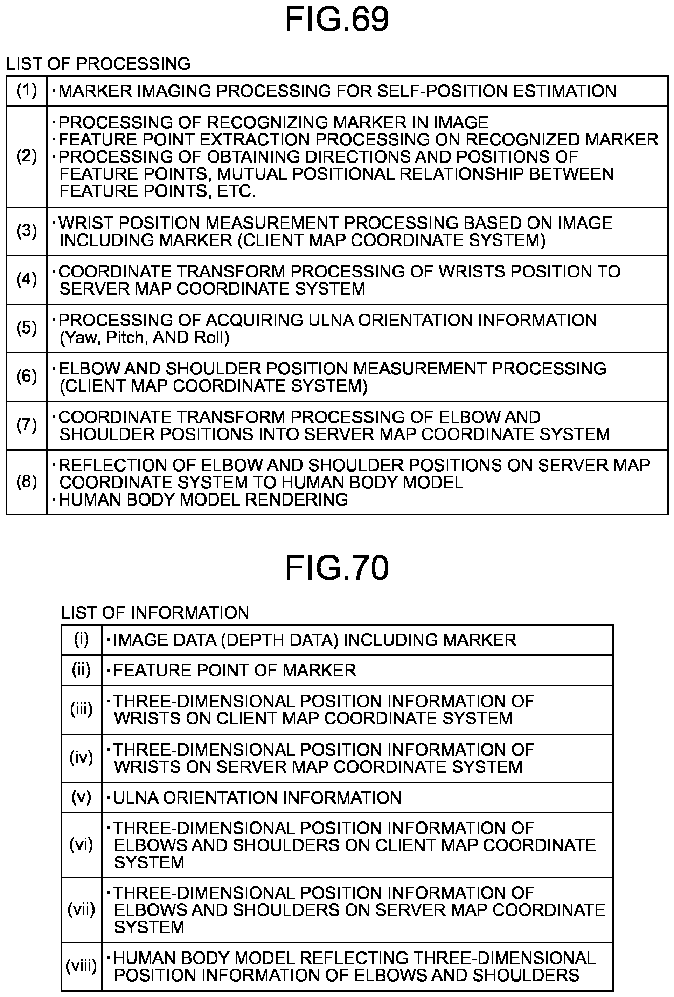

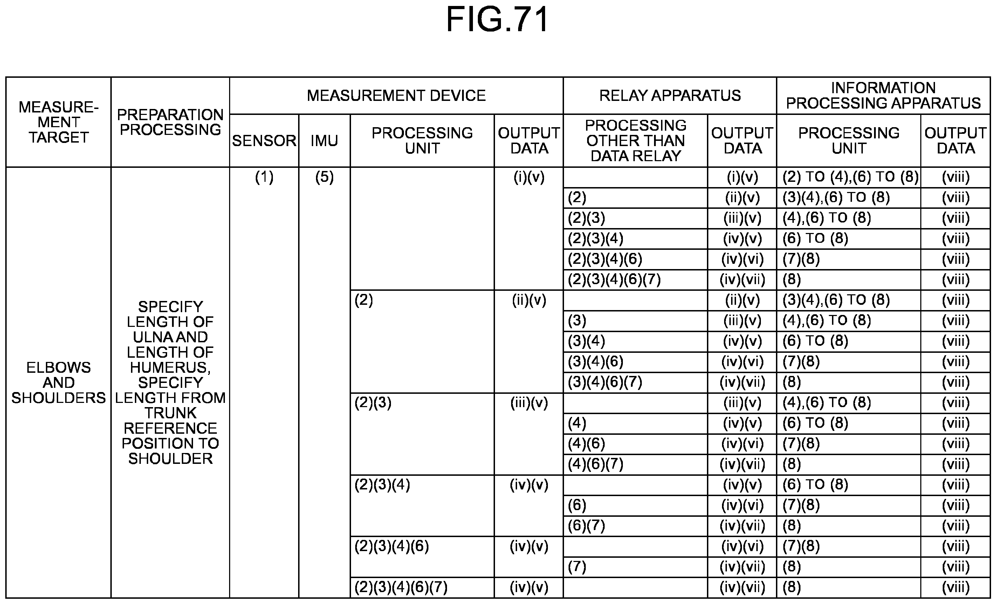

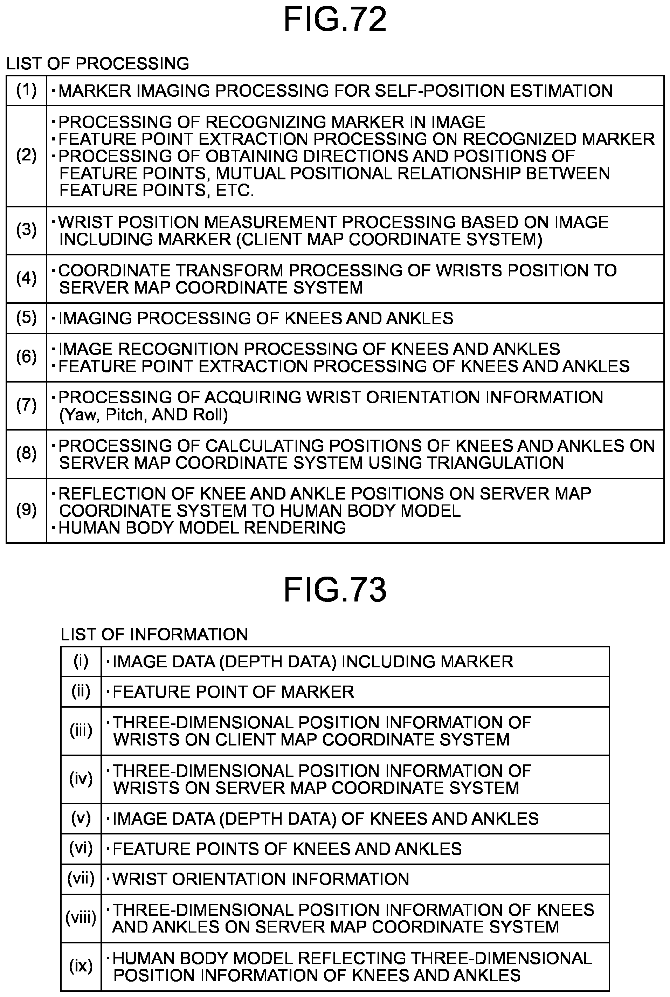

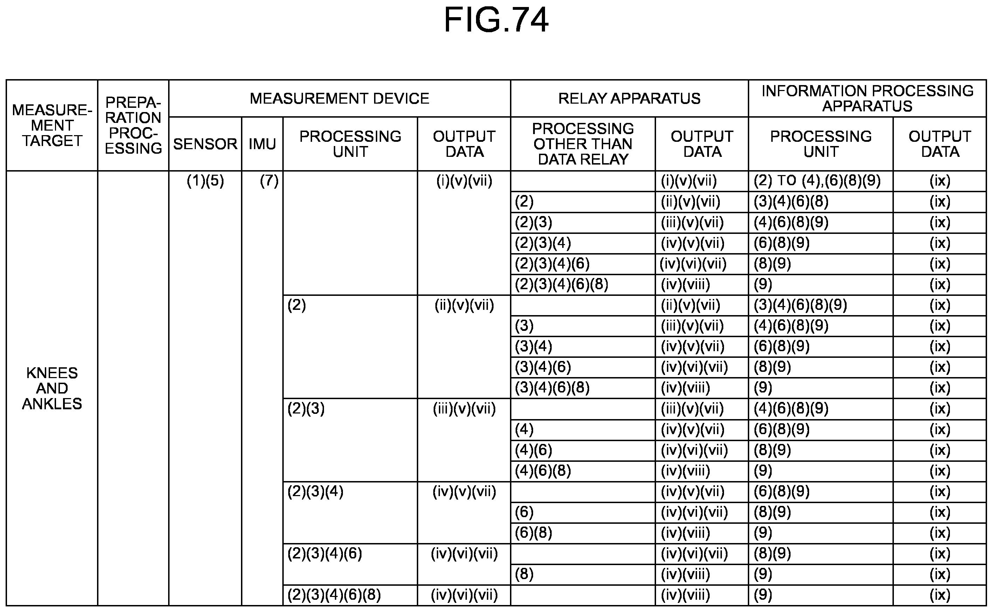

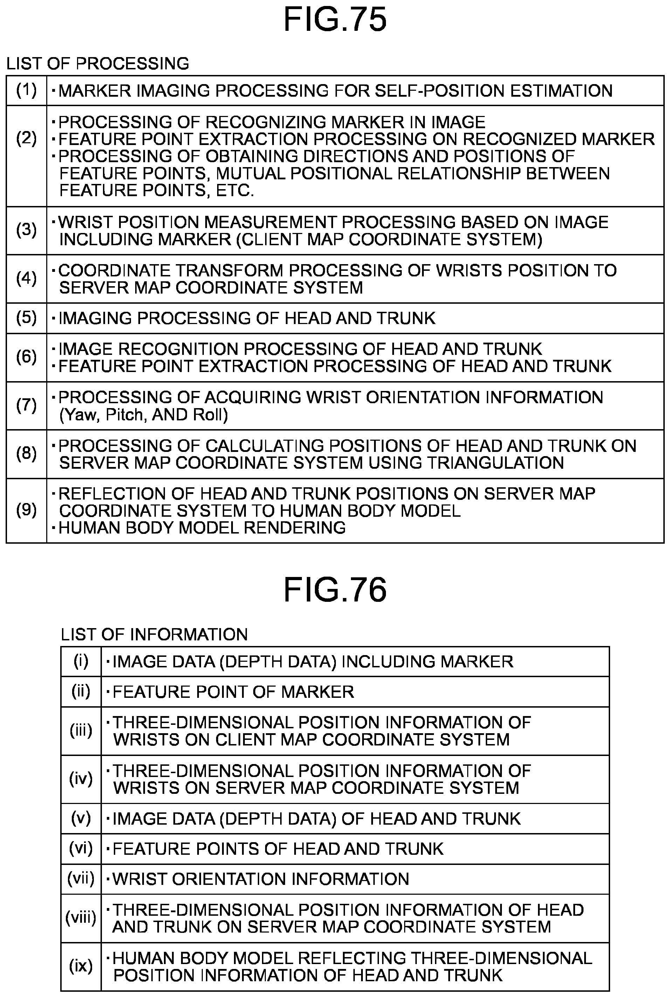

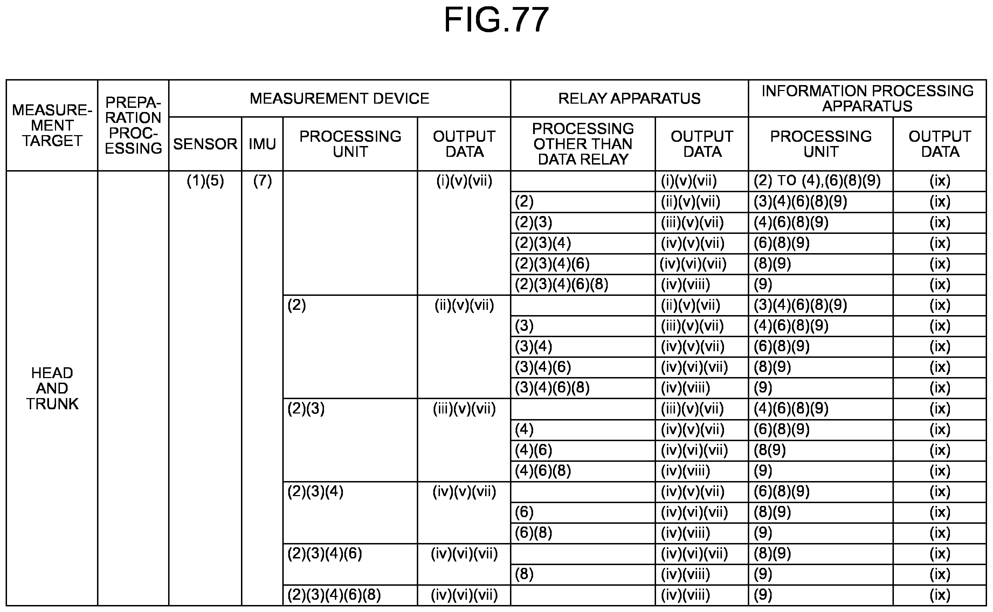

Here, for rearrangement, a list of processing for achieving the above-described functions is illustrated in FIGS. 66, 69, 72, and 75, a list of output data of each processing is illustrated in FIGS. 67, 70, 73, and 76, and a list of combination variations of units that execute each processing is illustrated in FIGS. 68, 71, 74, and 77. Note that FIGS. 66 to 68 illustrate a case where the position of the wrist is measured and reflected on the human body model such as the avatar, FIGS. 69 to 71 illustrate a case where the positions of the elbows and the shoulders are measured and reflected on the human body model such as the avatar, FIGS. 72 to 74 illustrate a case where the positions of the knees and the ankles are measured and reflected on the human body model such as the avatar, and FIGS. 75 to 77 illustrate a case where the positions of the head and the trunk are measured and reflected on the human body model such as the avatar.

As illustrated in FIGS. 66 to 77, the processing starting from the processing of measuring the position of each unit to the processing of reflecting and displaying the measured position on the human body model can be separated into a plurality of processing, and each separated processing may be executed in any of the measurement device 10, the relay apparatus 20, and the information processing apparatus 40. Note that the processing, output data, and combination variations illustrated in FIGS. 66 to 77 are examples, and are not limited to the above contents.

2.5 Modification of system configuration

Next, modifications of the system configuration of the body tracking system 2 according to the present embodiment will be described with some examples.

2.5.1 First modification

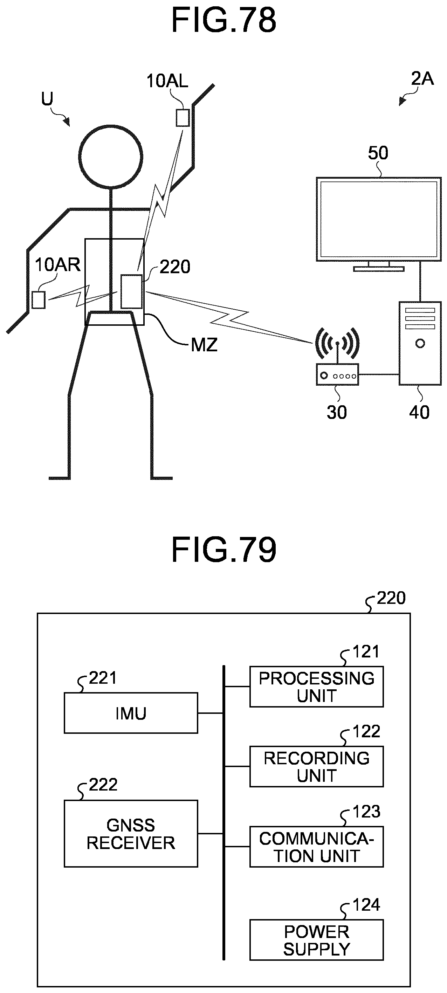

FIG. 78 is a schematic diagram illustrating a schematic configuration example of a body tracking system according to a first modification. FIG. 79 is a block diagram illustrating a schematic configuration example of a relay apparatus according to the first modification. In the second embodiment described above, the measurement device 10B is provided as means of detecting the movement of the body and the change in posture of the user U. In the first modification, the relay apparatus 220 includes an IMU 221 and a GNSS receiver 222 as means of detecting the movement of the body and the change in posture of the user U, and detects the movement of the body and the change in posture of the user U using these units.

As illustrated in FIG. 78, a body tracking system 2A according to the first modification has a configuration similar to that of FIG. 62 described above. However, in this configuration, the measurement device 10B attached to the trunk of the user U is omitted and the relay apparatus 20 attached to the user U is replaced with a relay apparatus 220.

The positional relationship between the marker MZ and the relay apparatus 220 is maintained at a constant positional relationship. For example, both the relay apparatus 220 and the marker MZ may be attached to the body surface of the user U, being a body surface having a nondeformable shape (for example, chest). The user U may wear a rigid member and fix both the relay apparatus 220 and the marker to the rigid member. The relay apparatus 220 attached to the body surface of the user U (for example, chest), being the body surface having a nondeformable shape, may also serve as the marker MZ. The user U may wear fixing means that fixes an object to the body of the user U and fix the relay apparatus 220 to the fixing means, so as to allow the fixed relay apparatus 220 to serve as the marker MZ.

As illustrated in FIG. 79, in addition to the configuration similar to the relay apparatus 20 described with reference to FIG. 2 in the first embodiment, the relay apparatus 220 further includes the IMU 221 and the global navigation satellite systems (GNSS) receiver 222.

That is, in the first modification, the three-dimensional position of the relay apparatus 220 is specified based on a GNSS signal received by the GNSS receiver 222, and the posture of the relay apparatus 220 is estimated based on the 6DoF data detected by the IMU 221. In the first modification, the world coordinate system is set with the relay apparatus 220 as a reference. For example, it is allowable to set the world coordinate system in which the position of the relay apparatus 220 is the origin, the front direction of the relay apparatus 220 is the z direction, the horizontal direction parallel to the front surface is the x direction, and the vertical direction parallel to the front surface is the y direction.

By using the GNSS signal and the IMU 221 for setting the world coordinate system in this manner, it is possible to omit position estimation using the SLAM, enabling further reduction of the processing amount of the entire system.

In the first modification, for example, three or more feature points (for example, a corner or the like of the relay apparatus 220) in the relay apparatus 220 may be used for integrating the camera coordinate system and the world coordinate system of each measurement device 10.

As compared with the second embodiment including the measurement device 10B, the first modification uses the IMU 221 and the GNSS as means of detecting the movement of the body and the change in posture of the user U. The first modification needs a less amount of calculation required to detect the movement of the body and the change in posture of the user U than in the second embodiment in which the SLAM is performed by imaging the outside world as means of detecting the movement of the body and the change in posture of the user U.

2.5.2 Second modification

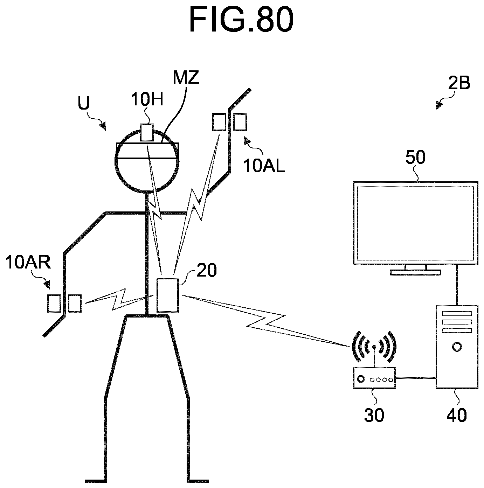

FIG. 80 is a schematic diagram illustrating a schematic configuration example of a body tracking system according to a second modification. As illustrated in FIG. 80, the body tracking system 2B according to the second modification has a configuration similar to FIG. 62 described above. However, in this configuration, the measurement device 10B attached to the trunk of the user U is changed to a measurement device 10H attached to the head of the user U.

When the measurement device 10H serving as a reference is attached to the head in this manner, the marker MZ used for setting the world coordinate system is provided on the head having no change in the positional relationship with the measurement device 10H. Examples of this marker MZ may include a characteristic site on the head of the user U, such as the eyes, nose, mouth, ears, or jaw of the user U, or a characteristic shape or figure worn or drawn on the user U, such as glasses, a hat (cap), a headband, or painting.

Note that the attachment site of the measurement device 10 serving as a reference is not limited to the trunk and the head, and may be another site such as the wrist and the ankle. In this case, the marker MZ for setting the world standard (reference) may be set at a site having no change in the positional relationship with the measurement device 10 serving as the standard (reference).

2.6 Brief summary

As described above, according to the present embodiments and their modifications, the self-positions of the measurement device 10AL and the measurement device 10AR can be estimated with the specific marker MZ as a reference. Therefore, similarly to the first embodiment and its modification described above, even in a case where the positions of the measurement device 10AL and the measurement device 10AR move freely, the position of each site of the user U can be measured. In addition, there is no need to always use the SLAM in the measurement device 10AL and the measurement device 10AR. Without the SLAM, it is more likely to enable reduction of the processing amount of the entire system.

3. Third embodiment

A third embodiment is different from the first embodiment and the second embodiment particularly in a position estimation method of each measurement device 10, for example, the measurement device 10AL and the measurement device 10AR. In the third embodiment, for example, the positions of the measurement device 10AL and the measurement device 10AR are measured using another measurement device 10 attached to the user U.

3.1 System configuration example

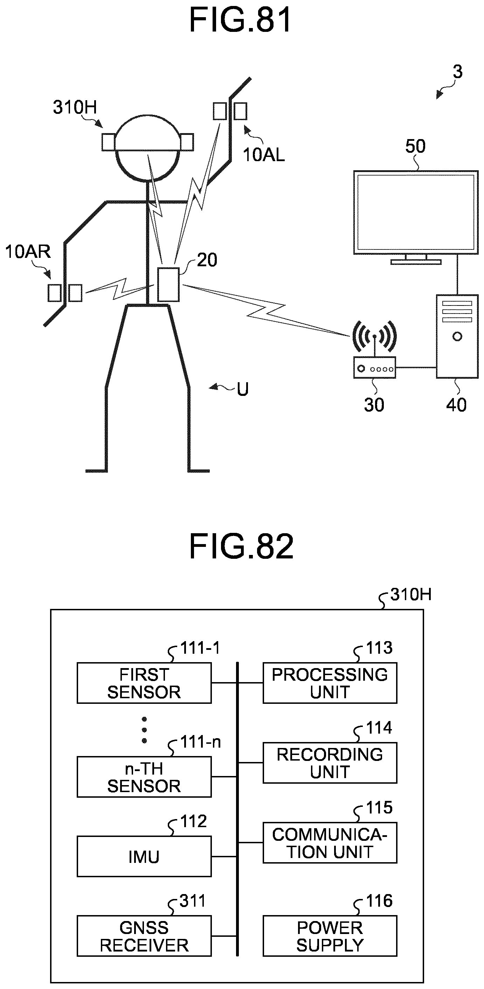

FIG. 81 is a schematic diagram illustrating a schematic configuration example of a body tracking system as an information processing system according to the present embodiment. FIG. 82 is a block diagram illustrating a schematic configuration example of a measurement device attached to a head according to the present embodiment.

As illustrated in FIG. 81, in addition to the configuration similar to the body tracking system 1 described with reference to FIG. 1 in the first embodiment, the body tracking system 3 further includes a reference measurement device 310H attached to the head (or trunk) of the user U.

In the present embodiment, the measurement device 10 (in the present example, the measurement device AL and the measurement device 10AR) attached to a site other than the head has a function of transmitting a positioning signal such as a beacon to the reference measurement device 310H. This signal may be, for example, a beacon in Bluetooth or the like. In this case, the signal transmitter may be implemented by using the communication unit 115 included in the measurement device 10. In the following description, for the sake of clarity, the signal for positioning is denoted as a beacon in Bluetooth.

For example, as illustrated in FIG. 82, the reference measurement device 310H has a configuration similar to that of the measurement device 10, receives a beacon transmitted from each measurement device 10, and measures an approximate position of each measurement device 10.

A plurality of sensors 111 in the reference measurement device 310H is each fixed at predetermined positions on an outer surface of the housing of the reference measurement device 310H so as to be able to image the entire circumference of the user U and capture the measurement device 10 attached to another site (both wrists in the present example) by two or more of the sensors 111. Each sensor 111 may be sensors such as an image sensor (including an IR sensor), a distance measurement sensor, EVS, a hybrid sensor similarly to the above-described embodiments or their modifications.

In such a configuration, the reference measurement device 310H captures an image of each measurement device 10 using two or more sensors 111 by utilizing beacons, as indicators, transmitted from the measurement devices 10, that is, the measurement devices 10AL and the measurement device 10AR attached to both wrists as clues. The position of each measurement device 10 with respect to the reference measurement device 310H imaged using two or more sensors 111 may be measured by triangulation using image data acquired by two or more sensors 111 of the reference measurement device 310H.

Note that, in a case where there is a measurement device 10 that is not captured by two or more sensors 111 of the reference measurement device 310H, the position of the measurement device 10 may be measured using 6DoF data detected by the IMU 112 included in the measurement device 10.

The position of the site equipped with the reference measurement device 310H may be estimated using, for example, 6DoF data detected by the IMU 112, may be estimated using SLAM or the like, or may be estimated by a GNSS receiver 311 provided as illustrated in FIG. 82.

The other sites may be measured using triangulation or the like, similarly to the above-described embodiments or their modifications.

3.1.1 Modification of system configuration

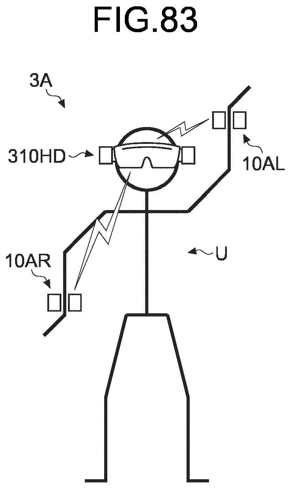

The reference measurement device 310H according to the present embodiment may include at least one of the functions of the relay apparatus 20, the communication apparatus 30, the information processing apparatus 40, and the display apparatus 50, like a reference measurement device 310HD in the body tracking system 3A illustrated in FIG. 83. When equipped with the function of the display apparatus 50, the reference measurement device 310HD may be provided in the form of an HMD.

3.2 Configuration example of measurement device attached to head

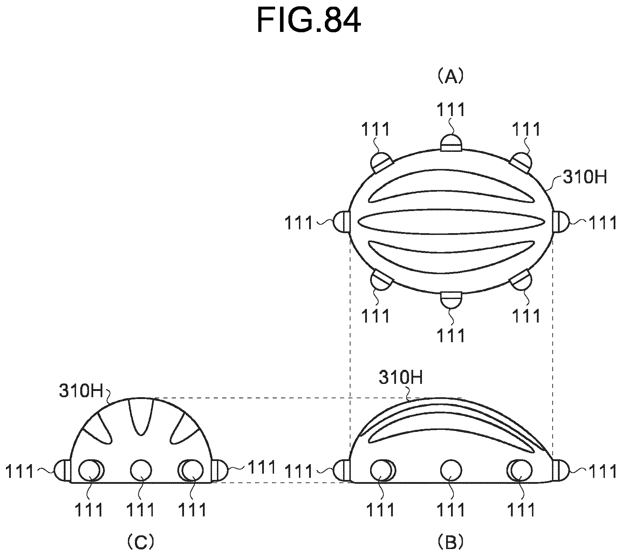

FIG. 84 is an external view illustrating a schematic configuration example of the measurement device attached to the head of the user according to the present embodiment, in which (A) illustrates a top view of the reference measurement device 310H, (B) illustrates a left view of the reference measurement device 310H, and (C) illustrates a front view of the reference measurement device 310H.

As illustrated in FIG. 84, the reference measurement device 310H has a configuration including a helmet-shaped housing and having a plurality of sensors 111 placed to surround the circumference of the helmet-shaped housing. The housing is not limited to a helmet shape, and may be variously modified to shapes such as a spectacle shape or a headband shape, for example, as long as the housing has a shape enabling the plurality of sensors 111 to be placed to surround the head of the user U.

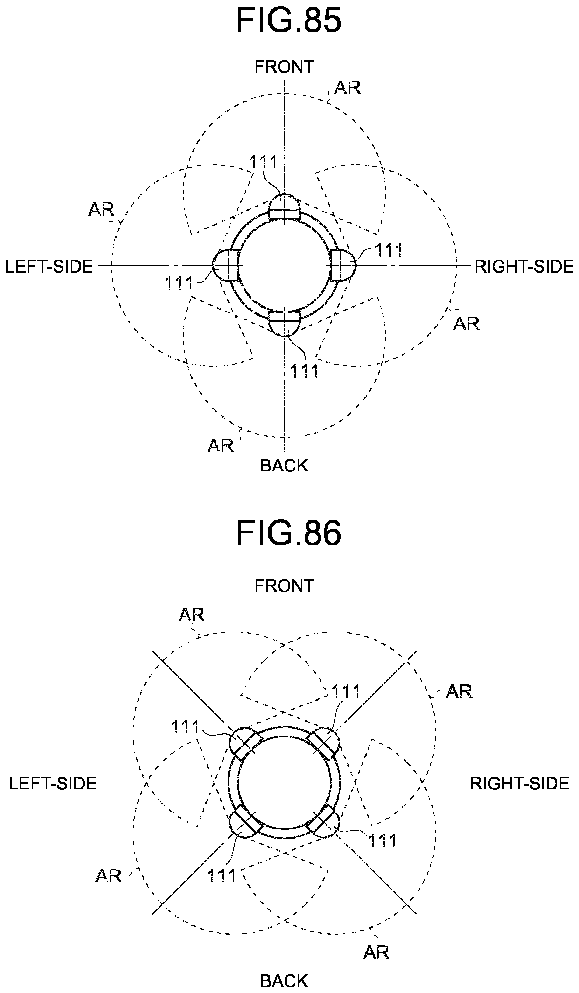

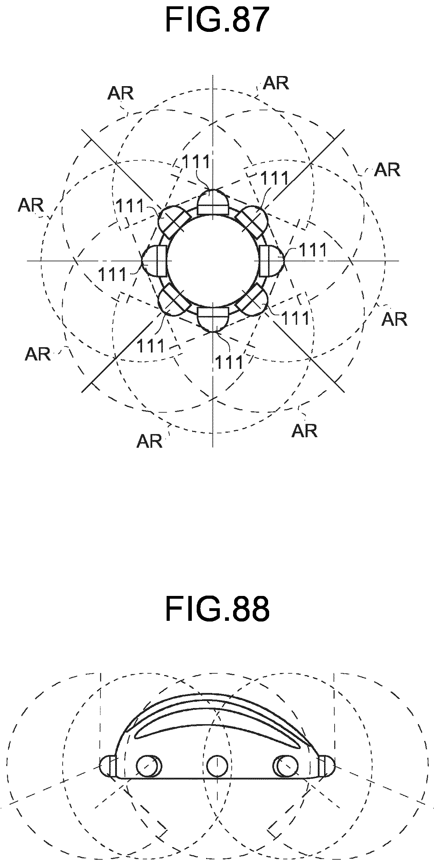

FIGS. 85 to 88 are diagrams each illustrating an example of arrangement of sensors in the measurement device attached to the head of the user and an FOV of each sensor according to the present embodiment. FIGS. 85 to 87 illustrate examples of the arrangement and the FOV of the sensor 111 when the reference measurement device 310H is viewed from the top, and FIG. 88 illustrates an example of the arrangement and the FOV of the sensor 111 when the reference measurement device 310H illustrated in FIG. 87 or 84 is viewed from the side.

As illustrated in FIGS. 85 to 87 and 88, the reference measurement device 310H has a configuration having a plurality of sensors 111 arranged over the periphery of the housing (that is, the periphery of the head of the user U) such that the circumference of the head of the user U falls within the angle of view of at least two sensors 111. FIG. 85 illustrates a configuration example in which one of the four sensors arranged substantially evenly around the housing is arranged to face the front of the user U, FIG. 86 illustrates a configuration example in which the four sensors arranged substantially evenly around the housing are arranged to face the diagonal directions of the user U, and FIG. 87 illustrates a configuration example in which the eight sensors 111 are arranged substantially evenly around the housing.

In such a configuration example, the Field of View (FOV) angle of the lens included in each sensor 111 is preferably 180 degrees or more, but is not limited thereto, and may be less than 180 degrees as long as the circumference of the head of the user U can be kept within the angle of views of at least two sensors 111.

During a period in which a site equipped with the measurement device 10, such as a wrist, is in a region that cannot be captured by at least two sensors 111 in the reference measurement device 310H, the position of the corresponding site may be measured using 6DoF data detected by the IMU 112 included in the measurement device 10.

3.3 Position measurement method for each site

Next, a method of measuring the position of each site in the user U according to the present embodiment will be described in detail with reference to the drawings. In the present example, similarly to the above-described embodiments and their modifications, the position measurement sites are represented by the left wrist, the right wrist, the left elbow, the right elbow, the left shoulder, the right shoulder, the left ankle, the right ankle, the left knee, the right knee, and the head, but the position measurement sites are not limited thereto, and various sites in the user U may be defined as the position measurement target. Furthermore, in the following description, for simplification the right and left will not be distinguished as necessary.

3.3.1 Head and wrists

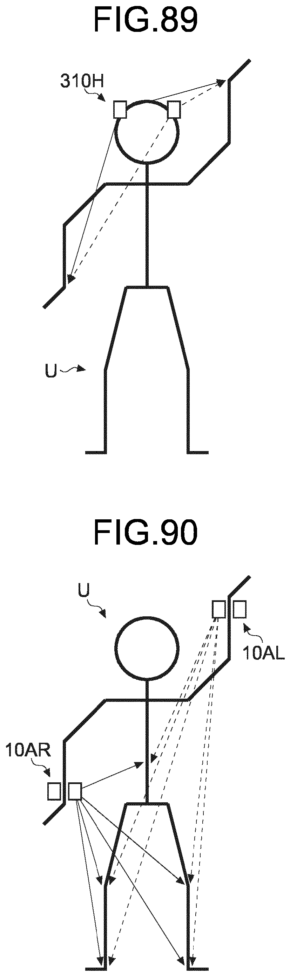

First, a method of measuring the positions of the head and both wrists of the user U will be described. FIG. 89 is a diagram for illustrating a method of measuring positions of the head and the wrists according to the present embodiment.

In the present embodiment, the position of the head of the user U can be measured by using SLAM performed by the reference measurement device 310H, or the IMU 112 or the GNSS receiver 311 included in the reference measurement device 310H.

The plurality of sensors 111 fixed to the housing of the reference measurement device 310H has a known mutual positional relationship. That is, there is known information regarding the position of each sensor 111 in the client coordinate system or the server map coordinate system of the reference measurement device 310H. Therefore, based on the image data acquired by at least two sensors 111 that capture the wrist and the positional relationship between the two sensors 111, the position of each wrist of the user U can be measured by a method such as triangulation, for example.

At that time, the reference measurement device 310H may specify at least two sensors 111 that capture at least one of both wrists of the user within the angle of view by utilizing a beacon, as an indicator, emitted by the measurement device 10 attached to each of both wrists of the user U.

3.3.2 Elbows and shoulders

As described above, the positions of both wrists of the user U can be obtained from the image data acquired by at least two sensors 111 in the reference measurement device 310H. Accordingly, the positions of both elbows and both shoulders of the user U can be measured using a method similar to the method described with reference to FIG. 8 in the first embodiment.

3.3.3 Knees, ankles, and trunk

Next, a method of measuring the positions of both knees, both ankles, and the trunk of the user U will be described. FIG. 90 is a diagram for illustrating a method of measuring positions of knees, ankles, and the trunk according to the present embodiment.

As illustrated in FIG. 90, also in the present embodiment, both knees, both ankles, and a trunk of the user U have been captured by the two measurement devices 10 attached to both wrists of the user U, namely, the measurement device 10AL and the measurement device 10AR. Subsequently, the position (in the present example, the wrist position) of each measurement device 10 in the client coordinate system or the server map coordinate system is measured by the above-described method. Therefore, based on the image data acquired by the two measurement devices 10 that capture both knees, both ankles, and the trunk and the positional relationship between the two measurement devices 10, the positions of both knees, both ankles, and the trunk of the user U can be measured by a method such as triangulation, for example.

3.3.4 Another method of measuring position of each site

While the measurement method described above is an exemplary case where the position of each site of the user U is measured by triangulation from the image data imaged by the two measurement devices 10 whose self-positions are known, the measurement method according to the present embodiment is not limited thereto, and may be variously modified. For example, as mentioned in the first embodiment, in a case where at least one sensor 111 in at least one measurement device 10 whose self-position is known is a distance measurement sensor, it is possible to measure the position of each site of the user U with respect to the measurement device 10 whose self-position is known, by using depth data acquired by this sensor 111.

In the case of the present embodiment, the self-position of the measurement device 10AL attached to the left wrist and the self-position of the measurement device 10AR attached to the right wrist have been measured by the above-described method. Therefore, by using at least one of the sensors 111 included in the measurement device 10AL and the measurement device 10AR as a distance measurement sensor, it is possible to measure the position of each site (for example, left elbow, right elbow, left shoulder, right shoulder, left ankle, right ankle, left knee, right knee, etc.) of the user U using the depth data acquired using the sensor 111.

3.3.5 Method of measuring shape of hand/fingers

The shape of the finger of the user U may be similar to the measurement method described with reference to FIGS. 13 to 16 in the above-described first embodiment.

3.4 Coordinate system

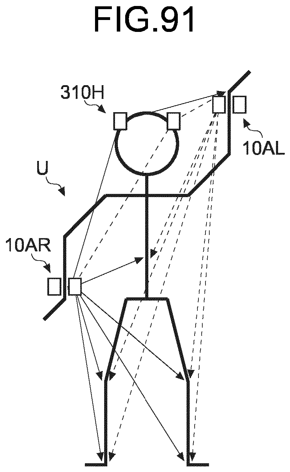

Next, integration of the coordinate systems of the reference measurement device 310H and the plurality of measurement devices 10 will be described. FIG. 91 is a schematic diagram for illustrating integration of a coordinate system according to the present embodiment.

As described above, there is known information regarding the positions of the plurality of sensors 111 included in the reference measurement device 310H in the client coordinate system or the server map coordinate system of the reference measurement device 310H. The position of the measurement device 10 attached to both wrists of the user U in the client coordinate system or the server map coordinate system of the reference measurement device 310H can be measured with triangulation using the image data acquired by at least two sensors 111 of the reference measurement device 310H.

On the other hand, the position of the site of the user U with no measurement device 10 attached in the client coordinate system or the server map coordinate system of the reference measurement device 310H can be measured with triangulation using the image data acquired by the measurement device 10 attached to both wrists.

Subsequently, the position of the reference measurement device 310H attached to the head (or trunk) of the user U in the client coordinate system or the server map coordinate system of the reference measurement device 310H can be estimated by SLAM or positioning using the IMU 112 and/or the GNSS receiver 311.

From the above, by using a method similar to the method described with reference to FIG. 18 and the like in the first embodiment, the client map coordinate system of each of the reference measurement device 310H and the plurality of measurement devices 10 can be integrated into a common server map coordinate system.

3.5 Combination variation of units that execute each processing

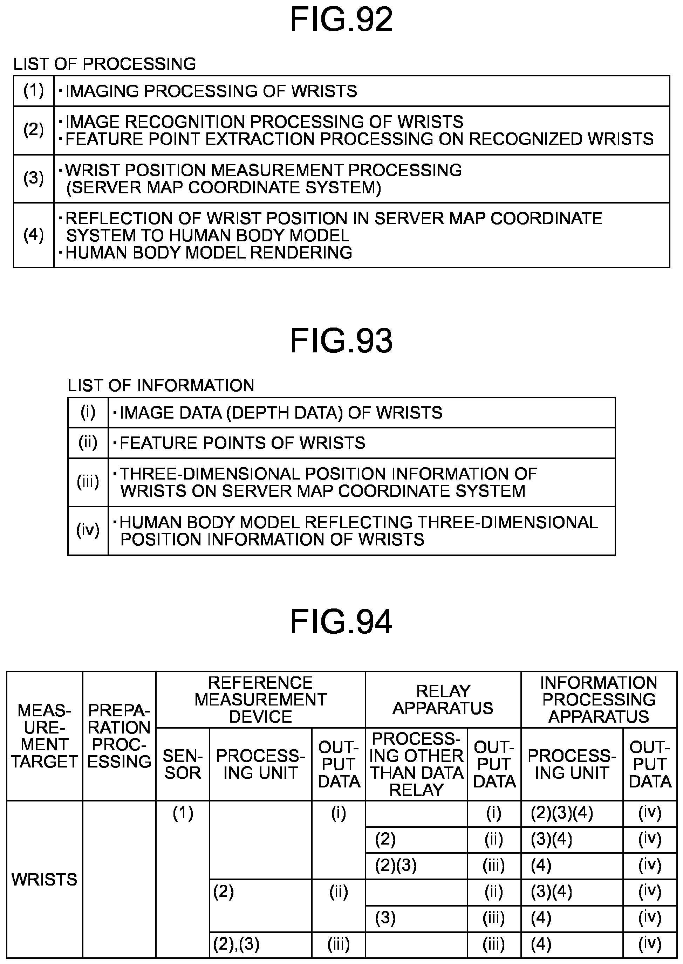

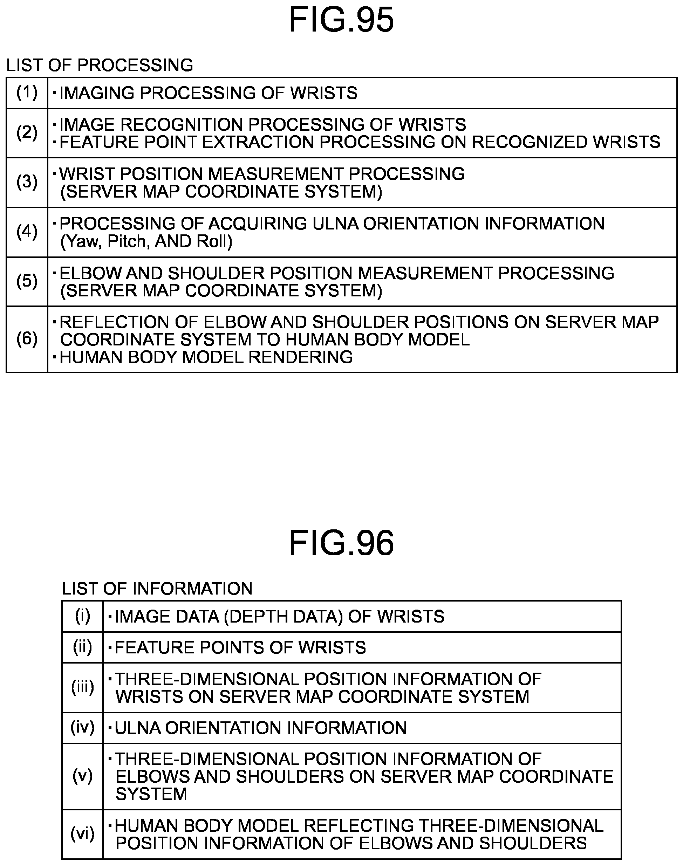

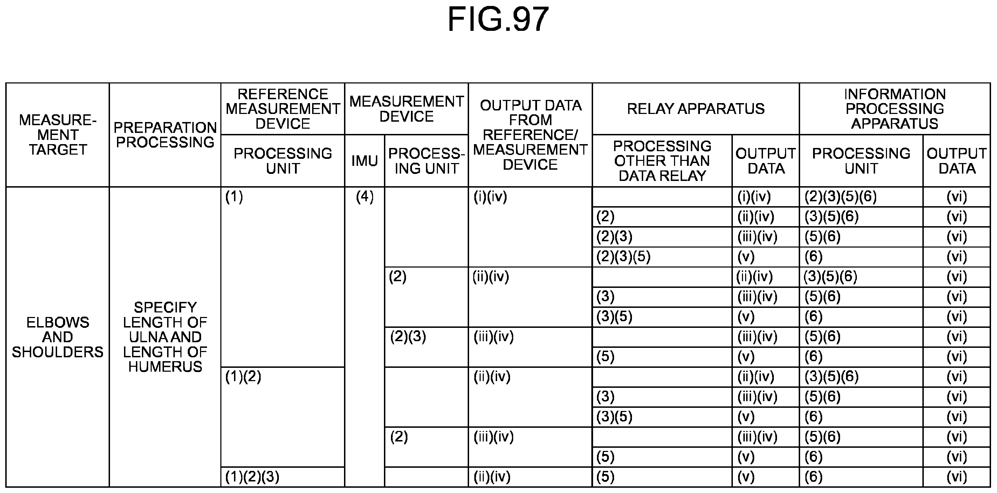

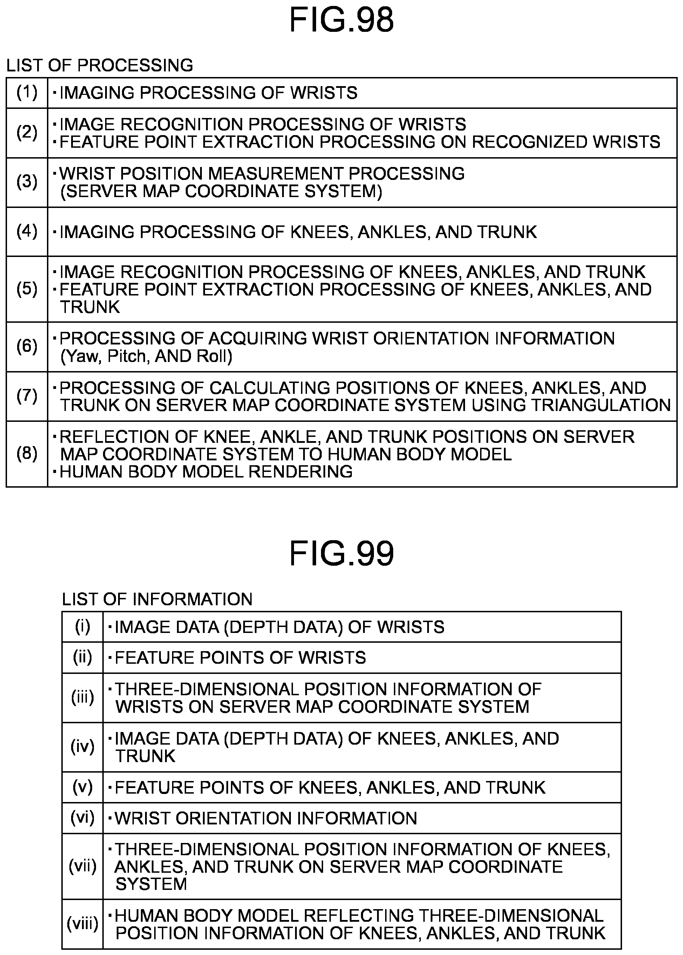

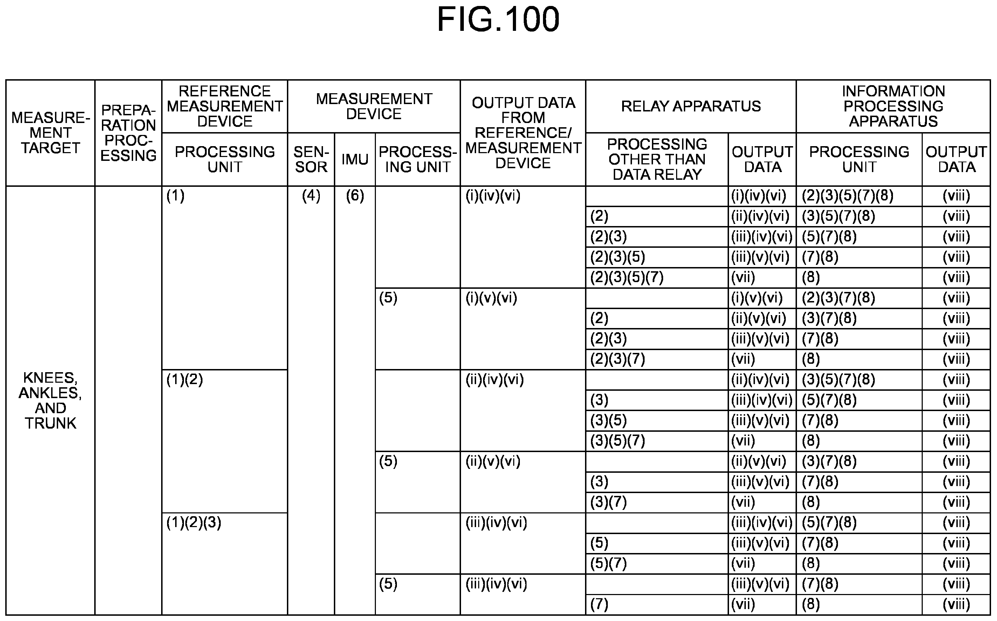

Here, for rearrangement, a list of processing for achieving the above-described functions is illustrated in FIGS. 92, 95, and 98, a list of output data of each processing is illustrated in FIGS. 93, 96, and 99, and a list of combination variations of units that execute each processing is illustrated in FIGS. 94, 97, and 100. Note that FIGS. 92 to 94 illustrate a case where the positions of the wrists are measured and reflected on the human body model such as the avatar, FIGS. 95 to 97 illustrate a case where the positions of the elbows and the shoulders are measured and reflected on the human body model such as the avatar, and FIGS. 98 to 100 illustrate a case where the positions of the knees, the ankles, and the trunk are measured and reflected on the human body model such as the avatar.

As illustrated in FIGS. 92 to 100, the processing from the processing of measuring the position of each unit to the processing of reflecting and displaying the measured position on the human body model can be separated into a plurality of processing, and each separated processing may be executed in any of the reference measurement device 310H, the measurement device 10, the relay apparatus 20, or the information processing apparatus 40. Note that the processing, output data, and combination variations illustrated in FIGS. 92 to 100 are examples, and are not limited to the above examples.

3.6 Brief summary

As described above, according to the present embodiments and their modifications, it is possible to measure the self-positions of the measurement device 10AL and the measurement device 10AR with the reference measurement device 310H attached to the head or trunk of the user U, as a reference. Therefore, similarly to the first embodiment and its modification described above, even in a case where the positions of the measurement device 10AL and the measurement device 10AR move freely, the position of each site of the user U can be measured. There is no need to use SLAM in the measurement device 10AL and the measurement device 10AR, increasing the possibility of achieving reduction of the processing amount of the entire system accordingly.

4. Application examples

Next, an application using the body tracking system according to the above-described embodiments or their modifications will be described with some examples.

4.1 First application example

The body tracking system according to the above-described embodiment can have the following exemplary effects other than the above-described effects as the advantages obtained from the configuration and operation of the system.

· Improvement in accuracy and reproducibility of three-dimensional reconfiguration by using techniques such as Structure from Motion (SfM).
· Since the sensor is attached to the human body, a blind spot is unlikely to occur, which is a difference from a fixed sensor.
· Enabling detection of detailed motion to expression and fingertip, and detailed surrounding situations.
· Enabling finer three-dimensional reconfiguration and display in higher population density location in the real world.
· Enabling exchange between person in virtual space and person in real space.

· Usability in various scenes not limited to the meeting, such as sports, training, and events (live event, guided tour, recital, dating, etc.).

· Reduced number of sensors leads to reduction of time and effort for installation.

In consideration of these effects, the body tracking system according to the above-described embodiments or their modifications will presumably be particularly effective for applications such as volumetric capture or fusion XR free viewpoint technique, which have needed to generate 3D data by installing a large-scale facility including a large number of cameras in places such as a dedicated studio and a stadium and performing imaging.

In addition, the body tracking system according to the above-described embodiments or their modifications will presumably be particularly effective for an application having a difficulty in precise 3D representation of details due to a blind spot created by a shield such as a person or an object in system configurations in the past.

Meanwhile, in a conventional gathering such as an online meeting using a virtual space, there have been cases having difficulty for both a participant in the real space and a participant in the virtual space to exist in a same space without a sense of discomfort, including an extreme use form in which all of the participants are in the real space or all of the participants are in the virtual space.

Furthermore, in order for both sides to interactively communicate with each other in a gathering such as an online meeting, a person in a surrounding environment or one real space need to be expressed in 3D toward a person in the other real space. However, there is a problem of a necessity to individually provide a large-scale facility in both real spaces. Furthermore, even in such a case, there is a problem of difficulty in performing precise 3D representation of details due to a blind spot created by a shield such as a person or an object.

By introducing the body tracking system according to the present disclosure in such a case, it is possible to reduce the number of fixed cameras for imaging the external environment and the like and to reduce the system configuration, achieving great reduction of the introduction cost. In addition, since the motion and posture of the person are tracked using the sensor attached to the person, it is also possible to suppress a decrease in reproduction accuracy due to a blind spot or the like.

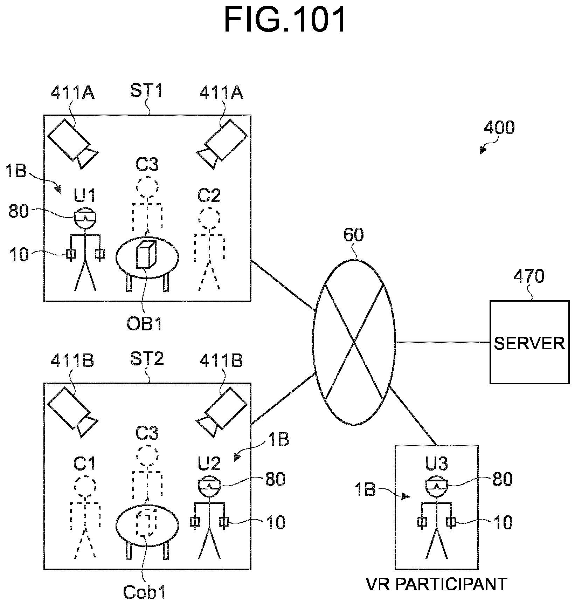

FIG. 101 is a schematic diagram illustrating a schematic configuration example of an online meeting system according to the first application example. In the present application example, for simplification, a case where the body tracking system 1B according to the second modification of the first embodiment described above with reference to FIG. 51 is introduced into an online meeting system 400 will be described as an example.

As illustrated in FIG. 101, the online meeting system 400 according to the first application example has a configuration in which a point ST1 and a point ST2 located away from the point ST1 are connected to a server 470 via a network 60.

The point ST1 has the body tracking system 1B and a plurality of cameras 411A being introduced. Various pieces of information such as image data (which may be video data) captured by the measurement device 10 and each camera 411A of the body tracking system 1B and position information of a user U1 are transmitted to the server 470 via the network 60. For example, the body tracking system 1B is supposed to be worn by the user U1 present at the point ST1. Furthermore, the plurality of cameras 411A may be fixed at positions where the entire state of the point ST1 can be imaged.

On the other hand, similarly to the point ST1, the point ST2 has introduced the body tracking system 1B and a plurality of cameras 411B. Various pieces of information such as image data (which may be video data) captured by the measurement device 10 and each camera 411B of the body tracking system 1B and position information of a user U2 are transmitted to the server 470 via the network 60. For example, the body tracking system 1B is supposed to be worn by the user U2 present at the point ST2. Furthermore, the plurality of cameras 411B may be fixed at positions where the entire state of the point ST2 can be imaged.

The point ST2 may be a space designed similarly to the point ST1. For example, the point ST2 may be designed similarly to the point ST1 in dimensions of the space and arrangement of installed furniture and items.

In addition, the online meeting system 400 may have a user U3 existing at a position different from the points ST1 and ST2, as a participant. The user U3 wears the body tracking system 1B. Various pieces of information such as image data (which may be video data) captured by the measurement device 10 of the body tracking system 1B and position information of the user U3 are transmitted to the server 470 via the network 60.

The server 470 integrates the coordinate system of the point ST1 and the coordinate system of the point ST2 to each other, displays an avatar C1 of the user U1 existing at the point ST1 on an HMD 80 of the user U2 existing at the point ST2, and controls the avatar C1 according to the motion of the user U1. Similarly, the server 470 displays an avatar C2 of the user U2 existing at the point ST2 on the HMD 80 of the user U1 existing at the point ST1, and controls the avatar C2 according to the motion of the user U2. Incidentally, the HMD 80 attached to the users U1 and U2, respectively present at the points ST1 and ST2, may each be an optical see-through HMD or a video see-through HMD.

Furthermore, the space at the point ST1 or the point ST2 reproduced from the image data captured by the camera 411A and/or 411B is displayed as a virtual space on the HMD 80 of the user U3 being a VR participant. Furthermore, the avatar C1 of the user U1 existing at the point ST1 and the avatar C2 of the user U2 existing at the point ST2 are also displayed in the virtual space, and these are controlled according to the motion of the users U1 and U2, respectively.

Furthermore, the server 470 also integrates the coordinate system of the body tracking system 1B worn by the user U3 being a VR participant, onto the coordinate systems of the points ST1 and ST2. In addition, the server 470 also displays the avatar C3 of the user U3 being a VR participant on the HMDs 80 of the users U1 and U2 existing at the points ST1 and ST2 respectively, and controls the avatar C3 according to the motion of the user U3.

Furthermore, an object OB1 targeted by any one of the users may be displayed as a virtual object Cob1 on the HMDs 80 of the users U1 to U3.

This online meeting system 400 can be introduced, for example, not only in a general office conference room but also in various facilities that can connect two or more remote bases online, such as a rental office, a cafe, a karaoke shop, an event venue (including a concert venue and a performing arts stage), a fitness facility, and a golf driving range.

4.2 Second application example

Next, a case where the body tracking system according to the present disclosure is applied to an application of observing a user's physical activity posture will be described.

A conventionally used application of observing a physical activity posture of a user has used a technique of measuring an observation position during physical activity of the user by attaching an IMU, a bending sensor, or the like to all of joints to be measured by the user, or a technique of installing a plurality of cameras indoors and measuring an observation position in the physical activity of the user based on video images captured by the cameras.

However, attaching a sensor such as an IMU on all the measurement target points of the user causes discomfort in wearing for the user, and also hinders natural movement. On the other hand, a technique of measuring the user with a camera installed indoors suffers locational restriction, making it difficult to measure the physical activity posture of the user at places such as outdoors.

In these cases, by introducing the body tracking system according to the present disclosure, it is possible to measure the motion and posture of the entire body of the user with a small number of sensors, enabling suppression of shortcomings such as discomfort in wearing, disturbance of natural movement, and restriction of a place.

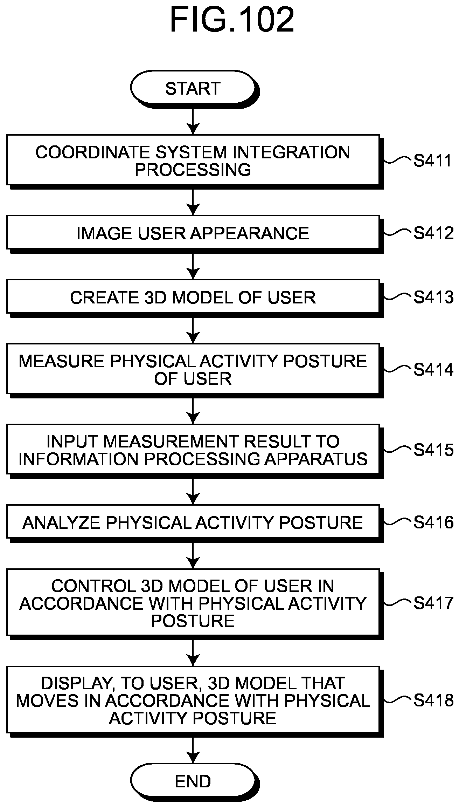

FIG. 102 is a flowchart illustrating a schematic operation example of a physical activity posture observation system according to a second application example. For the sake of clarity, the present description will describe an exemplary case where the body tracking system 1 is introduced.

As illustrated in FIG. 102, in the present operation, first, the client map coordinate system of each measurement device 10 is integrated into the server map coordinate system using the technique according to the above-described embodiments or their modifications (step S411).

Next, for example, the external appearance of the user is imaged (step S412). Image data obtained by imaging may be input to the information processing apparatus 40. Imaging of the user may be performed by using a device such as a smartphone including a distance measurement sensor, for example.

Next, a 3D model (which may be a skeleton model) of the outer shape of the user is created based on the image data obtained by imaging the user (step S413). At that time, the 3D model may be gradually displayed on the display apparatus 50 to present the progress in creation of the 3D model to the user. In response to this, the user may additionally input image data acquired by re-imaging the missing part to the information processing apparatus 40, and the information processing apparatus 40 may update the 3D model based on the additionally input image data.

When the 3D model of the user is completed as described above, the measurement of the physical activity posture of the user using the body tracking system 1 is executed (step S414). The position information of each site of the user (hereinafter, also referred to as physical activity posture information) estimated by the measurement may be accumulated in the relay apparatus 20, for example. Not limited to this, and the information may be accumulated in any of the measurement devices 10 or the information processing apparatus 40. Furthermore, the physical activity posture information may include position information of the entire user (that is, information regarding the movement of the user as a whole person).

Note that the physical activity of the user to be set as the measurement target may be an outdoor physical activity or an indoor physical activity. In addition, the physical activity may be a physical activity not using an instrument such as running or manual physical activity, a physical activity using an instrument not involving movement of the position of the instrument, such as a treadmill, or a physical activity using an instrument involving movement of the position of the instrument, such as a golf swing or a tennis swing. In the case of the physical activity using the instrument involving movement of the position of the instrument, the position and posture of the instrument may be estimated using a technique similar to the technique of estimating the position of each site of the user using the two measurement devices 10 attached to both wrists of the user. In addition, in order to facilitate detection of the position of the instrument by the measurement device 10, a transmission device that emits a signal such as a beacon may be attached to the instrument.

Thereafter, when the measurement of the physical activity posture of the user is completed, the physical activity posture information accumulated in the relay apparatus 20 is input to the information processing apparatus 40 (step S415).

Note that the physical activity posture information may be directly input from the measurement device 10 to the information processing apparatus 40, or may be input via the relay apparatus 20.

Next, the information processing apparatus 40 analyzes the physical activity posture (step S416). Subsequently, the information processing apparatus 40 controls the 3D model of the user based on the analyzed physical activity posture (step S417). Subsequently, the video obtained by rendering the 3D model of the user moving according to the physical activity posture is displayed on the display apparatus 50 (step S418), and then the present operation ends. Note that the 3D model displayed here may reflect the appearance (clothes, cap, accessory, and the like) of the user imaged at the time of creating the 3D model.

For example, in the case of a physical activity in an environment equipped with the display apparatus 50, it is allowable to transmit the measurement result to the information processing apparatus 40 in real time during the physical activity, and may display the motion of the 3D model based on the measurement result on the display apparatus 50 in real time, instead of accumulating the measurement result in the relay apparatus 20 during the physical activity and displaying the result after the physical activity.

Alternatively, for example, in a case of observing a physical activity posture for a certain period, such as a golf swing practice, the physical activities of the user may be measured and accumulated for the certain period. At an occurrence of a predetermined trigger, a measurement result may be transmitted to the information processing apparatus 40, and a 3D model reflecting the measurement result may be displayed on the display apparatus 50.

4.3 Third application example

Next, a case where the body tracking system according to the present disclosure is applied to motion tracking using keypoint recognition will be described.

Examples of applying the body tracking system according to the present disclosure to motion tracking using keypoint recognition include: an example (first example) utilizing the body tracking system to restore the entire body of the user in 3D; and an example (second example) of utilizing the body tracking system to restore feature points (for example, parts such as joints) of the user.

(First example)

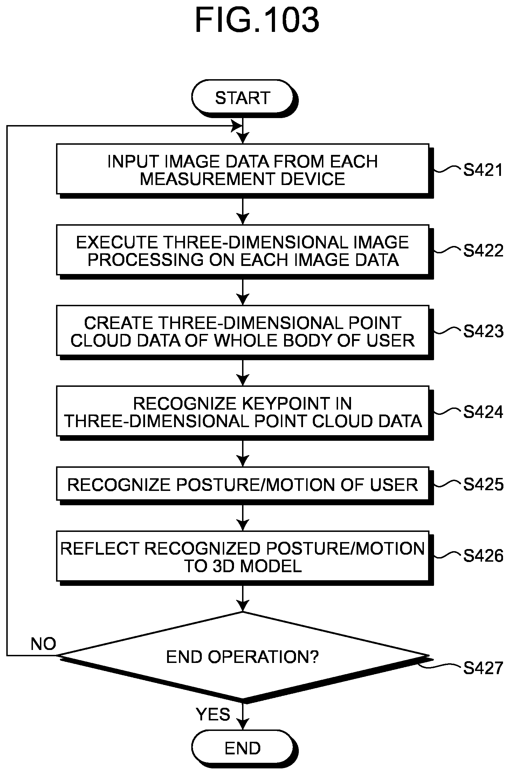

FIG. 103 is a flowchart for illustrating a flow of processing according to the first example. Note that integration of the coordinate systems in the measurement devices 10 is supposed to be completed before the operation illustrated in FIG. 103.

As illustrated in FIG. 103, a first step of the first example is to input image data acquired by each measurement device 10 to the information processing apparatus 40 (step S421).

In response to this, the information processing apparatus 40 executes three-dimensional image processing on each piece of the input image data (step S422). This operation creates three-dimensional point cloud data of the user's entire body (step S423). Examples of the three-dimensional image processing in step S422 may include SfM and stereo vision.

Next, the information processing apparatus 40 analyzing the created three-dimensional point cloud data to recognize keypoints in the three-dimensional point cloud data (step S424).

Next, the information processing apparatus 40 specifies the movement of the recognized keypoints to recognize the posture and motion of the user (step S425). Subsequently, the information processing apparatus 40 reflects the recognized posture and motion in the 3D model of the user to move the 3D model in accordance with the motion of the user (step S426).

Thereafter, a determination as to whether to end the present operation is made (step S427), and when it is determined to end the operation (YES in step S427), the present operation ends. In contrast, when the determination is not ending the present operation (NO in step S427), the present operation returns to step S421 to execute subsequent operations.

(Second example)

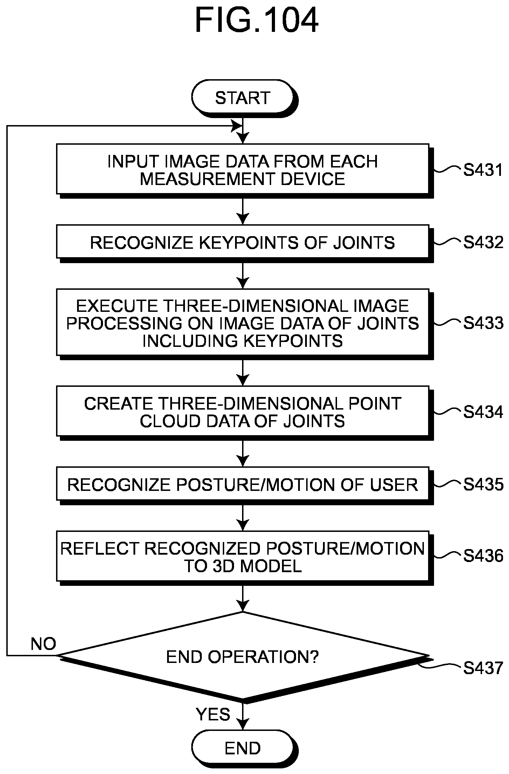

FIG. 104 is a flowchart for illustrating a flow of processing according to the second example. Note that integration of the coordinate systems in the measurement devices 10 is supposed to be completed before the operation illustrated in FIG. 104.

As illustrated in FIG. 104, similarly to the first example, a first step of the second example is to input image data acquired by each measurement device 10 to the information processing apparatus 40 (step S431).

In response to this, the information processing apparatus 40 analyzes each piece of the input image data to recognize keypoints of joints in the user (step S432).

Next, the information processing apparatus 40 executes three-dimensional image processing on the image data of the joint including the recognized keypoints (step S433). This operation creates three-dimensional point cloud data of the joint portion of the user (step S434). Examples of the three-dimensional image processing in step S433 may include SfM and stereo vision.

Next, the information processing apparatus 40 specifies the movement of the recognized joints to recognize the posture and motion of the user (step S435). Subsequently, the information processing apparatus 40 reflects the recognized posture and motion in the 3D model of the user to move the 3D model in accordance with the motion of the user (step S436).

Thereafter, a determination as to whether to end the present operation is made (step S437), and when it is determined to end (YES in step S437), the present operation ends. In contrast, when the determination is not ending the present operation (NO in step S437), the present operation returns to step S431 to execute subsequent operations.

5. Hardware configuration

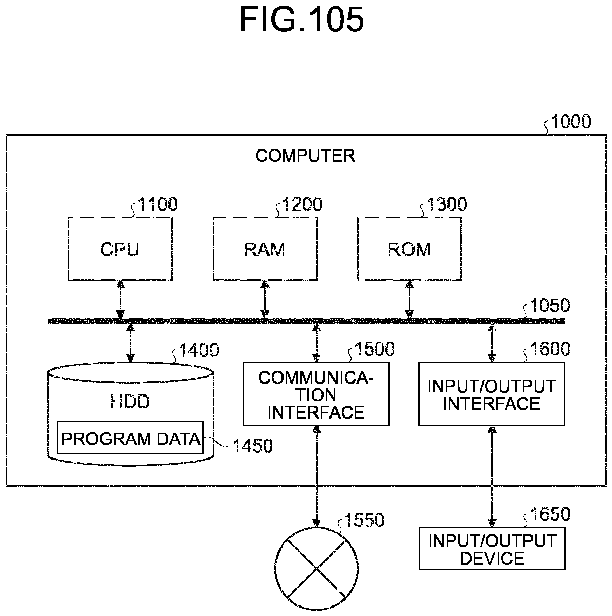

The measurement device 10, the reference measurement device 310H, the relay apparatus 20, the information processing apparatus 40, the servers 70 and 470, and the HMD 80 according to the embodiments, their modifications and application examples described above can be implemented by a computer 1000 having a configuration as illustrated in FIG. 105, for example. FIG. 105 is a hardware configuration diagram illustrating an example of the computer 1000, which implements the functions of the measurement device 10, the reference measurement device 310H, the relay apparatus 20, the information processing apparatus 40, the servers 70 and 470, and the HMD 80. The computer 1000 includes a CPU 1100, RAM 1200, read only memory (ROM) 1300, a hard disk drive (HDD) 1400, a communication interface 1500, and an input/output interface 1600. Individual components of the computer 1000 are interconnected by a bus 1050.

The CPU 1100 operates based on a program stored in the ROM 1300 or the HDD 1400 so as to control each of components. For example, the CPU 1100 develops the program stored in the ROM 1300 or the HDD 1400 into the RAM 1200 and executes processing corresponding to various programs.

The ROM 1300 stores a boot program such as a basic input output system (BIOS) executed by the CPU 1100 when the computer 1000 starts up, a program dependent on hardware of the computer 1000, or the like.

The HDD 1400 is a non-transitory computer-readable recording medium that records a program executed by the CPU 1100, data used by the program, or the like. Specifically, the HDD 1400 is a recording medium that records a program for executing individual operations according to the present disclosure, which is an example of program data 1450.

The communication interface 1500 is an interface for connecting the computer 1000 to an external network 1550 (for example, the Internet). For example, the CPU 1100 receives data from other devices or transmits data generated by the CPU 1100 to other devices via the communication interface 1500.

The input/output interface 1600 has a configuration including the I/F unit 18 described above, and is an interface for connecting the input/output device 1650 and the computer 1000 to each other. For example, the CPU 1100 receives data from an input device such as a keyboard or a mouse via the input/output interface 1600. In addition, the CPU 1100 transmits data to an output device such as a display, a speaker, or a printer via the input/output interface 1600. Furthermore, the input/output interface 1600 may function as a media interface for reading a program or the like recorded on predetermined recording medium (or media). Examples of the media include optical recording media such as a digital versatile disc (DVD) or a phase change rewritable disk (PD), a magneto-optical recording medium such as a magneto-optical disk (MO), a tape medium, a magnetic recording medium, and semiconductor memory.

For example, when the computer 1000 functions as the measurement device 10, the reference measurement device 310H, the relay apparatus 20, the information processing apparatus 40, the servers 70 and 470, and the HMD 80 according to the above-described embodiments, the CPU 1100 of the computer 1000 executes the program loaded on the RAM 1200 to implement the functions of the measurement device 10, the reference measurement device 310H, the relay apparatus 20, the information processing apparatus 40, the servers 70 and 470, and the HMD 80. In addition, the HDD 1400 stores programs according to the present disclosure, and the like. While the CPU 1100 executes program data 1450 read from the HDD 1400, the CPU 1100 may acquire these programs from another device via the external network 1550, as another example.

6. Conclusion

The technology described above is specified as follows, for example. One of the disclosed technologies is the information processing apparatus 40. As described with reference to FIGS. 1 to 100 and the like, the information processing apparatus 40 includes the processing unit 141, which is configured to measure the positions of a plurality of sites (body sites) of the user U based on the positions (self-positions) of the plurality of measurement devices 10 (for example, the measurement devices 10AL and 10AR), which are attached to the user U to acquire image data of the U user, and based on the image data acquired by each of the plurality of measurement devices 10. The individual positions of the plurality of measurement devices 10 are self-estimated or measured using another measurement device (for example, the reference measurement device 310H) attached to the user U.

According to the information processing apparatus 40 described above, the positions of the plurality of sites of the user U are measured using the estimated or measured positions of the measurement device 10. Therefore, even with the measurement device 10 freely moving in position, it is possible to measure the position of the sites of the user U.

As described with reference to diagrams such as FIGS. 1 to 55, the measurement devices 10 may each be attached to any of the plurality of sites of the user U. The processing unit 141 may estimate the position of the site equipped with the measurement devices 10 by SLAM using the image data individually acquired by the measurement devices 10. The processing unit 141 may use triangulation on the image data acquired by at least two measurement devices 10 (for example, the measurement devices 10AL and 10AR) out of the plurality of measurement devices 10 to measure the position of at least one site out of the plurality of sites. The processing unit 141 may measure a position of a site (for example, an elbow and a shoulder) between a reference site (for example, a trunk) and a site whose position has been estimated (for example, a wrist) among the plurality of sites, based on a skeleton model of a human body. The position of the measurement device 10 can be estimated, or the position of each unit of the user U can be measured in this manner, for example.

As described with reference to FIGS. 56 to 77 and the like, each of the measurement devices 10 (for example, the measurement device 10AL and the measurement device 10AR) may be attached to any of the plurality of sites of the user U. The processing unit 141 may measure the position of the site equipped with each measurement device 10 with the marker (for example, bib MZ) attached to the user U as a reference. The position of the measurement device 10 can be estimated, or the position of each site of the user U can be measured in this manner, for example.

The measurement device 10B may be attached to the user U so as to suppress a change in the positional relationship with the marker MZ, and the processing unit 141 may measure the position of the site equipped with the measurement device 10B, by SLAM using the image data acquired by the measurement device 10B. Even when the position of the marker MZ changes, the positions of the measurement devices 10AL and 10AR can be estimated with the position of the marker MZ as a reference, enabling measurement of the position of each site of the user U.

As described with reference to FIGS. 78 to 100 and the like, the measurement devices 10 (for example, the measurement device 10AL and the measurement device 10AR) may each be attached to any of the plurality of sites of the user U. The processing unit 141 may measure the position of the site equipped with the measurement device 10 among the plurality of sites, by using triangulation based on the image data of each measurement device 10, acquired by the reference measurement device 310H including at least two sensors 111. The processing unit 141 may estimate the position of the reference measurement device 310H by SLAM using the image data acquired by the reference measurement device 310H. The position of the measurement device 10 can be estimated, or the position of each site of the user U can be measured in this manner, for example.

As described with reference to FIGS. 18, 22 to 34, 57 to 61, 91, and the like, the processing unit 141 may integrate the first coordinate system (client map coordinate system) set in each of the measurement devices 10 (for example, the measurement devices 10AL and 10AR) into one common second coordinate system (server map coordinate system) so as to measure the positions of the plurality of sites in the second coordinate system. The processing unit 141 may integrate the first coordinate systems of the individual measurement devices 10 into the second coordinate system based on the image data obtained by imaging, individually by the measurement devices 10, the marker (for example, the marker MK) provided in the external environment or any of the plurality of measurement devices 10. The positions of a plurality of sites can be measured, by integration of the coordinate systems in this manner, for example.

As described with reference to drawings such as FIG. 2, the measurement devices 10 (for example, the measurement device 10AL and the measurement device 10AR) may each include at least one of an image sensor, a distance measurement sensor, and an EVS, as the sensor 111 that acquires image data. The position of the body site of the user U can be measured based on image data acquired by the measurement device 10 including such a sensor for example.

The plurality of measurement devices 10 may be the two measurement devices 10 (the measurement device 10AL and the measurement device 10AR). By measuring the positions of a large number of sites of the user U with the minimum number of measurement devices 10, it is possible to minimize the risk of discomfort in wearing or hindrance of the movement in the user U.

The site of the user U may include at least one of the left wrist, the right wrist, the left elbow, the right elbow, the left shoulder, the right shoulder, the left ankle, the right ankle, the left knee, the right knee, and the head. The positions of these various sites of the user U can be estimated, for example.

The processing unit 141 may control the position (posture, motion, or the like) of the avatar (or character) in the virtual space corresponding to the user U based on the estimated positions of the plurality of sites of the user U.

The information processing method described with reference to drawings such as FIGS. 1 to 100 is also one of the disclosed technologies. The information processing method includes measuring the positions of a plurality of sites of the user U based on the positions of the plurality of measurement devices 10 (for example, the measurement devices 10AL and 10AR), which are attached to the user U to acquire image data of the user U, and based on the image data acquired by each of the plurality of measurement devices 10. The individual positions of the plurality of measurement devices 10 are self-estimated or measured using another measurement device (for example, the reference measurement device 310H) attached to the user U. Even with such an information processing method, the position of the body site of the user U can be measured even in a case where the position of the measurement device 10 freely moves, as described above.

As described with reference to drawings such as FIGS. 1 to 55, each measurement device 10 may be attached to any of the plurality of sites of the user U, and the position of the site equipped with each measurement device 10 may be estimated by SLAM using image data acquired by each measurement device 10. The position of at least one of the plurality of sites may be measured by using triangulation based on image data acquired by at least two of the plurality of measurement devices 10 (for example, the measurement devices 10AL and 10AR). It is allowable to measure the position of a site (for example, an elbow and a shoulder) between a reference site (for example, a trunk) and a site whose position has been estimated (for example, a wrist) among the plurality of sites, based on a skeleton model of a human body. The position of the measurement device 10 can be estimated, or the position of each unit of the user U can be measured in this manner, for example.

As described with reference to drawings such as FIGS. 56 to 77, each of the measurement devices 10 (the measurement device 10AL and the measurement device 10AR) may be attached to any of the plurality of sites of the user U. The position of the site equipped with each measurement device 10 may be measured with the marker (for example, bib MZ) attached to the user U as a reference. The position of the measurement device 10 can be estimated, or the position of each site of the user U can be measured in this manner, for example.

As described with reference to FIGS. 78 to 100 and the like, the measurement devices 10 (for example, the measurement device 10AL and the measurement device 10AR) may each be attached to any of the plurality of sites of the user U. The position of the site equipped with the measurement device 10, among the plurality of sites, may be measured by using triangulation based on the image data of each measurement device 10, acquired by the reference measurement device 310H including at least two sensors 111. The position of the reference measurement device 310H may be estimated by SLAM using the image data acquired by the reference measurement device 310H. The position of the measurement device 10 can be estimated, or the position of each site of the user U can be measured in this manner, for example.

As described with reference to FIGS. 18, 22 to 34, 57 to 61, 91, and the like, the information processing method may further include integrating the first coordinate system (client map coordinate system) set in each of the measurement devices 10 (for example, the measurement devices 10AL and 10AR) into one common second coordinate system (server map coordinate system), and the positions of the plurality of sites may be measured as a position in the second coordinate system. The first coordinate systems of the individual measurement devices 10 may be integrated into the second coordinate system based on the image data obtained by imaging, individually by the measurement devices 10, the marker (for example, the marker MK) provided in the external environment or any of the plurality of measurement devices 10. The positions of a plurality of sites can be measured, by integration of the coordinate systems in this manner, for example.

As described with reference to drawings such as FIG. 2, the measurement devices 10 (for example, the measurement device 10AL and the measurement device 10AR) may each include at least one of an image sensor, a distance measurement sensor, and an EVS, as the sensor 111 that acquires image data. The position of the body site of the user U can be measured based on image data acquired by the measurement device 10 including such a sensor for example.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Furthermore, each of the above-described embodiments may be used alone or in combination with other embodiments.

Note that the present technology can also have the following configurations.

(1) An information processing apparatus comprising

a processing unit configured to measure positions of a plurality of sites of a user based on positions of a plurality of measurement devices each attached to the user to acquire image data of the user and the image data acquired by each of the plurality of measurement devices, wherein

the position of each of the plurality of measurement devices is self-estimated by the measurement device or measured using another measurement device attached to the user.

(2) The information processing apparatus according to (1), wherein

each of the measurement devices is attached to any of the plurality of sites of the user, and

the processing unit estimates the position of the site equipped with each of the measurement devices by Simultaneous Localization and Mapping (SLAM) that uses the image data acquired by each of the measurement devices.

(3) The information processing apparatus according to (1) or (2), wherein
the processing unit measures a position of at least one site out of the plurality of sites by using triangulation based on the image data acquired by at least two measurement devices out of the plurality of measurement devices.
(4) The information processing apparatus according to any one of (1) to (3), wherein
the processing unit measures a position of a site between a reference site and a site whose position has been estimated, among the plurality of sites based on a skeleton model of a human body.
(5) The information processing apparatus according to (1), wherein

each of the measurement devices is attached to any of the plurality of sites of the user, and

the processing unit measures a position of the site equipped with each of the measurement devices with a marker attached to the user as a reference.

(6) The information processing apparatus according to (1), wherein

each of the measurement devices is attached to any of the plurality of sites of the user, and

the processing unit measures a position of a site equipped with the measurement device, among the plurality of sites by using triangulation based on image data of each of the measurement devices, the image data having been acquired by a reference measurement device including at least two sensors.

(7) The information processing apparatus according to (6), wherein
the processing unit estimates a position of the reference measurement device by SLAM using the image data acquired by the reference measurement device.
(8) The information processing apparatus according to any one of (1) to (7), wherein
the processing unit integrates a first coordinate system having been set in each of the measurement devices into a common second coordinate system so as to measure the positions of the plurality of sites in the second coordinate system.
(9) The information processing apparatus according to (8), wherein
the processing unit integrates the first coordinate systems of the individual measurement devices into the second coordinate system based on image data obtained by imaging, individually by the measurement devices, a marker provided in an external environment or any of the plurality of measurement devices.
(10) The information processing apparatus according to any one of (1) to (9), wherein
each of the measurement devices includes at least one of an image sensor, a distance measurement sensor, or an EVS, as a sensor that acquires the image data.
(11) An information processing method comprising

measuring positions of a plurality of sites of a user based on positions of a plurality of measurement devices each attached to the user to acquire image data of the user and the image data acquired by each of the plurality of measurement devices, wherein

the position of each of the plurality of measurement devices is self-estimated by the measurement device or measured using another measurement device attached to the user.

(12) The information processing method according to (11), wherein

each of the measurement devices is attached to any of the plurality of sites of the user, and

the position of the site equipped with each of the measurement devices is estimated by Simultaneous Localization and Mapping (SLAM) that uses the image data acquired by each of the measurement devices.

(13) The information processing method according to (11) or (12), wherein
a position of at least one site out of the plurality of sites is measured by using triangulation based on the image data acquired by at least two measurement devices out of the plurality of measurement devices.
(14) The information processing method according to any one of (11) to (13), wherein
a position of a site between a reference site and a site whose position has been estimated, among the plurality of sites, is measured based on a skeleton model of a human body.

## EP 4 625 312 A1

(15) The information processing method according to (11), wherein

each of the measurement devices is attached to any of the plurality of sites of the user, and
a position of the site equipped with each of the measurement devices is measured with a marker attached to the user as a reference.

(16) The information processing method according to (11), wherein

each of the measurement devices is attached to any of the plurality of sites of the user, and
a position of a site equipped with the measurement device, among the plurality of sites, is measured by using triangulation based on image data of each of the measurement devices, the image data having been acquired by a reference measurement device including at least two sensors.

(17) The information processing method according to (16), wherein
a position of the reference measurement device is estimated by SLAM using the image data acquired by the reference measurement device.
(18) The information processing method according to any one of (11) to (17), further comprising

integrating a first coordinate system having been set in each of the measurement devices into a common second coordinate system, wherein
the positions of the plurality of sites are measured as positions in the second coordinate system.

(19) The information processing method according to (18), wherein
the first coordinate systems of the individual measurement devices are integrated into the second coordinate system based on image data obtained by imaging, individually by the measurement devices, a marker provided in an external environment or any of the plurality of measurement devices.
(20) The information processing method according to any one of (11) to (19), wherein
each of the measurement devices includes at least one of an image sensor, a distance measurement sensor, or an EVS, as a sensor that acquires the image data.

Reference Signs List

1, 1A to 1E, 2, 2A, 2B, 3, 3A BODY TRACKING SYSTEM
10, 10AL, 10AR, 10B, 10FL, 10FR, 10G, 10H MEASUREMENT DEVICE
20, 220 RELAY APPARATUS
30 COMMUNICATION APPARATUS
40 INFORMATION PROCESSING APPARATUS
50 DISPLAY APPARATUS
60 NETWORK
70, 470 SERVER
80 HMD
101-1, 101-2 HOUSING
102-1, 102-2 LENS
103 BELT
111, 111-1 to 111-n SENSOR
111g NON-OPTICAL SENSOR
112, 221 IMU
113, 121, 141 PROCESSING UNIT
114, 122, 142 RECORDING UNIT
115, 123, 143 COMMUNICATION UNIT
116, 124, 145 POWER SUPPLY
144 IMAGE PROCESSING UNIT
222, 311 GNSS RECEIVER
310H, 310HD REFERENCE MEASUREMENT DEVICE
411A, 411B CAMERA

**Claims**

1. An information processing apparatus comprising

   a processing unit configured to measure positions of a plurality of sites of a user based on positions of a plurality of measurement devices each attached to the user to acquire image data of the user and the image data acquired by each of the plurality of measurement devices, wherein
   the position of each of the plurality of measurement devices is self-estimated by the measurement device or measured using another measurement device attached to the user.

2. The information processing apparatus according to claim 1, wherein

   each of the measurement devices is attached to any of the plurality of sites of the user, and
   the processing unit estimates the position of the site equipped with each of the measurement devices by Simultaneous Localization and Mapping (SLAM) that uses the image data acquired by each of the measurement devices.

3. The information processing apparatus according to claim 1, wherein
   the processing unit measures a position of at least one site out of the plurality of sites by using triangulation based on the image data acquired by at least two measurement devices out of the plurality of measurement devices.

4. The information processing apparatus according to claim 1, wherein
   the processing unit measures a position of a site between a reference site and a site whose position has been estimated, among the plurality of sites based on a skeleton model of a human body.

5. The information processing apparatus according to claim 1, wherein

   each of the measurement devices is attached to any of the plurality of sites of the user, and
   the processing unit measures a position of the site equipped with each of the measurement devices with a marker attached to the user as a reference.

6. The information processing apparatus according to claim 1, wherein

   each of the measurement devices is attached to any of the plurality of sites of the user, and
   the processing unit measures a position of a site equipped with the measurement device, among the plurality of sites by using triangulation based on image data of each of the measurement devices, the image data having been acquired by a reference measurement device including at least two sensors.

7. The information processing apparatus according to claim 6, wherein
   the processing unit estimates a position of the reference measurement device by SLAM using the image data acquired by the reference measurement device.

8. The information processing apparatus according to claim 1, wherein
   the processing unit integrates a first coordinate system having been set in each of the measurement devices into a common second coordinate system so as to measure the positions of the plurality of sites in the second coordinate system.

9. The information processing apparatus according to claim 8, wherein
   the processing unit integrates the first coordinate systems of the individual measurement devices into the second coordinate system based on image data obtained by imaging, individually by the measurement devices, a marker provided in an external environment or any of the plurality of measurement devices.

10. The information processing apparatus according to claim 1, wherein
    each of the measurement devices includes at least one of an image sensor, a distance measurement sensor, or an EVS, as a sensor that acquires the image data.

11. An information processing method comprising

measuring positions of a plurality of sites of a user based on positions of a plurality of measurement devices each attached to the user to acquire image data of the user and the image data acquired by each of the plurality of measurement devices, wherein

the position of each of the plurality of measurement devices is self-estimated by the measurement device or measured using another measurement device attached to the user.

12. The information processing method according to claim 11, wherein

each of the measurement devices is attached to any of the plurality of sites of the user, and

the position of the site equipped with each of the measurement devices is estimated by Simultaneous Localization and Mapping (SLAM) that uses the image data acquired by each of the measurement devices.

13. The information processing method according to claim 11, wherein a position of at least one site out of the plurality of sites is measured by using triangulation based on the image data acquired by at least two measurement devices out of the plurality of measurement devices.

14. The information processing method according to claim 11, wherein a position of a site between a reference site and a site whose position has been estimated, among the plurality of sites, is measured based on a skeleton model of a human body.

15. The information processing method according to claim 11, wherein

each of the measurement devices is attached to any of the plurality of sites of the user, and

a position of the site equipped with each of the measurement devices is measured with a marker attached to the user as a reference.

16. The information processing method according to claim 11, wherein

each of the measurement devices is attached to any of the plurality of sites of the user, and

a position of a site equipped with the measurement device, among the plurality of sites, is measured by using triangulation based on image data of each of the measurement devices, the image data having been acquired by a reference measurement device including at least two sensors.

17. The information processing method according to claim 16, wherein a position of the reference measurement device is estimated by SLAM using the image data acquired by the reference measurement device.

18. The information processing method according to claim 11, further comprising

integrating a first coordinate system having been set in each of the measurement devices into a common second coordinate system, wherein

the positions of the plurality of sites are measured as positions in the second coordinate system.

19. The information processing method according to claim 18, wherein the first coordinate systems of the individual measurement devices are integrated into the second coordinate system based on image data obtained by imaging, individually by the measurement devices, a marker provided in an external environment or any of the plurality of measurement devices.

20. The information processing method according to claim 11, wherein each of the measurement devices includes at least one of an image sensor, a distance measurement sensor, or an EVS, as a sensor that acquires the image data.

# FIG.1

# FIG.2

EP 4 625 312 A1

# FIG.3

# FIG.4

(A)

(C)

102-1

103

101-2

101-1
101-2

102-2

102-2

(B)

10

102-1

102-2

101-1    101-2

103

# FIG.5

# FIG.6

(A)

(C)

102-1

102-1

103

102-1

102-1

102-1

102-1

102-2 102-2

102-2

102-2

102-2

101-1

101-2

102-2 101-2

102-1

102-1

(B)

102-1

102-2

101-1

102-1

102-2

102-1

102-2

102-1

101-2

102-1

103

102-2

10

# FIG.7

# FIG.8

# FIG.9

# FIG.10

# FIG.11

# FIG.12

# FIG.13

10AR

# FIG.14

10AR

# FIG.15

10AR

# FIG.16

10AR

# FIG.17

111g

10G

# FIG.18

```
                    ┌─────────────┐
                    │    START    │
                    └──────┬──────┘
                           ↓
┌────────────────────────────────────────────────────┐
│   TURN ON POWER FOR EACH MEASUREMENT DEVICE         │──S1
└────────────────────────┬───────────────────────────┘
                         ↓
┌────────────────────────────────────────────────────┐
│   START IMAGING ON EACH MEASUREMENT DEVICE          │──S2
└────────────────────────┬───────────────────────────┘
                         ↓
┌────────────────────────────────────────────────────┐
│   START SLAM ON EACH MEASUREMENT DEVICE             │──S3
└────────────────────────┬───────────────────────────┘
                         ↓
┌────────────────────────────────────────────────────┐
│   START TRANSMISSION OF SELF-POSITION FROM EACH     │
│   MEASUREMENT DEVICE TO INFORMATION PROCESSING      │──S4
│   APPARATUS                                         │
└────────────────────────┬───────────────────────────┘
                         ↓
┌────────────────────────────────────────────────────┐
│   START IMAGE RECOGNITION IN EACH MEASUREMENT       │──S5
│   DEVICE                                            │
└────────────────────────┬───────────────────────────┘
                         ↓
```

NO ◇ HAS MARKER BEEN IMAGED? ── S6

YES

```
┌────────────────────────────────────────────────────┐
│   SET SELF-POSITION, AT MARKER IMAGING, OF EACH     │──S7
│   MEASUREMENT DEVICE TO NEW ORIGIN                  │
└────────────────────────┬───────────────────────────┘
                         ↓
┌────────────────────────────────────────────────────┐
│   SET COORDINATE SYSTEM HAVING NEW ORIGIN AS        │──S8
│   ORIGIN IN EACH MEASUREMENT DEVICE                 │
└────────────────────────┬───────────────────────────┘
                         ↓
┌────────────────────────────────────────────────────┐
│   TRANSMIT MARKER COORDINATE INFORMATION OF         │
│   EACH MEASUREMENT DEVICE TO INFORMATION            │──S9
│   PROCESSING APPARATUS                              │
└────────────────────────┬───────────────────────────┘
                         ↓
┌────────────────────────────────────────────────────┐
│   INFORMATION PROCESSING APPARATUS GENERATES        │
│   TRANSFORMATION MATRIX FOR INTEGRATING             │
│   COORDINATE SYSTEMS OF INDIVIDUAL MEASUREMENT      │──S10
│   DEVICES BASED ON MARKER COORDINATE                │
│   INFORMATION RECEIVED FROM EACH MEASUREMENT        │
│   DEVICE                                            │
└────────────────────────┬───────────────────────────┘
                         ↓
┌────────────────────────────────────────────────────┐
│   INTEGRATE COORDINATE SYSTEMS OF INDIVIDUAL        │──S11
│   MEASUREMENT DEVICES                               │
└────────────────────────┬───────────────────────────┘
                         ↓
                    ┌─────────────┐
                    │     END     │
                    └─────────────┘
```

# FIG.19

# FIG.20

# FIG.21

START

ACQUIRE INITIAL THREE-DIMENSIONAL MAP — S101

EXECUTE SLAM FOR EACH MEASUREMENT DEVICE — S102

MEASURE POSITION OF EACH SITE OF USER — S103

INPUT ESTIMATED POSITION TO APPLICATION — S104

END OPERATION? — S105

NO

YES

END

# FIG.22

START

EXECUTE SLAM FOR CREATING INITIAL THREE-DIMENSIONAL MAP — S111a

IS INTEGRATION POSSIBLE? — S112a — 10a
NO
YES

MAP INTEGRATION PROCESSING — S113a

EXECUTE SLAM FOR CREATING INITIAL THREE-DIMENSIONAL MAP — S111b

IS INTEGRATION POSSIBLE? — S112b — 10b
NO
YES

MAP INTEGRATION PROCESSING — S113b

···

EXECUTE SLAM FOR CREATING INITIAL THREE-DIMENSIONAL MAP — S111n

IS INTEGRATION POSSIBLE? — S112n — 10n
NO
YES

MAP INTEGRATION PROCESSING — S113n

TO S102

EP 4 625 312 A1

# FIG.23

SP

CL

y

z⊙→x

10AL

# FIG.24

SP

y

CR

z⊙→x

10AR

# FIG.25

# FIG.26

U

(R1,t1) (R2,t2)$^{-1}$

10AL

10AR

R1,t1

R2,t2

MK

# FIG.27

U

10AL

(R1,t1) (R2,t2)$^{-1}$

R2,t2

R1,t1

10FL

MK

# FIG.28

START

EXECUTE SLAM FOR CREATING INITIAL THREE-DIMENSIONAL MAP IN EACH MEASUREMENT DEVICE — S121

ACQUIRE IMAGE DATA FROM EACH MEASUREMENT DEVICE — S122

EXECUTE RECOGNITION PROCESSING ON EACH IMAGE DATA — S123

IS IDENTICAL SUBJECT CAPTURED IN IMAGE? — S124

NO

YES

EXECUTE SEMANTIC SEGMENTATION ON EACH IMAGE DATA — S125

EXTRACT FEATURE POINTS FROM EACH IMAGE DATA — S126

DETERMINE CORRESPONDING PIXELS — S127

MAP INTEGRATION PROCESSING — S128

TO S102

# FIG.29

# FIG.30

# FIG.31

# FIG.32

# FIG.33

# FIG.34

(A)　　　　　　　　　　　　　　　　　(B)

# FIG.35

FROM S101

ACQUIRE IMAGE DATA OR FEATURE POINTS, AS WELL AS 6DoF DATA, FROM EACH MEASUREMENT DEVICE — S131

ESTIMATE POSITION OF EACH MEASUREMENT DEVICE ON SERVER MAP COORDINATE SYSTEM — S132

UPDATE THREE-DIMENSIONAL MAP — S133

TO S103

# FIG.36

FROM S101

TRANSMIT INITIAL THREE-DIMENSIONAL MAP TO EACH MEASUREMENT DEVICE — S141

ACQUIRE IMAGE DATA OR FEATURE POINTS, AS WELL AS 6DoF DATA IN EACH MEASUREMENT DEVICE — S142

ESTIMATE POSITION OF EACH MEASUREMENT DEVICE ON SERVER MAP COORDINATE SYSTEM IN EACH MEASUREMENT DEVICE — S143

UPDATE THREE-DIMENSIONAL MAP IN EACH MEASUREMENT DEVICE — S144

ACQUIRE POSITION INFORMATION ON SERVER MAP COORDINATE SYSTEM FROM EACH MEASUREMENT DEVICE — S145

TO S103

# FIG.37

FROM S101

GENERATE TRANSFORMATION MATRIX FOR TRANSFORMING CLIENT MAP COORDINATE SYSTEM OF EACH MEASUREMENT DEVICE TO SERVER MAP COORDINATE SYSTEM — S151

ACQUIRE IMAGE DATA OR FEATURE POINTS, AS WELL AS 6DoF DATA IN EACH MEASUREMENT DEVICE — S152

ESTIMATE POSITION OF EACH MEASUREMENT DEVICE ON CLIENT MAP COORDINATE SYSTEM IN EACH MEASUREMENT DEVICE — S153

UPDATE THREE-DIMENSIONAL MAP IN EACH MEASUREMENT DEVICE — S154

ACQUIRE POSITION INFORMATION ON CLIENT MAP COORDINATE SYSTEM FROM EACH MEASUREMENT DEVICE — S155

TRANSFORM POSITION INFORMATION ON CLIENT MAP COORDINATE SYSTEM ACQUIRED FROM EACH MEASUREMENT DEVICE INTO POSITION INFORMATION ON SERVER MAP COORDINATE SYSTEM — S156

TO S103

# FIG.38

LIST OF PROCESSING

| (1) | ·IMAGING PROCESSING FOR SLAM |
|-----|------------------------------|
| (2) | ·IMAGE RECOGNITION PROCESSING<br>·FEATURE POINT EXTRACTION PROCESSING ON RECOGNIZED SUBJECT |
| (3) | ·WRIST POSITION MEASUREMENT PROCESSING<br>(CLIENT MAP COORDINATE SYSTEM) |
| (4) | ·COORDINATE TRANSFORM PROCESSING OF WRISTS POSITION TO<br>SERVER MAP COORDINATE SYSTEM |
| (5) | ·REFLECTION OF WRIST POSITION ON SERVER MAP COORDINATE<br>SYSTEM TO HUMAN BODY MODEL<br>·HUMAN BODY MODEL RENDERING |

# FIG.39

LIST OF INFORMATION

| (i) | ·IMAGE DATA (DEPTH DATA) |
|-----|--------------------------|
| (ii) | ·FEATURE POINT OF SUBJECT |
| (iii) | ·THREE-DIMENSIONAL POSITION INFORMATION OF<br>WRISTS ON CLIENT MAP COORDINATE SYSTEM |
| (iv) | ·THREE-DIMENSIONAL POSITION INFORMATION OF<br>WRISTS ON SERVER MAP COORDINATE SYSTEM |
| (v) | ·HUMAN BODY MODEL REFLECTING THREE-DIMENSIONAL<br>POSITION INFORMATION OF WRISTS |

# FIG.40

| MEAS-URE-MENT TARGET | PREPARATION PROCESSING | MEASUREMENT DEVICE | | | RELAY APPARATUS | | INFORMATION PROCESSING APPARATUS | |
|---|---|---|---|---|---|---|---|---|
| | | SENSOR | PROCESSING UNIT | OUTPUT DATA | PROCESSING OTHER THAN DATA RELAY | OUTPUT DATA | PROCESSING UNIT | OUTPUT DATA |
| WRISTS | PROCESSING OF INTEGRATING CLIENT MAP COORDINATE SYSTEM IN EACH MEASUREMENT DEVICE INTO SERVER MAP COORDINATE SYSTEM MANAGED BY INFORMATION PROCESSING APPARATUS | (1) | | (i) | | (i) | (2)(3)(4)(5) | (v) |
| | | | | | (2) | (ii) | (3)(4)(5) | (v) |
| | | | | | (2)(3) | (iii) | (4)(5) | (v) |
| | | | | | (2)(3)(4) | (iv) | (5) | (v) |
| | | | (2) | (ii) | | (ii) | (3)(4)(5) | (v) |
| | | | | | (3) | (iii) | (4)(5) | (v) |
| | | | | | (3),(4) | (iv) | (5) | (v) |
| | | | (2),(3) | (iii) | | (iii) | (4)(5) | (v) |
| | | | | | (4) | (iv) | (5) | (v) |
| | | | (2)(3)(4) | (iv) | | (iv) | (5) | (v) |

EP 4 625 312 A1

# FIG.41

LIST OF PROCESSING

| (1) | ·IMAGING PROCESSING FOR SLAM |
|---|---|
| (2) | ·IMAGE RECOGNITION PROCESSING<br>·FEATURE POINT EXTRACTION PROCESSING ON RECOGNIZED SUBJECT |
| (3) | ·WRIST POSITION MEASUREMENT PROCESSING<br>(CLIENT MAP COORDINATE SYSTEM) |
| (4) | ·COORDINATE TRANSFORM PROCESSING OF WRISTS POSITION TO<br>SERVER MAP COORDINATE SYSTEM |
| (5) | ·PROCESSING OF ACQUIRING ULNA ORIENTATION INFORMATION<br>(Yaw, Pitch, AND Roll) |
| (6) | ·ELBOW AND SHOULDER POSITION MEASUREMENT PROCESSING<br>(CLIENT MAP COORDINATE SYSTEM) |
| (7) | ·COORDINATE TRANSFORM PROCESSING OF ELBOW AND SHOULDER<br>POSITION INTO SERVER MAP COORDINATE SYSTEM |
| (8) | ·REFLECTION OF ELBOW AND SHOULDER POSITIONS ON SERVER MAP<br>COORDINATE SYSTEM TO HUMAN BODY MODEL<br>·HUMAN BODY MODEL RENDERING |

# FIG.42

LIST OF INFORMATION

| (i) | ·IMAGE DATA (DEPTH DATA) |
|---|---|
| (ii) | ·FEATURE POINT OF SUBJECT |
| (iii) | ·THREE-DIMENSIONAL POSITION INFORMATION OF<br>WRISTS ON CLIENT MAP COORDINATE SYSTEM |
| (iv) | ·THREE-DIMENSIONAL POSITION INFORMATION OF<br>WRISTS ON SERVER MAP COORDINATE SYSTEM |
| (v) | ·ULNA ORIENTATION INFORMATION |
| (vi) | ·THREE-DIMENSIONAL POSITION INFORMATION OF<br>ELBOWS AND SHOULDERS ON CLIENT MAP COORDINATE<br>SYSTEM |
| (vii) | ·THREE-DIMENSIONAL POSITION INFORMATION OF<br>ELBOWS AND SHOULDERS ON SERVER MAP COORDINATE<br>SYSTEM |
| (viii) | ·HUMAN BODY MODEL REFLECTING THREE-DIMENSIONAL<br>POSITION INFORMATION OF ELBOWS AND SHOULDERS |

# FIG.43

| MEASURE-MENT TARGET | PREPARATION PROCESSING | MEASUREMENT DEVICE | | | | RELAY APPARATUS | | INFORMATION PROCESSING APPARATUS | |
|---|---|---|---|---|---|---|---|---|---|
| | | SENSOR | IMU | PROCESSING UNIT | OUTPUT DATA | PROCESSING OTHER THAN DATA RELAY | OUTPUT DATA | PROCESSING UNIT | OUTPUT DATA |
| ELBOWS AND SHOULDERS | SPECIFY LENGTH OF ULNA AND LENGTH OF HUMERUS, SPECIFY LENGTH FROM TRUNK REFERENCE POSITION TO SHOULDER | (1) | (5) | | (i)(v) | | (i)(v) | (2) TO (4),(6) TO (8) | (viii) |
| | | | | | | (2) | (ii)(v) | (3)(4),(6) TO (8) | (viii) |
| | | | | | | (2)(3) | (iii)(v) | (4),(6) TO (8) | (viii) |
| | | | | | | (2)(3)(4) | (iv)(v) | (6) TO (8) | (viii) |
| | | | | | | (2)(3)(4)(6) | (iv)(vi) | (7)(8) | (viii) |
| | | | | | | (2)(3)(4)(6)(7) | (iv)(vii) | (8) | (viii) |
| | | | | (2) | (ii)(v) | | (ii)(v) | (3)(4),(6) TO (8) | (viii) |
| | | | | | | (3) | (iii)(v) | (4),(6) TO (8) | (viii) |
| | | | | | | (3)(4) | (iv)(v) | (6) TO (8) | (viii) |
| | | | | | | (3)(4)(6) | (iv)(vi) | (7)(8) | (viii) |
| | | | | | | (3)(4)(6)(7) | (iv)(vii) | (8) | (viii) |
| | | | | (2)(3) | (iii)(v) | | (iii)(v) | (4),(6) TO (8) | (viii) |
| | | | | | | (4) | (iv)(v) | (6) TO (8) | (viii) |
| | | | | | | (4)(6) | (iv)(vi) | (7)(8) | (viii) |
| | | | | | | (4)(6)(7) | (iv)(vii) | (8) | (viii) |
| | | | | (2)(3)(4) | (iv)(v) | | (iv)(v) | (6) TO (8) | (viii) |
| | | | | | | (6) | (iv)(vi) | (7)(8) | (viii) |
| | | | | | | (6)(7) | (iv)(vii) | (8) | (viii) |
| | | | | (2)(3)(4)(6) | (iv)(v) | | (iv)(vi) | (7)(8) | (viii) |
| | | | | | | (7) | (iv)(vii) | (8) | (viii) |
| | | | | (2)(3)(4)(6)(7) | (iv)(v) | | (iv)(vii) | (8) | (viii) |

# FIG.44

LIST OF PROCESSING

| (1) | ・IMAGING PROCESSING FOR SLAM |
|---|---|
| (2) | ・IMAGE RECOGNITION PROCESSING<br>・FEATURE POINT EXTRACTION PROCESSING ON RECOGNIZED SUBJECT |
| (3) | ・WRIST POSITION MEASUREMENT PROCESSING<br>(CLIENT MAP COORDINATE SYSTEM) |
| (4) | ・COORDINATE TRANSFORM PROCESSING OF WRISTS POSITION TO<br>SERVER MAP COORDINATE SYSTEM |
| (5) | ・IMAGING PROCESSING OF KNEES AND ANKLES |
| (6) | ・IMAGE RECOGNITION PROCESSING OF KNEES AND ANKLES<br>・FEATURE POINT EXTRACTION PROCESSING OF KNEES AND ANKLES |
| (7) | ・PROCESSING OF ACQUIRING WRIST ORIENTATION INFORMATION<br>(Yaw, Pitch, AND Roll) |
| (8) | ・PROCESSING OF CALCULATING POSITIONS OF KNEES AND ANKLES ON<br>SERVER MAP COORDINATE SYSTEM USING TRIANGULATION |
| (9) | ・REFLECTION OF KNEE AND ANKLE POSITIONS ON SERVER MAP<br>COORDINATE SYSTEM TO HUMAN BODY MODEL<br>・HUMAN BODY MODEL RENDERING |

# FIG.45

LIST OF INFORMATION

| (i) | ・IMAGE DATA (DEPTH DATA) |
|---|---|
| (ii) | ・FEATURE POINT OF SUBJECT |
| (iii) | ・THREE-DIMENSIONAL POSITION INFORMATION OF<br>WRISTS ON CLIENT MAP COORDINATE SYSTEM |
| (iv) | ・THREE-DIMENSIONAL POSITION INFORMATION OF<br>WRISTS ON SERVER MAP COORDINATE SYSTEM |
| (v) | ・IMAGE DATA (DEPTH DATA) OF KNEES AND ANKLES |
| (vi) | ・FEATURE POINTS OF KNEES AND ANKLES |
| (vii) | ・WRIST ORIENTATION INFORMATION |
| (viii) | ・THREE-DIMENSIONAL POSITION INFORMATION OF KNEES<br>AND ANKLES ON SERVER MAP COORDINATE SYSTEM |
| (ix) | ・HUMAN BODY MODEL REFLECTING THREE-DIMENSIONAL<br>POSITION INFORMATION OF KNEES AND ANKLES |

FIG.46

| MEASUREMENT TARGET | PREPARATION PROCESSING | MEASUREMENT DEVICE | | | | RELAY APPARATUS | | INFORMATION PROCESSING APPARATUS | |
|---|---|---|---|---|---|---|---|---|---|
| | | SENSOR | IMU | PROCESSING UNIT | OUTPUT DATA | PROCESSING OTHER THAN DATA RELAY | OUTPUT DATA | PROCESSING UNIT | OUTPUT DATA |
| KNEES AND ANKLES | | (1)(5) | (7) | | (i)(v)(vii) | | (i)(v)(vii) | (2) TO (4),(6)(8)(9) | (ix) |
| | | | | | | (2) | (ii)(v)(vii) | (3)(4)(6)(8)(9) | (ix) |
| | | | | | | (2)(3) | (iii)(v)(vii) | (4)(6)(8)(9) | (ix) |
| | | | | | | (2)(3)(4) | (iv)(v)(vii) | (6)(8)(9) | (ix) |
| | | | | | | (2)(3)(4)(6) | (iv)(vi)(vii) | (8)(9) | (ix) |
| | | | | | | (2)(3)(4)(6)(8) | (iv)(viii) | (9) | (ix) |
| | | | | (2) | (ii)(v)(vii) | | (ii)(v)(vii) | (3)(4)(6)(8)(9) | (ix) |
| | | | | | | (3) | (iii)(v)(vii) | (4)(6)(8)(9) | (ix) |
| | | | | | | (3)(4) | (iv)(v)(vii) | (6)(8)(9) | (ix) |
| | | | | | | (3)(4)(6) | (iv)(vi)(vii) | (8)(9) | (ix) |
| | | | | | | (3)(4)(6)(8) | (iv)(viii) | (9) | (ix) |
| | | | | (2)(3) | (iii)(v)(vii) | | (iii)(v)(vii) | (4)(6)(8)(9) | (ix) |
| | | | | | | (4) | (iv)(v)(vii) | (6)(8)(9) | (ix) |
| | | | | | | (4)(6) | (iv)(vi)(vii) | (8)(9) | (ix) |
| | | | | | | (4)(6)(8) | (iv)(viii) | (9) | (ix) |
| | | | | (2)(3)(4) | (iv)(v)(vii) | | (iv)(v)(vii) | (6)(8)(9) | (ix) |
| | | | | | | (6) | (iv)(vi)(vii) | (8)(9) | (ix) |
| | | | | | | (6)(8) | (iv)(viii) | (9) | (ix) |
| | | | | (2)(3)(4)(6) | (iv)(vi)(vii) | | (iv)(vi)(vii) | (8)(9) | (ix) |
| | | | | | | (8) | (iv)(viii) | (9) | (ix) |
| | | | | (2)(3)(4)(6)(8) | (iv)(vi)(vii) | | (iv)(viii) | (9) | (ix) |

EP 4 625 312 A1

# FIG.47

LIST OF PROCESSING

| (1) | ·IMAGING PROCESSING FOR SLAM |
|---|---|
| (2) | ·IMAGE RECOGNITION PROCESSING<br>·FEATURE POINT EXTRACTION PROCESSING ON RECOGNIZED SUBJECT |
| (3) | ·WRIST POSITION MEASUREMENT PROCESSING<br>(CLIENT MAP COORDINATE SYSTEM) |
| (4) | ·COORDINATE TRANSFORM PROCESSING OF WRISTS POSITION TO<br>SERVER MAP COORDINATE SYSTEM |
| (5) | ·IMAGING PROCESSING OF HEAD AND TRUNK |
| (6) | ·IMAGE RECOGNITION PROCESSING OF HEAD AND TRUNK<br>·FEATURE POINT EXTRACTION PROCESSING OF HEAD AND TRUNK |
| (7) | ·PROCESSING OF ACQUIRING WRIST ORIENTATION INFORMATION<br>(Yaw, Pitch, AND Roll) |
| (8) | ·PROCESSING OF CALCULATING POSITIONS OF HEAD AND TRUNK ON<br>SERVER MAP COORDINATE SYSTEM USING TRIANGULATION |
| (9) | ·REFLECTION OF HEAD AND TRUNK POSITIONS ON SERVER MAP<br>COORDINATE SYSTEM TO HUMAN BODY MODEL<br>·HUMAN BODY MODEL RENDERING |

# FIG.48

LIST OF INFORMATION

| (i) | ·IMAGE DATA (DEPTH DATA) |
|---|---|
| (ii) | ·FEATURE POINT OF SUBJECT |
| (iii) | ·THREE-DIMENSIONAL POSITION INFORMATION OF<br>WRISTS ON CLIENT MAP COORDINATE SYSTEM |
| (iv) | ·THREE-DIMENSIONAL POSITION INFORMATION OF<br>WRISTS ON SERVER MAP COORDINATE SYSTEM |
| (v) | ·IMAGE DATA (DEPTH DATA) OF HEAD AND TRUNK |
| (vi) | ·FEATURE POINTS OF HEAD AND TRUNK |
| (vii) | ·WRIST ORIENTATION INFORMATION |
| (viii) | ·THREE-DIMENSIONAL POSITION INFORMATION OF HEAD<br>AND TRUNK ON SERVER MAP COORDINATE SYSTEM |
| (ix) | ·HUMAN BODY MODEL REFLECTING THREE-DIMENSIONAL<br>POSITION INFORMATION OF HEAD AND TRUNK |

# FIG.49

EP 4 625 312 A1

| MEASURE-MENT TARGET | PREPA-RATION PROC-ESSING | MEASUREMENT DEVICE | | | | RELAY APPARATUS | | INFORMATION PROCESSING APPARATUS | |
|---|---|---|---|---|---|---|---|---|---|
| | | SENSOR | IMU | PROCESSING UNIT | OUTPUT DATA | PROCESSING OTHER THAN DATA RELAY | OUTPUT DATA | PROCESSING UNIT | OUTPUT DATA |
| HEAD AND TRUNK | | (1)(5) | (7) | | (i)(v)(vii) | | (i)(v)(vii) | (2) TO (4),(6)(8)(9) | (ix) |
| | | | | | | (2) | (ii)(v)(vii) | (3)(4)(6)(8)(9) | (ix) |
| | | | | | | (2)(3) | (iii)(v)(vii) | (4)(6)(8)(9) | (ix) |
| | | | | | | (2)(3)(4) | (iv)(v)(vii) | (6)(8)(9) | (ix) |
| | | | | | | (2)(3)(4)(6) | (iv)(vi)(vii) | (8)(9) | (ix) |
| | | | | | | (2)(3)(4)(6)(8) | (iv)(viii) | (9) | (ix) |
| | | | | (2) | (ii)(v)(vii) | | (ii)(v)(vii) | (3)(4)(6)(8)(9) | (ix) |
| | | | | | | (3) | (iii)(v)(vii) | (4)(6)(8)(9) | (ix) |
| | | | | | | (3)(4) | (iv)(v)(vii) | (6)(8)(9) | (ix) |
| | | | | | | (3)(4)(6) | (iv)(vi)(vii) | (8)(9) | (ix) |
| | | | | | | (3)(4)(6)(8) | (iv)(viii) | (9) | (ix) |
| | | | | (2)(3) | (iii)(v)(vii) | | (iii)(v)(vii) | (4)(6)(8)(9) | (ix) |
| | | | | | | (4) | (iv)(v)(vii) | (6)(8)(9) | (ix) |
| | | | | | | (4)(6) | (iv)(vi)(vii) | (8)(9) | (ix) |
| | | | | | | (4)(6)(8) | (iv)(viii) | (9) | (ix) |
| | | | | (2)(3)(4) | (iv)(v)(vii) | | (iv)(v)(vii) | (6)(8)(9) | (ix) |
| | | | | | | (6) | (iv)(vi)(vii) | (8)(9) | (ix) |
| | | | | | | (6)(8) | (iv)(viii) | (9) | (ix) |
| | | | | (2)(3)(4)(6) | (iv)(vi)(vii) | | (iv)(vi)(vii) | (8)(9) | (ix) |
| | | | | | | (8) | (iv)(viii) | (9) | (ix) |
| | | | | (2)(3)(4)(6)(8) | (iv)(vi)(vii) | | (iv)(viii) | (9) | (ix) |

# FIG.50

# FIG.51

# FIG.52

# FIG.53

# FIG.54

# FIG.55

# FIG.56

# FIG.57

# FIG.58

# FIG.59

# FIG.60

# FIG.61

# FIG.62

# FIG.63

START

EXTERNAL COORDINATE SYSTEM — S211

BREAST CAMERA COORDINATE SYSTEM — S212

CAMERA COORDINATE SYSTEM OF EACH SITE — S213

END

# FIG.64

START

EXTERNAL COORDINATE SYSTEM — S221

CAMERA COORDINATE SYSTEM OF EACH SITE — S222

END

# FIG.65

START

BREAST CAMERA COORDINATE SYSTEM — S231

CAMERA COORDINATE SYSTEM OF EACH SITE — S232

END

# FIG.66

LIST OF PROCESSING

| (1) | ·MARKER IMAGING PROCESSING FOR SELF-POSITION ESTIMATION |
|-----|---------------------------------------------------------|
| (2) | ·PROCESSING OF RECOGNIZING MARKER IN IMAGE<br>·FEATURE POINT EXTRACTION PROCESSING ON RECOGNIZED MARKER<br>·PROCESSING OF OBTAINING DIRECTIONS AND POSITIONS OF FEATURE POINTS, MUTUAL POSITIONAL RELATIONSHIP BETWEEN FEATURE POINTS, ETC. |
| (3) | ·WRIST POSITION MEASUREMENT PROCESSING BASED ON IMAGE INCLUDING MARKER (CLIENT MAP COORDINATE SYSTEM) |
| (4) | ·COORDINATE TRANSFORM PROCESSING OF WRISTS POSITION TO SERVER MAP COORDINATE SYSTEM |
| (5) | ·REFLECTION OF WRIST POSITION ON SERVER MAP COORDINATE SYSTEM TO HUMAN BODY MODEL<br>·HUMAN BODY MODEL RENDERING |

# FIG.67

LIST OF INFORMATION

| (i) | ·IMAGE DATA (DEPTH DATA) INCLUDING MARKER |
|------|-------------------------------------------|
| (ii) | ·FEATURE POINT OF MARKER |
| (iii) | ·THREE-DIMENSIONAL POSITION INFORMATION OF WRISTS ON CLIENT MAP COORDINATE SYSTEM |
| (iv) | ·THREE-DIMENSIONAL POSITION INFORMATION OF WRISTS ON SERVER MAP COORDINATE SYSTEM |
| (v) | ·HUMAN BODY MODEL REFLECTING THREE-DIMENSIONAL POSITION INFORMATION OF WRISTS |

## FIG.68

| MEAS-URE-MENT TARGET | PREPARATION PROCESSING | MEASUREMENT DEVICE | | | RELAY APPARATUS | | INFORMATION PROCESSING APPARATUS | |
|---|---|---|---|---|---|---|---|---|
| | | SENSOR | PROCESSING UNIT | OUTPUT DATA | PROCESSING OTHER THAN DATA RELAY | OUTPUT DATA | PROCESSING UNIT | OUTPUT DATA |
| WRISTS | PROCESSING OF INTEGRATING CLIENT MAP COORDINATE SYSTEM IN EACH MEASUREMENT DEVICE INTO SERVER MAP COORDINATE SYSTEM MANAGED BY INFORMATION PROCESSING APPARATUS, AND PROCESSING OF INTEGRATING COORDINATE SYSTEMS OF BODY FRONT/BACK | | (1) | (i) | | (i) | (2)(3)(4)(5) | (v) |
| | | | | | (2) | (ii) | (3)(4)(5) | (v) |
| | | | | | (2)(3) | (iii) | (4)(5) | (v) |
| | | | | | (2)(3)(4) | (iv) | (5) | (v) |
| | | | (2) | (ii) | | (ii) | (3)(4)(5) | (v) |
| | | | | | (3) | (iii) | (4)(5) | (v) |
| | | | | | (3),(4) | (iv) | (5) | (v) |
| | | | (2),(3) | (iii) | | (iii) | (4)(5) | (v) |
| | | | | | (4) | (iv) | (5) | (v) |
| | | | (2)(3)(4) | (iv) | | (iv) | (5) | (v) |

EP 4 625 312 A1

# FIG.69

LIST OF PROCESSING

| (1) | · MARKER IMAGING PROCESSING FOR SELF-POSITION ESTIMATION |
|---|---|
| (2) | · PROCESSING OF RECOGNIZING MARKER IN IMAGE<br>· FEATURE POINT EXTRACTION PROCESSING ON RECOGNIZED MARKER<br>· PROCESSING OF OBTAINING DIRECTIONS AND POSITIONS OF FEATURE POINTS, MUTUAL POSITIONAL RELATIONSHIP BETWEEN FEATURE POINTS, ETC. |
| (3) | · WRIST POSITION MEASUREMENT PROCESSING BASED ON IMAGE INCLUDING MARKER (CLIENT MAP COORDINATE SYSTEM) |
| (4) | · COORDINATE TRANSFORM PROCESSING OF WRISTS POSITION TO SERVER MAP COORDINATE SYSTEM |
| (5) | · PROCESSING OF ACQUIRING ULNA ORIENTATION INFORMATION (Yaw, Pitch, AND Roll) |
| (6) | · ELBOW AND SHOULDER POSITION MEASUREMENT PROCESSING (CLIENT MAP COORDINATE SYSTEM) |
| (7) | · COORDINATE TRANSFORM PROCESSING OF ELBOW AND SHOULDER POSITIONS INTO SERVER MAP COORDINATE SYSTEM |
| (8) | · REFLECTION OF ELBOW AND SHOULDER POSITIONS ON SERVER MAP COORDINATE SYSTEM TO HUMAN BODY MODEL<br>· HUMAN BODY MODEL RENDERING |

# FIG.70

LIST OF INFORMATION

| (i) | · IMAGE DATA (DEPTH DATA) INCLUDING MARKER |
|---|---|
| (ii) | · FEATURE POINT OF MARKER |
| (iii) | · THREE-DIMENSIONAL POSITION INFORMATION OF WRISTS ON CLIENT MAP COORDINATE SYSTEM |
| (iv) | · THREE-DIMENSIONAL POSITION INFORMATION OF WRISTS ON SERVER MAP COORDINATE SYSTEM |
| (v) | · ULNA ORIENTATION INFORMATION |
| (vi) | · THREE-DIMENSIONAL POSITION INFORMATION OF ELBOWS AND SHOULDERS ON CLIENT MAP COORDINATE SYSTEM |
| (vii) | · THREE-DIMENSIONAL POSITION INFORMATION OF ELBOWS AND SHOULDERS ON SERVER MAP COORDINATE SYSTEM |
| (viii) | · HUMAN BODY MODEL REFLECTING THREE-DIMENSIONAL POSITION INFORMATION OF ELBOWS AND SHOULDERS |

# FIG.71

| MEASURE-MENT TARGET | PREPARATION PROCESSING | MEASUREMENT DEVICE | | | | RELAY APPARATUS | | INFORMATION PROCESSING APPARATUS | |
|---|---|---|---|---|---|---|---|---|---|
| | | SENSOR | IMU | PROCESSING UNIT | OUTPUT DATA | PROCESSING OTHER THAN DATA RELAY | OUTPUT DATA | PROCESSING UNIT | OUTPUT DATA |
| ELBOWS AND SHOULDERS | SPECIFY LENGTH OF ULNA AND LENGTH OF HUMERUS, SPECIFY LENGTH FROM TRUNK REFERENCE POSITION TO SHOULDER | (1) | (5) | | (i)(v) | | (i)(v) | (2) TO (4),(6) TO (8) | (viii) |
| | | | | | | (2) | (ii)(v) | (3)(4),(6) TO (8) | (viii) |
| | | | | | | (2)(3) | (iii)(v) | (4),(6) TO (8) | (viii) |
| | | | | | | (2)(3)(4) | (iv)(v) | (6) TO (8) | (viii) |
| | | | | | | (2)(3)(4)(6) | (iv)(vi) | (7)(8) | (viii) |
| | | | | | | (2)(3)(4)(6)(7) | (iv)(vii) | (8) | (viii) |
| | | | | (2) | (ii)(v) | | (ii)(v) | (3)(4),(6) TO (8) | (viii) |
| | | | | | | (3) | (iii)(v) | (4),(6) TO (8) | (viii) |
| | | | | | | (3)(4) | (iv)(v) | (6) TO (8) | (viii) |
| | | | | | | (3)(4)(6) | (iv)(vi) | (7)(8) | (viii) |
| | | | | | | (3)(4)(6)(7) | (iv)(vii) | (8) | (viii) |
| | | | | (2)(3) | (iii)(v) | | (iii)(v) | (4),(6) TO (8) | (viii) |
| | | | | | | (4) | (iv)(v) | (6) TO (8) | (viii) |
| | | | | | | (4)(6) | (iv)(vi) | (7)(8) | (viii) |
| | | | | | | (4)(6)(7) | (iv)(vii) | (8) | (viii) |
| | | | | (2)(3)(4) | (iv)(v) | | (iv)(v) | (6) TO (8) | (viii) |
| | | | | | | (6) | (iv)(vi) | (7)(8) | (viii) |
| | | | | | | (6)(7) | (iv)(vii) | (8) | (viii) |
| | | | | (2)(3)(4)(6) | (iv)(v) | | (iv)(vi) | (7)(8) | (viii) |
| | | | | | | (7) | (iv)(vii) | (8) | (viii) |
| | | | | (2)(3)(4)(6)(7) | (iv)(v) | | (iv)(vii) | (8) | (viii) |

# FIG.72

LIST OF PROCESSING

| | |
|---|---|
| (1) | · MARKER IMAGING PROCESSING FOR SELF-POSITION ESTIMATION |
| (2) | · PROCESSING OF RECOGNIZING MARKER IN IMAGE<br>· FEATURE POINT EXTRACTION PROCESSING ON RECOGNIZED MARKER<br>· PROCESSING OF OBTAINING DIRECTIONS AND POSITIONS OF FEATURE POINTS, MUTUAL POSITIONAL RELATIONSHIP BETWEEN FEATURE POINTS, ETC. |
| (3) | · WRIST POSITION MEASUREMENT PROCESSING BASED ON IMAGE INCLUDING MARKER (CLIENT MAP COORDINATE SYSTEM) |
| (4) | · COORDINATE TRANSFORM PROCESSING OF WRISTS POSITION TO SERVER MAP COORDINATE SYSTEM |
| (5) | · IMAGING PROCESSING OF KNEES AND ANKLES |
| (6) | · IMAGE RECOGNITION PROCESSING OF KNEES AND ANKLES<br>· FEATURE POINT EXTRACTION PROCESSING OF KNEES AND ANKLES |
| (7) | · PROCESSING OF ACQUIRING WRIST ORIENTATION INFORMATION (Yaw, Pitch, AND Roll) |
| (8) | · PROCESSING OF CALCULATING POSITIONS OF KNEES AND ANKLES ON SERVER MAP COORDINATE SYSTEM USING TRIANGULATION |
| (9) | · REFLECTION OF KNEE AND ANKLE POSITIONS ON SERVER MAP COORDINATE SYSTEM TO HUMAN BODY MODEL<br>· HUMAN BODY MODEL RENDERING |

# FIG.73

LIST OF INFORMATION

| | |
|---|---|
| (i) | · IMAGE DATA (DEPTH DATA) INCLUDING MARKER |
| (ii) | · FEATURE POINT OF MARKER |
| (iii) | · THREE-DIMENSIONAL POSITION INFORMATION OF WRISTS ON CLIENT MAP COORDINATE SYSTEM |
| (iv) | · THREE-DIMENSIONAL POSITION INFORMATION OF WRISTS ON SERVER MAP COORDINATE SYSTEM |
| (v) | · IMAGE DATA (DEPTH DATA) OF KNEES AND ANKLES |
| (vi) | · FEATURE POINTS OF KNEES AND ANKLES |
| (vii) | · WRIST ORIENTATION INFORMATION |
| (viii) | · THREE-DIMENSIONAL POSITION INFORMATION OF KNEES AND ANKLES ON SERVER MAP COORDINATE SYSTEM |
| (ix) | · HUMAN BODY MODEL REFLECTING THREE-DIMENSIONAL POSITION INFORMATION OF KNEES AND ANKLES |

## FIG.74

| MEASURE-MENT TARGET | PREPA-RATION PROC-ESSING | MEASUREMENT DEVICE | | | | RELAY APPARATUS | | INFORMATION PROCESSING APPARATUS | |
|---|---|---|---|---|---|---|---|---|---|
| | | SENSOR | IMU | PROCESSING UNIT | OUTPUT DATA | PROCESSING OTHER THAN DATA RELAY | OUTPUT DATA | PROCESSING UNIT | OUTPUT DATA |
| KNEES AND ANKLES | | (1)(5) | (7) | | (i)(v)(vii) | | (i)(v)(vii) | (2) TO (4),(6)(8)(9) | (ix) |
| | | | | | | (2) | (ii)(v)(vii) | (3)(4)(6)(8) | (ix) |
| | | | | | | (2)(3) | (iii)(v)(vii) | (4)(6)(8)(9) | (ix) |
| | | | | | | (2)(3)(4) | (iv)(v)(vii) | (6)(8)(9) | (ix) |
| | | | | | | (2)(3)(4)(6) | (iv)(vi)(vii) | (8)(9) | (ix) |
| | | | | | | (2)(3)(4)(6)(8) | (iv)(viii) | (9) | (ix) |
| | | | | (2) | (ii)(v)(vii) | | (ii)(v)(vii) | (3)(4)(6)(8)(9) | (ix) |
| | | | | | | (3) | (iii)(v)(vii) | (4)(6)(8)(9) | (ix) |
| | | | | | | (3)(4) | (iv)(v)(vii) | (6)(8)(9) | (ix) |
| | | | | | | (3)(4)(6) | (iv)(vi)(vii) | (8)(9) | (ix) |
| | | | | | | (3)(4)(6)(8) | (iv)(viii) | (9) | (ix) |
| | | | | (2)(3) | (iii)(v)(vii) | | (iii)(v)(vii) | (4)(6)(8)(9) | (ix) |
| | | | | | | (4) | (iv)(v)(vii) | (6)(8)(9) | (ix) |
| | | | | | | (4)(6) | (iv)(vi)(vii) | (8)(9) | (ix) |
| | | | | | | (4)(6)(8) | (iv)(viii) | (9) | (ix) |
| | | | | (2)(3)(4) | (iv)(v)(vii) | | (iv)(v)(vii) | (6)(8)(9) | (ix) |
| | | | | | | (6) | (iv)(vi)(vii) | (8)(9) | (ix) |
| | | | | | | (6)(8) | (iv)(viii) | (9) | (ix) |
| | | | | (2)(3)(4)(6) | (iv)(vi)(vii) | | (iv)(vi)(vii) | (8)(9) | (ix) |
| | | | | | | (8) | (iv)(viii) | (9) | (ix) |
| | | | | (2)(3)(4)(6)(8) | (iv)(vi)(vii) | | (iv)(viii) | (9) | (ix) |

EP 4 625 312 A1

# FIG.75

LIST OF PROCESSING

| (1) | ·MARKER IMAGING PROCESSING FOR SELF-POSITION ESTIMATION |
|---|---|
| (2) | ·PROCESSING OF RECOGNIZING MARKER IN IMAGE<br>·FEATURE POINT EXTRACTION PROCESSING ON RECOGNIZED MARKER<br>·PROCESSING OF OBTAINING DIRECTIONS AND POSITIONS OF FEATURE POINTS, MUTUAL POSITIONAL RELATIONSHIP BETWEEN FEATURE POINTS, ETC. |
| (3) | ·WRIST POSITION MEASUREMENT PROCESSING BASED ON IMAGE INCLUDING MARKER (CLIENT MAP COORDINATE SYSTEM) |
| (4) | ·COORDINATE TRANSFORM PROCESSING OF WRISTS POSITION TO SERVER MAP COORDINATE SYSTEM |
| (5) | ·IMAGING PROCESSING OF HEAD AND TRUNK |
| (6) | ·IMAGE RECOGNITION PROCESSING OF HEAD AND TRUNK<br>·FEATURE POINT EXTRACTION PROCESSING OF HEAD AND TRUNK |
| (7) | ·PROCESSING OF ACQUIRING WRIST ORIENTATION INFORMATION (Yaw, Pitch, AND Roll) |
| (8) | ·PROCESSING OF CALCULATING POSITIONS OF HEAD AND TRUNK ON SERVER MAP COORDINATE SYSTEM USING TRIANGULATION |
| (9) | ·REFLECTION OF HEAD AND TRUNK POSITIONS ON SERVER MAP COORDINATE SYSTEM TO HUMAN BODY MODEL<br>·HUMAN BODY MODEL RENDERING |

# FIG.76

LIST OF INFORMATION

| (i) | ·IMAGE DATA (DEPTH DATA) INCLUDING MARKER |
|---|---|
| (ii) | ·FEATURE POINT OF MARKER |
| (iii) | ·THREE-DIMENSIONAL POSITION INFORMATION OF WRISTS ON CLIENT MAP COORDINATE SYSTEM |
| (iv) | ·THREE-DIMENSIONAL POSITION INFORMATION OF WRISTS ON SERVER MAP COORDINATE SYSTEM |
| (v) | ·IMAGE DATA (DEPTH DATA) OF HEAD AND TRUNK |
| (vi) | ·FEATURE POINTS OF HEAD AND TRUNK |
| (vii) | ·WRIST ORIENTATION INFORMATION |
| (viii) | ·THREE-DIMENSIONAL POSITION INFORMATION OF HEAD AND TRUNK ON SERVER MAP COORDINATE SYSTEM |
| (ix) | ·HUMAN BODY MODEL REFLECTING THREE-DIMENSIONAL POSITION INFORMATION OF HEAD AND TRUNK |

# FIG.77

| MEASURE-MENT TARGET | PREPA-RATION PROC-ESSING | MEASUREMENT DEVICE | | | | RELAY APPARATUS | | INFORMATION PROCESSING APPARATUS | |
|---|---|---|---|---|---|---|---|---|---|
| | | SENSOR | IMU | PROCESSING UNIT | OUTPUT DATA | PROCESSING OTHER THAN DATA RELAY | OUTPUT DATA | PROCESSING UNIT | OUTPUT DATA |
| HEAD AND TRUNK | | (1)(5) | (7) | | (i)(v)(vii) | | (i)(v)(vii) | (2) TO (4),(6)(8)(9) | (ix) |
| | | | | | | (2) | (ii)(v)(vii) | (3)(4)(6)(8)(9) | (ix) |
| | | | | | | (2)(3) | (iii)(v)(vii) | (4)(6)(8)(9) | (ix) |
| | | | | | | (2)(3)(4) | (iv)(v)(vii) | (6)(8)(9) | (ix) |
| | | | | | | (2)(3)(4)(6) | (iv)(vi)(vii) | (8)(9) | (ix) |
| | | | | | | (2)(3)(4)(6)(8) | (iv)(viii) | (9) | (ix) |
| | | | | (2) | (ii)(v)(vii) | | (ii)(v)(vii) | (3)(4)(6)(8)(9) | (ix) |
| | | | | | | (3) | (iii)(v)(vii) | (4)(6)(8)(9) | (ix) |
| | | | | | | (3)(4) | (iv)(v)(vii) | (6)(8)(9) | (ix) |
| | | | | | | (3)(4)(6) | (iv)(vi)(vii) | (8)(9) | (ix) |
| | | | | | | (3)(4)(6)(8) | (iv)(viii) | (9) | (ix) |
| | | | | (2)(3) | (iii)(v)(vii) | | (iii)(v)(vii) | (4)(6)(8)(9) | (ix) |
| | | | | | | (4) | (iv)(v)(vii) | (6)(8)(9) | (ix) |
| | | | | | | (4)(6) | (iv)(vi)(vii) | (8)(9) | (ix) |
| | | | | | | (4)(6)(8) | (iv)(viii) | (9) | (ix) |
| | | | | (2)(3)(4) | (iv)(v)(vii) | | (iv)(v)(vii) | (6)(8)(9) | (ix) |
| | | | | | | (6) | (iv)(vi)(vii) | (8)(9) | (ix) |
| | | | | | | (6)(8) | (iv)(viii) | (9) | (ix) |
| | | | | (2)(3)(4)(6) | (iv)(vi)(vii) | | (iv)(vi)(vii) | (8)(9) | (ix) |
| | | | | | | (8) | (iv)(viii) | (9) | (ix) |
| | | | | (2)(3)(4)(6)(8) | (iv)(vi)(vii) | | (iv)(viii) | (9) | (ix) |

EP 4 625 312 A1

# FIG.78

# FIG.79

# FIG.80

# FIG.81

# FIG.82

# FIG.83

3A

310HD

10AL

10AR

U

# FIG.84

(A)

111　　111　　111

111〜　　　　　　　310H

111〜　　　　　　111

111　111　111

310H

310H

111〜　　　　〜111　111〜　　　　〜111

111　111　111　　　111　111　111

(C)　　　　　　　　　　(B)

# FIG.85

# FIG.86

# FIG.87

# FIG.88

# FIG.89

# FIG.90

# FIG.91

310H

U

10AR

10AL

# FIG.92

LIST OF PROCESSING

| (1) | ·IMAGING PROCESSING OF WRISTS |
|---|---|
| (2) | ·IMAGE RECOGNITION PROCESSING OF WRISTS<br>·FEATURE POINT EXTRACTION PROCESSING ON RECOGNIZED WRISTS |
| (3) | ·WRIST POSITION MEASUREMENT PROCESSING<br>(SERVER MAP COORDINATE SYSTEM) |
| (4) | ·REFLECTION OF WRIST POSITION IN SERVER MAP COORDINATE<br>SYSTEM TO HUMAN BODY MODEL<br>·HUMAN BODY MODEL RENDERING |

# FIG.93

LIST OF INFORMATION

| (i) | ·IMAGE DATA (DEPTH DATA) OF WRISTS |
|---|---|
| (ii) | ·FEATURE POINTS OF WRISTS |
| (iii) | ·THREE-DIMENSIONAL POSITION INFORMATION OF<br>WRISTS ON SERVER MAP COORDINATE SYSTEM |
| (iv) | ·HUMAN BODY MODEL REFLECTING THREE-DIMENSIONAL<br>POSITION INFORMATION OF WRISTS |

# FIG.94

| MEAS-URE-MENT TARGET | PREPA-RATION PROC-ESSING | REFERENCE MEASUREMENT DEVICE | | | RELAY APPARATUS | | INFORMATION PROCESSING APPARATUS | |
|---|---|---|---|---|---|---|---|---|
| | | SEN-SOR | PROCESS-ING UNIT | OUT-PUT DATA | PROCESS-ING OTHER THAN DATA RELAY | OUT-PUT DATA | PROCESS-ING UNIT | OUT-PUT DATA |
| WRISTS | | (1) | | (i) | | (i) | (2)(3)(4) | (iv) |
| | | | | | (2) | (ii) | (3)(4) | (iv) |
| | | | | | (2)(3) | (iii) | (4) | (iv) |
| | | | (2) | (ii) | | (ii) | (3)(4) | (iv) |
| | | | | | (3) | (iii) | (4) | (iv) |
| | | | (2),(3) | (iii) | | (iii) | (4) | (iv) |

# FIG.95

LIST OF PROCESSING

| (1) | ·IMAGING PROCESSING OF WRISTS |
|---|---|
| (2) | ·IMAGE RECOGNITION PROCESSING OF WRISTS<br>·FEATURE POINT EXTRACTION PROCESSING ON RECOGNIZED WRISTS |
| (3) | ·WRIST POSITION MEASUREMENT PROCESSING<br>(SERVER MAP COORDINATE SYSTEM) |
| (4) | ·PROCESSING OF ACQUIRING ULNA ORIENTATION INFORMATION<br>(Yaw, Pitch, AND Roll) |
| (5) | ·ELBOW AND SHOULDER POSITION MEASUREMENT PROCESSING<br>(SERVER MAP COORDINATE SYSTEM) |
| (6) | ·REFLECTION OF ELBOW AND SHOULDER POSITIONS ON SERVER MAP<br>COORDINATE SYSTEM TO HUMAN BODY MODEL<br>·HUMAN BODY MODEL RENDERING |

# FIG.96

LIST OF INFORMATION

| (i) | ·IMAGE DATA (DEPTH DATA) OF WRISTS |
|---|---|
| (ii) | ·FEATURE POINTS OF WRISTS |
| (iii) | ·THREE-DIMENSIONAL POSITION INFORMATION OF<br>WRISTS ON SERVER MAP COORDINATE SYSTEM |
| (iv) | ·ULNA ORIENTATION INFORMATION |
| (v) | ·THREE-DIMENSIONAL POSITION INFORMATION OF<br>ELBOWS AND SHOULDERS ON SERVER MAP COORDINATE<br>SYSTEM |
| (vi) | ·HUMAN BODY MODEL REFLECTING THREE-DIMENSIONAL<br>POSITION INFORMATION OF ELBOWS AND SHOULDERS |

EP 4 625 312 A1

# FIG.97

| MEASURE-MENT TARGET | PREPARATION PROCESSING | REFERENCE MEASUREMENT DEVICE | MEASUREMENT DEVICE | | OUTPUT DATA FROM REFERENCE/ MEASUREMENT DEVICE | RELAY APPARATUS | | INFORMATION PROCESSING APPARATUS | |
|---|---|---|---|---|---|---|---|---|---|
| | | PROCESSING UNIT | IMU | PROCESS-ING UNIT | | PROCESSING OTHER THAN DATA RELAY | OUTPUT DATA | PROCESSING UNIT | OUTPUT DATA |
| ELBOWS AND SHOULDERS | SPECIFY LENGTH OF ULNA AND LENGTH OF HUMERUS | (1) | (4) | | (i)(iv) | | (i)(iv) | (2)(3)(5)(6) | (vi) |
| | | | | | | (2) | (ii)(iv) | (3)(5)(6) | (vi) |
| | | | | | | (2)(3) | (iii)(iv) | (5)(6) | (vi) |
| | | | | | | (2)(3)(5) | (v) | (6) | (vi) |
| | | | | (2) | (ii)(iv) | | (ii)(iv) | (3)(5)(6) | (vi) |
| | | | | | | (3) | (iii)(iv) | (5)(6) | (vi) |
| | | | | | | (3)(5) | (v) | (6) | (vi) |
| | | | | (2)(3) | (iii)(iv) | | (iii)(iv) | (5)(6) | (vi) |
| | | | | | | (5) | (v) | (6) | (vi) |
| | | (1)(2) | | | (ii)(iv) | | (ii)(iv) | (3)(5)(6) | (vi) |
| | | | | | | (3) | (iii)(iv) | (5)(6) | (vi) |
| | | | | | | (3)(5) | (v) | (6) | (vi) |
| | | | | (2) | (iii)(iv) | | (iii)(iv) | (5)(6) | (vi) |
| | | | | | | (5) | (v) | (6) | (vi) |
| | | (1)(2)(3) | | | (ii)(iv) | (5) | (v) | (6) | (vi) |

# FIG.98

LIST OF PROCESSING

| (1) | ·IMAGING PROCESSING OF WRISTS |
|-----|-------------------------------|
| (2) | ·IMAGE RECOGNITION PROCESSING OF WRISTS<br>·FEATURE POINT EXTRACTION PROCESSING ON RECOGNIZED WRISTS |
| (3) | ·WRIST POSITION MEASUREMENT PROCESSING<br>(SERVER MAP COORDINATE SYSTEM) |
| (4) | ·IMAGING PROCESSING OF KNEES, ANKLES, AND TRUNK |
| (5) | ·IMAGE RECOGNITION PROCESSING OF KNEES, ANKLES, AND TRUNK<br>·FEATURE POINT EXTRACTION PROCESSING OF KNEES, ANKLES, AND TRUNK |
| (6) | ·PROCESSING OF ACQUIRING WRIST ORIENTATION INFORMATION<br>(Yaw, Pitch, AND Roll) |
| (7) | ·PROCESSING OF CALCULATING POSITIONS OF KNEES, ANKLES, AND TRUNK ON SERVER MAP COORDINATE SYSTEM USING TRIANGULATION |
| (8) | ·REFLECTION OF KNEE, ANKLE, AND TRUNK POSITIONS ON SERVER MAP COORDINATE SYSTEM TO HUMAN BODY MODEL<br>·HUMAN BODY MODEL RENDERING |

# FIG.99

LIST OF INFORMATION

| (i) | ·IMAGE DATA (DEPTH DATA) OF WRISTS |
|-----|-------------------------------------|
| (ii) | ·FEATURE POINTS OF WRISTS |
| (iii) | ·THREE-DIMENSIONAL POSITION INFORMATION OF WRISTS ON SERVER MAP COORDINATE SYSTEM |
| (iv) | ·IMAGE DATA (DEPTH DATA) OF KNEES, ANKLES, AND TRUNK |
| (v) | ·FEATURE POINTS OF KNEES, ANKLES, AND TRUNK |
| (vi) | ·WRIST ORIENTATION INFORMATION |
| (vii) | ·THREE-DIMENSIONAL POSITION INFORMATION OF KNEES, ANKLES, AND TRUNK ON SERVER MAP COORDINATE SYSTEM |
| (viii) | ·HUMAN BODY MODEL REFLECTING THREE-DIMENSIONAL POSITION INFORMATION OF KNEES, ANKLES, AND TRUNK |

# FIG.100

| MEASURE-MENT TARGET | PREPA-RATION PROC-ESSING | REFERENCE MEASUREMENT DEVICE PROCESSING UNIT | MEASUREMENT DEVICE SEN-SOR | IMU | PROCESS-ING UNIT | OUTPUT DATA FROM REFERENCE/ MEASUREMENT DEVICE | RELAY APPARATUS PROCESSING OTHER THAN DATA RELAY | OUTPUT DATA | INFORMATION PROCESSING APPARATUS PROCESSING UNIT | OUTPUT DATA |
|---|---|---|---|---|---|---|---|---|---|---|
| KNEES, ANKLES, AND TRUNK | | (1) | (4) | (6) | | (i)(iv)(vi) | | (i)(iv)(vi) | (2)(3)(5)(7)(8) | (viii) |
| | | | | | | | (2) | (ii)(iv)(vi) | (3)(5)(7)(8) | (viii) |
| | | | | | | | (2)(3) | (iii)(iv)(vi) | (5)(7)(8) | (viii) |
| | | | | | | | (2)(3)(5) | (iii)(v)(vi) | (7)(8) | (viii) |
| | | | | | | | (2)(3)(5)(7) | (vii) | (8) | (viii) |
| | | | | | (5) | (i)(v)(vi) | | (i)(v)(vi) | (2)(3)(7)(8) | (viii) |
| | | | | | | | (2) | (ii)(v)(vi) | (3)(7)(8) | (viii) |
| | | | | | | | (2)(3) | (iii)(v)(vi) | (7)(8) | (viii) |
| | | | | | | | (2)(3)(7) | (vii) | (8) | (viii) |
| | | (1)(2) | | | | (ii)(iv)(vi) | | (ii)(iv)(vi) | (3)(5)(7)(8) | (viii) |
| | | | | | | | (3) | (iii)(iv)(vi) | (5)(7)(8) | (viii) |
| | | | | | | | (3)(5) | (iii)(v)(vi) | (7)(8) | (viii) |
| | | | | | | | (3)(5)(7) | (vii) | (8) | (viii) |
| | | | | | (5) | (ii)(v)(vi) | | (ii)(v)(vi) | (3)(7)(8) | (viii) |
| | | | | | | | (3) | (iii)(v)(vi) | (7)(8) | (viii) |
| | | | | | | | (3)(7) | (vii) | (8) | (viii) |
| | | (1)(2)(3) | | | | (iii)(iv)(vi) | | (iii)(iv)(vi) | (5)(7)(8) | (viii) |
| | | | | | | | (5) | (iii)(v)(vi) | (7)(8) | (viii) |
| | | | | | | | (5)(7) | (vii) | (8) | (viii) |
| | | | | | (5) | (iii)(iv)(vi) | | (iii)(v)(vi) | (7)(8) | (viii) |
| | | | | | | | (7) | (vii) | (8) | (viii) |

# FIG.101

# FIG.102

```
              ┌─────────────┐
              │    START    │
              └─────────────┘
                     │
                     ▼
      ┌──────────────────────────────────┐
      │  COORDINATE SYSTEM INTEGRATION    │ ～S411
      │           PROCESSING              │
      └──────────────────────────────────┘
                     │
                     ▼
      ┌──────────────────────────────────┐
      │      IMAGE USER APPEARANCE        │ ～S412
      └──────────────────────────────────┘
                     │
                     ▼
      ┌──────────────────────────────────┐
      │      CREATE 3D MODEL OF USER      │ ～S413
      └──────────────────────────────────┘
                     │
                     ▼
      ┌──────────────────────────────────┐
      │  MEASURE PHYSICAL ACTIVITY POSTURE│ ～S414
      │             OF USER               │
      └──────────────────────────────────┘
                     │
                     ▼
      ┌──────────────────────────────────┐
      │    INPUT MEASUREMENT RESULT TO    │ ～S415
      │ INFORMATION PROCESSING APPARATUS  │
      └──────────────────────────────────┘
                     │
                     ▼
      ┌──────────────────────────────────┐
      │  ANALYZE PHYSICAL ACTIVITY POSTURE│ ～S416
      └──────────────────────────────────┘
                     │
                     ▼
      ┌──────────────────────────────────┐
      │     CONTROL 3D MODEL OF USER IN   │ ～S417
      │ ACCORDANCE WITH PHYSICAL ACTIVITY │
      │             POSTURE               │
      └──────────────────────────────────┘
                     │
                     ▼
      ┌──────────────────────────────────┐
      │   DISPLAY, TO USER, 3D MODEL THAT │ ～S418
      │ MOVES IN ACCORDANCE WITH PHYSICAL │
      │         ACTIVITY POSTURE          │
      └──────────────────────────────────┘
                     │
                     ▼
              ┌─────────────┐
              │     END     │
              └─────────────┘
```

# FIG.103

START

INPUT IMAGE DATA FROM EACH MEASUREMENT DEVICE — S421

EXECUTE THREE-DIMENSIONAL IMAGE PROCESSING ON EACH IMAGE DATA — S422

CREATE THREE-DIMENSIONAL POINT CLOUD DATA OF WHOLE BODY OF USER — S423

RECOGNIZE KEYPOINT IN THREE-DIMENSIONAL POINT CLOUD DATA — S424

RECOGNIZE POSTURE/MOTION OF USER — S425

REFLECT RECOGNIZED POSTURE/MOTION TO 3D MODEL — S426

NO ← END OPERATION? — S427

YES

END

# FIG.104

START

INPUT IMAGE DATA FROM EACH
MEASUREMENT DEVICE ⌇S431

RECOGNIZE KEYPOINTS OF JOINTS ⌇S432

EXECUTE THREE-DIMENSIONAL IMAGE
PROCESSING ON IMAGE DATA OF JOINTS
INCLUDING KEYPOINTS ⌇S433

CREATE THREE-DIMENSIONAL POINT
CLOUD DATA OF JOINTS ⌇S434

RECOGNIZE POSTURE/MOTION OF USER ⌇S435

REFLECT RECOGNIZED POSTURE/MOTION
TO 3D MODEL ⌇S436

NO      END OPERATION? ⌇S437

YES

END

# FIG.105

## INTERNATIONAL SEARCH REPORT

| International application No. |
|---|
| **PCT/JP2023/040083** |

| A. | CLASSIFICATION OF SUBJECT MATTER |
|---|---|

*G06T 7/00*(2017.01)i
FI: G06T7/00 660Z

According to International Patent Classification (IPC) or to both national classification and IPC

| B. | FIELDS SEARCHED |
|---|---|

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-52758 A (HONDA MOTOR CO LTD) 02 April 2020 (2020-04-02) paragraphs [0017]-[0043] | 1-2, 4, 8-12, 14, 18-20 |
| A | | 3, 5-7, 13, 15-17 |
| A | JP 2016-99982 A (NIPPON TELEGRAPH & TELEPHONE) 30 May 2016 (2016-05-30) paragraphs [0024]-[0044] | 1-20 |
| A | WO 2019/203188 A1 (SONY GROUP CORP) 24 October 2019 (2019-10-24) paragraphs [0015]-[0187] | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/040083**

| Patent document cited in search report | | | Publication date (day/month/year) | Patent family member(s) | Publication date (day/month/year) |
|---|---|---|---|---|---|
| JP | 2020-52758 | A | 02 April 2020 | (Family: none) | |
| JP | 2016-99982 | A | 30 May 2016 | (Family: none) | |
| WO | 2019/203188 | A1 | 24 October 2019 | US 2021/0141443 A1 paragraphs [0062]-[0234] | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HELGE RHODIN et al.** EgoCap: Egocentric Marker-less Motion Capture with Two Fisheye Cameras, (US). *ACM Transactions on Graphics*, 2016, vol. 35 (6)